(19) Europäisches Patentamt / European Patent Office / Office européen des brevets

(11) **EP 4 105 701 B1**

(12) **EUROPEAN PATENT SPECIFICATION**

(45) Date of publication and mention of the grant of the patent:
**28.05.2025 Bulletin 2025/22**

(21) Application number: **21198017.2**

(22) Date of filing: **21.09.2021**

(51) International Patent Classification (IPC):
$G02B\ 9/64$ $^{(2006.01)}$    $G02B\ 13/00$ $^{(2006.01)}$

(52) Cooperative Patent Classification (CPC):
**G02B 9/64; G02B 13/0045**

(54) **OPTICAL IMAGING CAPTURING LENS ASSEMBLY, IMAGE CAPTURING UNIT AND ELECTRONIC DEVICE**

LINSENANORDNUNG ZUR ERFASSUNG VON OPTISCHER BILDGEBUNG, BILDERFASSUNGSEINHEIT UND ELEKTRONISCHE VORRICHTUNG

ENSEMBLE LENTILLE DE CAPTURE D'IMAGERIE OPTIQUE, UNITÉ DE CAPTURE D'IMAGES ET DISPOSITIF ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.06.2021 TW 110122454**

(43) Date of publication of application:
**21.12.2022 Bulletin 2022/51**

(60) Divisional application:
**25166556.8 / 4 553 558**

(73) Proprietor: LARGAN Precision Co., Ltd.
**Taichung City (TW)**

(72) Inventor: **KUO, Tzu-Chieh**
**Taichung City (TW)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
US-A1- 2019 271 831    US-A1- 2020 012 078
US-A1- 2020 209 554    US-A1- 2021 157 092

- "Handbook of optical systems, Aberration theory and correction of optical systems, Chapter 31: Correction of Aberrations ED - Gross H", 1 January 2007, HANDBOOK OF OPTICAL SYSTEMS, ABERRATION THEORY AND CORRECTION OF OPTICAL SYSTEMS, WILEY-VCH, WEINHEIM, DE, PAGE(S) 215 - 221, 225, ISBN: 978-3-527-40379-0, XP002719371
- "Handbook of optical systems, Aberration theory and correction of optical systems", 1 January 2007, WILEY-VCH, Weinheim, DE, ISBN: 978-3-527-40379-0, article HERBERT GROSS ET AL: "Handbook of Optical Systems, Vol.3: Aberration Theory and Correction of Optical Systems", pages: 377 - 379, XP055258161

**Description**

**BACKGROUND**

Technical Field

The present disclosure relates to an optical image capturing lens assembly, an image capturing unit and an electronic device, more particularly to an optical image capturing lens assembly and an image capturing unit applicable to an electronic device.

Description of Related Art

With the development of semiconductor manufacturing technology, the performance of image sensors has improved, and the pixel size thereof has been scaled down. Therefore, featuring high image quality becomes one of the indispensable features of an optical system nowadays.

Furthermore, due to the rapid changes in technology, electronic devices equipped with optical systems are trending towards multi-functionality for various applications, and therefore the functionality requirements for the optical systems have been increasing. However, it is difficult for a conventional optical system to obtain a balance among the requirements such as high image quality, low sensitivity, a proper aperture size, miniaturization and a desirable field of view.

Document US 2019/0271831 A1 discloses an optical photographing lens assembly including seven lens elements, which are, in order from an object side to an image side, a first lens element, a second lens element, a third lens element, a fourth lens element, a fifth lens element, a sixth lens element and a seventh lens element.

**SUMMARY**

The invention is defined in the claims. According to one aspect of the present disclosure, an optical image capturing lens assembly includes eight lens elements. The eight lens elements are, in order from an object side to an image side along an optical path, a first lens element, a second lens element, a third lens element, a fourth lens element, a fifth lens element, a sixth lens element, a seventh lens element and an eighth lens element. Each of the eight lens elements has an object-side surface facing toward the object side and an image-side surface facing toward the image side.

The first lens element has negative refractive power. The second lens element has positive refractive power, and the object-side surface of the second lens element is convex in a paraxial region thereof. The sixth lens element has negative refractive power. The image-side surface of the eighth lens element is concave in a paraxial region thereof. At least one of the object-side surface and the image-side surface of at least one lens element of the optical imaging capturing lens assembly has at least one inflection point in an off-axis region thereof.

When an Abbe number of the second lens element is V2, an Abbe number of the sixth lens element is V6, an Abbe number of the eighth lens element is V8, a curvature radius of the image-side surface of the sixth lens element is R12, and a focal length of the optical imaging capturing lens assembly is f, the following conditions are satisfied:

$$30.0 < V2+V6+V8 < 85.0;$$

and

$$0 < |R12/f| < 3.0.$$

According to one aspect of the present disclosure not part of the claimed invention, an optical imaging capturing lens assembly includes eight lens elements. The eight lens elements are, in order from an object side to an image side along an optical path, a first lens element, a second lens element, a third lens element, a fourth lens element, a fifth lens element, a sixth lens element, a seventh lens element and an eighth lens element. Each of the eight lens elements has an object-side surface facing toward the object side and an image-side surface facing toward the image side.

The first lens element has negative refractive power. The object-side surface of the second lens element is convex in a paraxial region thereof. The sixth lens element has negative refractive power. The image-side surface of the eighth lens element is concave in a paraxial region thereof. At least one of the object-side surface and the image-side surface of at least one lens element of the optical imaging capturing lens assembly has at least one inflection point in an off-axis region thereof.

When an Abbe number of the second lens element is V2, an Abbe number of the sixth lens element is V6, an Abbe number of the eighth lens element is V8, a central thickness of the second lens element is CT2, an axial distance between the third lens element and the fourth lens element is T34, the following condition is satisfied:

$$30.0 < V2+V6+V8 < 85.0;$$

and

$$2.7 < CT2/T34 < 50.$$

According to one aspect of the present disclosure not part of the claimed invention, an optical imaging capturing lens assembly includes eight lens elements. The eight lens elements are, in order from an object side to an image side along an optical path, a first lens element, a second lens element, a third lens element, a fourth lens element, a fifth lens element, a sixth lens element, a seventh lens element and an eighth lens element. Each of the eight lens elements has an object-side surface facing toward the object side and an image-side surface facing toward the image side.

The second lens element has positive refractive power. The eighth lens element has negative refractive power, the object-side surface of the eighth lens element is convex in a paraxial region thereof, and the image-side surface of the eighth lens element is concave in a paraxial region thereof. At least one of the object-side surface and the image-side surface of at least one lens element of the optical imaging capturing lens assembly has at least one inflection point in an off-axis region thereof.

When an Abbe number of the second lens element is V2, an Abbe number of the sixth lens element is V6, an Abbe number of the eighth lens element is V8, an axial distance between the first lens element and the second lens element is T12, an axial distance between the sixth lens element and the seventh lens element is T67, an axial distance between the seventh lens element and the eighth lens element is T78, a central thickness of the sixth lens element is CT6, a central thickness of the eighth lens element is CT8, the following condition is satisfied:

$$20.0 < V2+V6+V8 < 90.0;$$

$$1.0 < T12/(T67+T78);$$

and

$$0 < CT8/CT6 < 2.0.$$

According to another aspect of the present disclosure, an image capturing unit includes one of the aforementioned optical imaging capturing lens assemblies and an image sensor, wherein the image sensor is disposed on an image surface of the optical imaging capturing lens assembly.

According to another aspect of the present disclosure, an electronic device includes the aforementioned image capturing unit.

**BRIEF DESCRIPTION OF THE DRAWINGS**

The disclosure can be better understood by reading the following detailed description of the embodiments, with reference made to the accompanying drawings as follows:

Fig. 1 is a schematic view of an image capturing unit according to the 1st embodiment of the present disclosure;
Fig. 2 shows spherical aberration curves, astigmatic field curves and a distortion curve of the image capturing unit according to the 1st embodiment;
Fig. 3 is a schematic view of an image capturing unit according to the 2nd embodiment of the present disclosure;
Fig. 4 shows spherical aberration curves, astigmatic field curves and a distortion curve of the image capturing unit according to the 2nd embodiment;
Fig. 5 is a schematic view of an image capturing unit according to the 3rd embodiment of the present disclosure;
Fig. 6 shows spherical aberration curves, astigmatic field curves and a distortion curve of the image capturing unit according to the 3rd embodiment;
Fig. 7 is a schematic view of an image capturing unit according to the 4th embodiment of the present disclosure;
Fig. 8 shows spherical aberration curves, astigmatic field curves and a distortion curve of the image capturing unit according to the 4th embodiment;

Fig. 9 is a schematic view of an image capturing unit according to the 5th embodiment of the present disclosure;

Fig. 10 shows spherical aberration curves, astigmatic field curves and a distortion curve of the image capturing unit according to the 5th embodiment;

Fig. 11 is a schematic view of an image capturing unit according to the 6th embodiment of the present disclosure;

Fig. 12 shows spherical aberration curves, astigmatic field curves and a distortion curve of the image capturing unit according to the 6th embodiment;

Fig. 13 is a schematic view of an image capturing unit according to the 7th embodiment of the present disclosure;

Fig. 14 shows spherical aberration curves, astigmatic field curves and a distortion curve of the image capturing unit according to the 7th embodiment;

Fig. 15 is a schematic view of an image capturing unit according to the 8th embodiment of the present disclosure;

Fig. 16 shows spherical aberration curves, astigmatic field curves and a distortion curve of the image capturing unit according to the 8th embodiment;

Fig. 17 is a perspective view of an image capturing unit according to the 9th embodiment of the present disclosure;

Fig. 18 is one perspective view of an electronic device according to the 10th embodiment of the present disclosure;

Fig. 19 is another perspective view of the electronic device in Fig. 18;

Fig. 20 is a block diagram of the electronic device in Fig. 18;

Fig. 21 is one perspective view of an electronic device according to the 11th embodiment of the present disclosure;

Fig. 22 is one perspective view of an electronic device according to the 12th embodiment of the present disclosure;

Fig. 23 shows a schematic view of Y11, Y81, Y82, Yc81, Yc82 and inflection points and critical points of lens elements according to the 1st embodiment of the present disclosure;

Fig. 24 shows a schematic view of a configuration of a light-folding element in an optical imaging capturing lens assembly according to one embodiment of the present disclosure;

Fig. 25 shows a schematic view of another configuration of a light-folding element in an optical imaging capturing lens assembly according to one embodiment of the present disclosure; and

Fig. 26 shows a schematic view of a configuration of two light-folding elements in an optical imaging capturing lens assembly according to one embodiment of the present disclosure.

## DETAILED DESCRIPTION

An optical image capturing lens assembly includes eight lens elements. The eight lens elements are, in order from an object side to an image side along an optical path, a first lens element, a second lens element, a third lens element, a fourth lens element, a fifth lens element, a sixth lens element, a seventh lens element and an eighth lens element. Each of the eight lens elements has an object-side surface facing toward the object side and an image-side surface facing toward the image side.

The first lens element has negative refractive power. Therefore, it is favorable for adjusting the refractive power configuration of the optical imaging capturing lens assembly so as to increase the field of view thereof. The image-side surface of the first lens element is concave in a paraxial region thereof. Therefore, it is favorable for adjusting the lens shape and the refractive power of the first lens element so as to increase the field of view thereof.

The second lens element has positive refractive power. Therefore, it is favorable for miniaturization at the object side and increasing the field of view of the optical imaging capturing lens assembly. The object-side surface of the second lens element is convex in a paraxial region thereof. Therefore, it is favorable for the second lens element collaborating with the first lens element so as to reduce surface reflection.

The sixth lens element has negative refractive power. Therefore, it is favorable for balancing the refractive power at the image side of the optical imaging capturing lens assembly so as to correct aberrations such as spherical aberration.

The seventh lens element has positive refractive power. Therefore, it is favorable for reducing the size at the image side of the optical imaging capturing lens assembly.

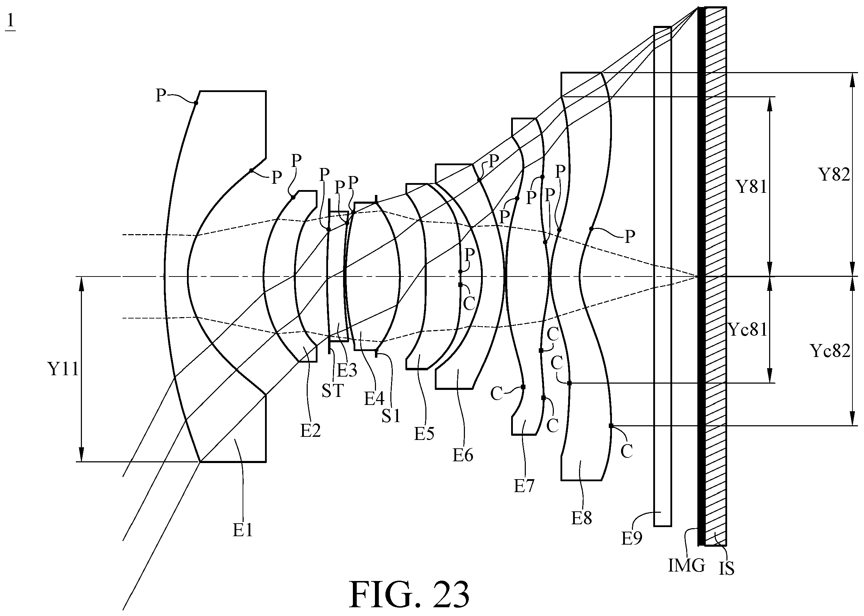

The eighth lens element has negative refractive power. Therefore, it is favorable for the eighth lens element collaborating with the seventh lens element so as to obtain a balance between the size and image quality. The object-side surface of the eighth lens element is convex in a paraxial region thereof. Therefore, it is favorable for adjusting the surface shape of the eighth lens element so as to correct off-axis aberrations. The object-side surface of the eighth lens element can have at least one critical point in an off-axis region thereof. Therefore, it is favorable for adjusting the lens shape of the eighth lens element so as to correct off-axis aberrations. The image-side surface of the eighth lens element is concave in a paraxial region thereof. Therefore, it is favorable for adjusting the lens shape of the eighth lens element so as to correct off-axis aberrations and for adjusting the back focal length so as to miniaturize the optical imaging capturing lens assembly. The image-side surface of the eighth lens element can have at least one critical point in an off-axis region thereof. Therefore, it is favorable for adjusting the incident angle on the image surface so as to increase illuminance and image quality at the image surface periphery. Moreover, when a vertical distance between a critical point on the object-side surface of the eighth lens element and an optical axis is Yc81, and a maximum effective radius of the object-side surface of the eighth lens element is Y81, at least one critical point on the object-side surface of the eighth lens element in the off-axis region can satisfy the following condition: 0.20 < Yc81/Y81 < 0.90. Therefore, it is favorable for further adjusting the lens shape of the eighth lens element so as to correct aberrations. Moreover, when a vertical distance between a critical point on the image-side surface of the eighth lens element and the optical axis is Yc82, and a maximum effective radius of the image-side surface of the eighth lens element is Y82, at least one critical point on the image-side surface of the eighth lens element in the off-axis region can satisfy the following condition: 0.30 < Yc82/Y82 < 0.90. Therefore, it is favorable for increase image quality. Please refer to Fig. 23, which shows a schematic view of Y81, Y82, Yc81, Yc82 and critical points C on the object-side surface and the image-side surface of the eighth lens element E8 according to the 1st embodiment of the present disclosure. The critical points on the eighth lens element in Fig. 23 are only exemplary. Each of lens elements in various embodiments of the present disclosure may also have one or more non-axial critical points.

According to the present disclosure, at least one of the object-side surface and the image-side surface of at least one lens element of the optical imaging capturing lens assembly has at least one inflection point in an off-axis region thereof. Therefore, it is favorable for increasing the variety of the lens surface so as to correct aberrations and miniaturize the lens element. Moreover, at least one of the object-side surface and the image-side surface of each of at least two lens elements of the optical imaging capturing lens assembly has at least one inflection point in an off-axis region thereof. Please refer to Fig. 23, which shows a schematic view of inflection points P on the lens elements according to the 1st embodiment of the present disclosure.

When an Abbe number of the second lens element is V2, an Abbe number of the sixth lens element is V6, and an Abbe number of the eighth lens element is V8, the following condition is satisfied: 20.0 < V2+V6+V8 < 90.0. Therefore, it is favorable for adjusting the material with a proper configuration so as to correct aberrations such as chromatic aberration. Moreover, the following condition is satisfied:
30.0 < V2+V6+V8 < 85.0. Moreover, the following condition can also be satisfied: 40.0 < V2+V6+V8 < 80.0.

When a curvature radius of the image-side surface of the sixth lens element is R12, and a focal length of the optical imaging capturing lens assembly is f, the following condition is satisfied: 0 < |R12/f| < 3.0. Therefore, it is favorable for adjusting the lens shape and the refractive power of the sixth lens element so as to correct aberrations. Moreover, the following condition can also be satisfied: 0 < |R12/f| < 2.5. Moreover, the following condition can also be satisfied: 0.50 < |R12/f| < 2.0. Moreover, the following condition can also be satisfied: 1.0 < |R12/f| < 1.5.

When a central thickness of the second lens element is CT2, and an axial distance between the third lens element and the fourth lens element is T34, the following condition is satisfied: 2.7 < CT2/T34 < 50. Therefore, it is favorable for adjusting the lens configuration so as to increase the field of view and miniaturize the optical imaging capturing lens assembly at the object side. Moreover, the following condition can also be satisfied: 3.0 < CT2/T34 < 35.

When an axial distance between the first lens element and the second lens element is T12, an axial distance between the sixth lens element and the seventh lens element is T67, and an axial distance between the seventh lens element and the eighth lens element is T78, the following condition can be satisfied: 1.0 < T12/(T67+T78). Therefore, it is favorable for adjusting the lens configuration so as to obtain a balance among the field of view, the size configuration and image quality. Moreover, the following condition can also be satisfied: 1.5 < T12/(T67+T78) < 50. Moreover, the following condition can also be satisfied: 2.0 < T12/(T67+T78) < 35.

When a central thickness of the sixth lens element is CT6, and a central thickness of the eighth lens element is CT8, the following condition can be satisfied: 0 < CT8/CT6 < 2.0. Therefore, it is favorable for the lens elements at the image side of the optical imaging capturing lens assembly to collaborate with each other so as to obtain a balance between the size at the image side and the size of the image surface. Moreover, the following condition can also be satisfied: 0.50 < CT8/CT6 < 1.7. Moreover, the following condition can also be satisfied: 0.85 < CT8/CT6 < 1.5.

When a central thickness of the first lens element is CT1, and a central thickness of the third lens element is CT3, the following condition can be satisfied: 0.55 < CT1/CT3 < 1.8. Therefore, it is favorable for adjusting the size distribution at the object side of the optical imaging capturing lens assembly and increasing the field of view. Moreover, the following condition can also be satisfied: 0.65 < CT1/CT3 < 1.6.

When a curvature radius of the object-side surface of the sixth lens element is R11, and the focal length of the optical imaging capturing lens assembly is f, the following condition can be satisfied: -0.90 < R11/f < 4.3. Therefore, it is favorable for adjusting the lens shape and the refractive power of the sixth lens element so as to correct aberrations and adjust the size distribution at the image side.

When the curvature radius of the image-side surface of the sixth lens element is R12, and a curvature radius of the object-side surface of the seventh lens element is R13, the following condition can be satisfied: -3.0 < R12/R13 < 0. Therefore, it is favorable for the sixth lens element collaborating with the seventh lens element so as to correct aberrations such as distortion. Moreover, the following condition can also be satisfied: -2.3 < R12/R13 < -0.10.

When a sum of axial distances between each of all adjacent lens elements of the optical imaging capturing lens assembly is ΣAT, and a sum of central thicknesses of all lens elements of the optical imaging capturing lens assembly is ΣCT, the following condition can be satisfied: 0.20 < ΣAT/ΣCT < 0.90. Therefore, it is favorable for adjusting the lens configuration so as to reduce the total track length.

When a maximum effective radius of the object-side surface of the first lens element is Y11, and the maximum effective radius of the image-side surface of the eighth lens element is Y82, the following condition can be satisfied: 0.60 < Y11/Y82 < 1.6. Therefore, it is favorable for adjusting the ratio between the lens outer diameters so as to obtain a proper balance among the field of view, the size distribution and the size of the image surface. Please refer to Fig. 23, which shows a schematic view of Y11 and Y82 according to the 1st embodiment of the present disclosure.

When the focal length of the optical imaging capturing lens assembly is f, a focal length of the first lens element is f1, a focal length of the second lens element is f2, a focal length of the third lens element is f3, a focal length of the fourth lens element is f4, a focal length of the fifth lens element is f5, a focal length of the sixth lens element is f6, a focal length of the seventh lens element is f7, and a focal length of the eighth lens element is f8, the third and fourth conditions of the following conditions are satisfied: -0.90 < f/f1 < -0.50; 0.10 < f/f2 < 0.50; |f/f3| < 1.0; |f/f4| < 1.0; |f/f5| < 0.65; - 1.0 < f/f6 < -0.10; 0.50 < f/f7 < 1.2; and -1.0 < f/f8 < -0.10. Therefore, it is favorable for adjusting the refractive power distribution of the optical imaging capturing lens assembly so as to increase the field of view, reduce the size and correct aberrations.

When the focal length of the optical imaging capturing lens assembly is f, and a central thickness of the fifth lens element is CT5, the following condition can be satisfied: 2.6 < f/CT5 < 6.5. Therefore, it is favorable for balancing the size distribution between the object side and the image side of the optical imaging capturing lens assembly.

When a maximum value among absolute values of distortion in a maximum field of view of the optical imaging capturing lens assembly is |Dist|max, the following condition can be satisfied: |Dist|max < 10.0%. Therefore, it is favorable for obtaining a proper balance between image quality and the field of view by controlling the degree of distortion. Moreover, the following condition can also be satisfied: |Dist|max < 8.0%

When the central thickness of the second lens element is CT2, and the central thickness of the third lens element is CT3, the following condition can be satisfied: 0.75 < CT2/CT3. Therefore, it is favorable for collaboration between the second and third lens elements so as to increase the field of view and adjust the size distribution at the object side of the optical imaging capturing lens assembly. Moreover, the following condition can also be satisfied: 0.90 < CT2/CT3 < 2.8.

When an axial distance between the object-side surface of the first lens element and the image-side surface of the eighth lens element is TD, and the central thickness of the eighth lens element is CT8, the following condition can be satisfied: 10.0 < TD/CT8 < 17.0. Therefore, it is favorable for adjusting the lens configuration so as to achieve miniaturization.

When an axial distance between the object-side surface of the first lens element and the image surface is TL, and an entrance pupil diameter of the optical imaging capturing lens assembly is EPD, the following condition can be satisfied: 2.5 < TL/EPD < 9.0. Therefore, it is favorable for obtaining a proper balance between the total track length and the size of the aperture.

When the axial distance between the object-side surface of the first lens element and the image surface is TL, and the focal length of the optical imaging capturing lens assembly is f, the following condition can be satisfied: 2.5 < TL/f < 5.0. Therefore, it is favorable for obtaining a proper balance between miniaturization and large field of view.

When the axial distance between the object-side surface of the first lens element and the image surface is TL, and a maximum image height of the optical imaging capturing lens assembly (which can be half of a diagonal length of an effective photosensitive area of an image sensor) is ImgH, the following condition can be satisfied: 1.2 < TL/ImgH < 2.6. Therefore, it is favorable for obtaining a proper balance between short total track length and large image surface.

When the focal length of the optical imaging capturing lens assembly is f, the focal length of the third lens element is f3, the focal length of the fourth lens element is f4, and the focal length of the fifth lens element is f5, the following condition can be satisfied: 0.50 < f/f3+f/f4+f/f5 < 1.6. Therefore, it is favorable for collaborating the refractive powers of lens elements so as to correct aberrations and balance the size distribution between the object side and the image side of the optical imaging capturing lens assembly.

When the focal length of the second lens element is f2, and the central thickness of the second lens element is CT2, the following condition can be satisfied: 4.0 < f2/CT2 < 23. Therefore, it is favorable for adjusting the lens shape and the refractive power of the second lens element so as to miniaturize the optical imaging capturing lens assembly at the object side.

When the focal length of the sixth lens element is f6, and the central thickness of the sixth lens element is CT6, the following condition can be satisfied: -20 < f6/CT6 < 0. Therefore, it is favorable for adjusting the lens shape and the refractive power of the sixth lens element so as to correct aberrations.

When the axial distance between the first lens element and the second lens element is T12, an axial distance between the second lens element and the third lens element is T23, the axial distance between the third lens element and the fourth lens element is T34, an axial distance between the fourth lens element and the fifth lens element is T45, an axial distance between the fifth lens element and the sixth lens element is T56, the axial distance between the sixth lens element and the seventh lens element is T67, and the axial distance between the seventh lens element and the eighth lens element is T78, the following condition can be satisfied: 1.1 < (T12+T23)/(T34+T45+T56+T67+T78) < 3.5. Therefore, it is favorable for adjusting the lens distribution so as to obtain a proper balance between the field of view and the size distribution.

When an Abbe number of the first lens element is V1, the Abbe number of the second lens element is V2, an Abbe number of the third lens element is V3, an Abbe number of the fourth lens element is V4, an Abbe number of the fifth lens element is V5, the Abbe number of the sixth lens element is V6, an Abbe number of the seventh lens element is V7, the Abbe number of the eighth lens element is V8, an Abbe number of the i-th lens element is Vi, a refractive index of the first lens element is N1, a refractive index of the second lens element is N2, a refractive index of the third lens element is N3, a refractive index of the fourth lens element is N4, a refractive index of the fifth lens element is N5, a refractive index of the sixth lens element is N6, a refractive index of the seventh lens element is N7, a refractive index of the eighth lens element is N8, a refractive index of the i-th lens element is Ni, and a minimum value of Vi/Ni is min(Vi/Ni), the following condition can be satisfied: 5.0 < min(Vi/Ni) < 12, wherein i = 1, 2, 3, 4, 5, 6, 7 or 8. Therefore, it is favorable for adjusting the material distribution of the optical imaging capturing lens assembly so as to reduce the size and correct aberrations.

When a central thickness of the fourth lens element is CT4, the central thickness of the fifth lens element is CT5, the central thickness of the sixth lens element is CT6, a central thickness of the seventh lens element is CT7, the central thickness of the eighth lens element is CT8, the axial distance between the fourth lens element and the fifth lens element is T45, the axial distance between the fifth lens element and the sixth lens element is T56, the axial distance between the sixth lens element and the seventh lens element is T67, and the axial distance between the seventh lens element and the eighth lens element is T78, the following condition can be satisfied: 3.0 < (CT4+CT5+CT6+CT7+CT8)/(T45+T56+T67+T78) < 20. Therefore, it is favorable for adjusting the lens distribution at the image side of the optical imaging capturing lens assembly so as to reduce the size at the image side.

When the sum of axial distances between each of all adjacent lens elements of the optical imaging capturing lens assembly is ΣAT, and the axial distance between the third lens element and the fourth lens element is T34, the following condition can be satisfied: 8.50 < ΣAT/T34 < 120. Therefore, it is favorable for adjusting the lens configuration so as to balance the size distribution between the object side and the image side of the optical imaging capturing lens assembly. Moreover, the following condition can also be satisfied: 9.50 < ΣAT/T34 < 110.

When the central thickness of the fifth lens element is CT5, and the axial distance between the third lens element and the fourth lens element is T34, the following condition can be satisfied: 2.0 < CT5/T34 < 50. Therefore, it is favorable for adjusting the lens configuration so as to obtain a proper balance between the field of view and the size distribution. Moreover, the following condition can also be satisfied: 2.4 < CT5/T34 < 35.

When an f-number of the optical imaging capturing lens assembly is Fno, the following condition can be satisfied: 1.0 < Fno < 2.4. Therefore, it is favorable for obtaining a proper balance between required illuminance and the required depth of field. Moreover, the following condition can also be satisfied: 1.2 < Fno < 2.0.

When half of a maximum field of view of the optical imaging capturing lens assembly is HFOV, the following condition can be satisfied: 50.0 [deg.] < HFOV < 80.0 [deg.]. Therefore, it is favorable for having a wide field of view of the optical imaging capturing lens assembly and correcting aberrations such as distortion generated by an overly wide field of view.

When the focal length of the first lens element is f1, and the focal length of the second lens element is f2, the following condition can be satisfied: -6.5 < f2/f1 < -1.5. Therefore, it is favorable for collaboration between the first and second lens elements so as to correct aberrations such as spherical aberration.

When the focal length of the sixth lens element is f6, the focal length of the seventh lens element is f7, and the focal length of the eighth lens element is f8, the following condition can be satisfied: -7.5 < (f6+f8)/f7 < -2.5. Therefore, it is favorable for adjusting the refractive power distribution at the image side of the optical imaging capturing lens assembly so as to correct aberrations and reduce the size at the image side.

According to the present disclosure, the aforementioned features and conditions can be utilized in numerous combinations so as to achieve corresponding effects.

According to the present disclosure, the lens elements of the optical imaging capturing lens assembly can be made of either glass or plastic material. When the lens elements are made of glass material, the refractive power distribution of the optical imaging capturing lens assembly may be more flexible, and the influence on imaging caused by external environment temperature change may be reduced. The glass lens element can either be made by grinding or molding. When the lens elements are made of plastic material, the manufacturing costs can be effectively reduced. Furthermore, surfaces of each lens element can be arranged to be spherical or aspheric. Spherical lens elements are simple in manufacture. Aspheric lens element design allows more control variables for eliminating aberrations thereof and reducing the required number of lens elements, and the total track length of the optical imaging capturing lens assembly can therefore be effectively shortened. Additionally, the aspheric surfaces may be formed by plastic injection molding or glass molding.

According to the present disclosure, when a lens surface is aspheric, it means that the lens surface has an aspheric shape throughout its optically effective area, or a portion(s) thereof.

According to the present disclosure, one or more of the lens elements' material may optionally include an additive which generates light absorption and interference effects and alters the lens elements' transmittance in a specific range of wavelength for a reduction in unwanted stray light or color deviation. For example, the additive may optionally filter out light in the wavelength range of 600 nm to 800 nm to reduce excessive red light and/or near infrared light; or may optionally filter out light in the wavelength range of 350 nm to 450 nm to reduce excessive blue light and/or near ultraviolet light from interfering the final image. The additive may be homogeneously mixed with a plastic material to be used in manufacturing a mixed-material lens element by injection molding. Moreover, the additive may be coated on the lens surfaces to provide the abovementioned effects.

According to the present disclosure, each of an object-side surface and an image-side surface has a paraxial region and an off-axis region. The paraxial region refers to the region of the surface where light rays travel close to the optical axis, and the off-axis region refers to the region of the surface away from the paraxial region. Particularly, unless otherwise stated, when the lens element has a convex surface, it indicates that the surface is convex in the paraxial region thereof; when the lens element has a concave surface, it indicates that the surface is concave in the paraxial region thereof. Moreover, when a region of refractive power or focus of a lens element is not defined, it indicates that the region of refractive power or focus of the lens element is in the paraxial region thereof.

According to the present disclosure, an inflection point is a point on the surface of the lens element at which the surface changes from concave to convex, or vice versa. A critical point is a non-axial point of the lens surface where its tangent is perpendicular to the optical axis.

According to the present disclosure, the image surface of the optical imaging capturing lens assembly, based on the corresponding image sensor, can be flat or curved, especially a curved surface being concave facing towards the object side of the optical imaging capturing lens assembly.

According to the present disclosure, an image correction unit, such as a field flattener, can be optionally disposed between the lens element closest to the image side of the optical imaging capturing lens assembly along the optical path and the image surface for correction of aberrations such as field curvature. The optical properties of the image correction unit, such as curvature, thickness, index of refraction, position and surface shape (convex or concave surface with spherical, aspheric, diffractive or Fresnel types), can be adjusted according to the design of the image capturing unit. In general, a preferable image correction unit is, for example, a thin transparent element having a concave object-side surface and a planar image-side surface, and the thin transparent element is disposed near the image surface.

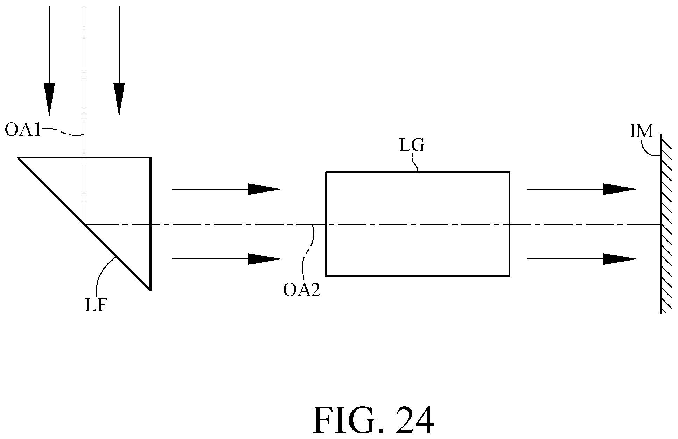

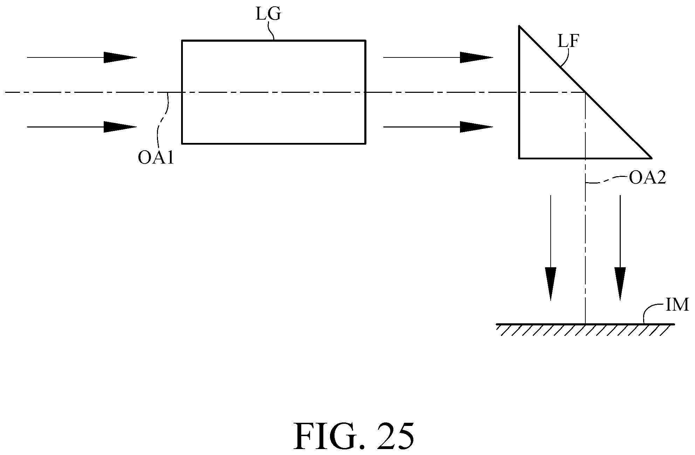

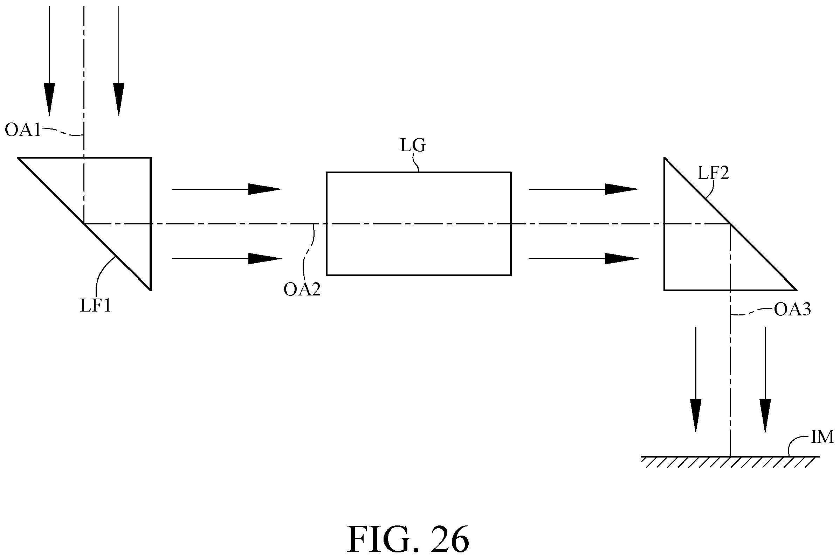

According to the present disclosure, at least one light-folding element, such as a prism or a mirror, can be optionally disposed between an imaged object and the image surface on the imaging optical path, such that the optical imaging capturing lens assembly can be more flexible in space arrangement, and therefore the dimensions of an electronic device is not restricted by the total track length of the optical imaging capturing lens assembly. Specifically, please refer to Fig. 24 and Fig. 25. Fig. 24 shows a schematic view of a configuration of a light-folding element in an optical imaging capturing lens assembly according to one embodiment of the present disclosure, and Fig. 25 shows a schematic view of another configuration of a light-folding element in an optical imaging capturing lens assembly according to one embodiment of the present disclosure. In Fig. 24 and Fig. 25, the optical imaging capturing lens assembly can have, in order from an imaged object (not shown in the figures) to an image surface IM along an optical path, a first optical axis OA1, a light-folding element LF and a second optical axis OA2. The light-folding element LF can be disposed between the imaged object and a lens group LG of the optical imaging capturing lens assembly as shown in Fig. 24 or disposed between a lens group LG of the optical imaging capturing lens assembly and the image surface IM as shown in Fig. 25. Furthermore, please refer to Fig. 26, which shows a schematic view of a configuration of two light-folding elements in an optical imaging capturing lens assembly according to one embodiment of the present disclosure. In Fig. 26, the optical imaging capturing lens assembly can have, in order from an imaged object (not shown in the figure) to an image surface IM along an optical path, a first optical axis OA1, a first light-folding element LF1, a second optical axis OA2, a second light-folding element LF2 and a third optical axis OA3. The first light-folding element LF1 is disposed between the imaged object and a lens group LG of the optical imaging capturing lens assembly, the second light-folding element LF2 is disposed between the lens group LG of the optical imaging capturing lens assembly and the image surface IM, and the travelling direction of light on the first optical axis OA1 can be the same direction as the travelling direction of light on the third optical axis OA3 as shown in Fig. 26. The optical imaging capturing lens assembly can be optionally provided with three or more light-folding elements, and the present disclosure is not limited to the type, amount and position of the light-folding elements of the embodiments disclosed in the aforementioned figures.

According to the present disclosure, the optical imaging capturing lens assembly can include at least one stop, such as an aperture stop, a glare stop or a field stop. Said glare stop or said field stop is set for eliminating the stray light and thereby improving image quality thereof.

According to the present disclosure, an aperture stop can be configured as a front stop or a middle stop. A front stop disposed between an imaged object and the first lens element can provide a longer distance between an exit pupil of the optical imaging capturing lens assembly and the image surface to produce a telecentric effect, and thereby improves the image-sensing efficiency of an image sensor (for example, CCD or CMOS). A middle stop disposed between the first lens element and the image surface is favorable for enlarging the viewing angle of the optical imaging capturing lens assembly and thereby provides a wider field of view for the same.

According to the present disclosure, the optical imaging capturing lens assembly can include an aperture control unit. The aperture control unit may be a mechanical component or a light modulator, which can control the size and shape of the aperture through electricity or electrical signals. The mechanical component can include a movable member, such as a blade assembly or a light shielding sheet. The light modulator can include a shielding element, such as a filter, an electrochromic material or a liquid-crystal layer. The aperture control unit controls the amount of incident light or exposure time to enhance the capability of image quality adjustment. In addition, the aperture control unit can be the aperture stop of the present disclosure, which changes the f-number to obtain different image effects, such as the depth of field or lens speed.

According to the above description of the present disclosure, the following specific embodiments are provided for further explanation.

## 1st Embodiment

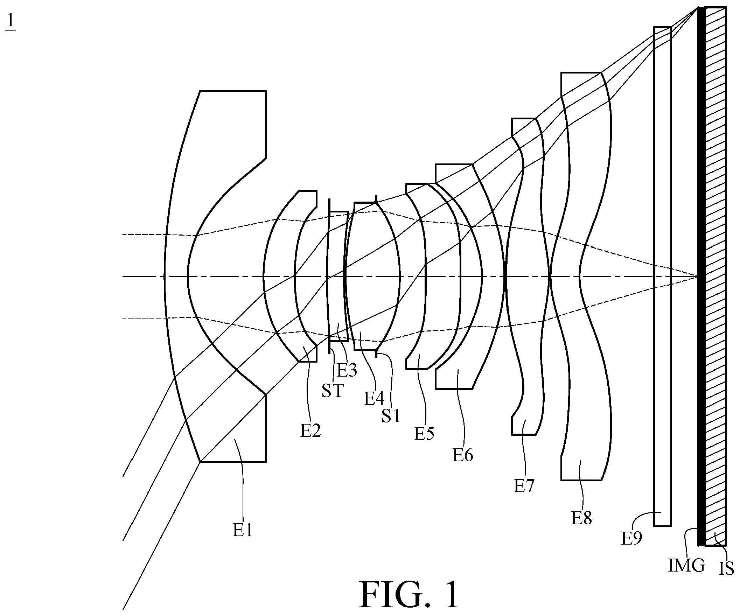

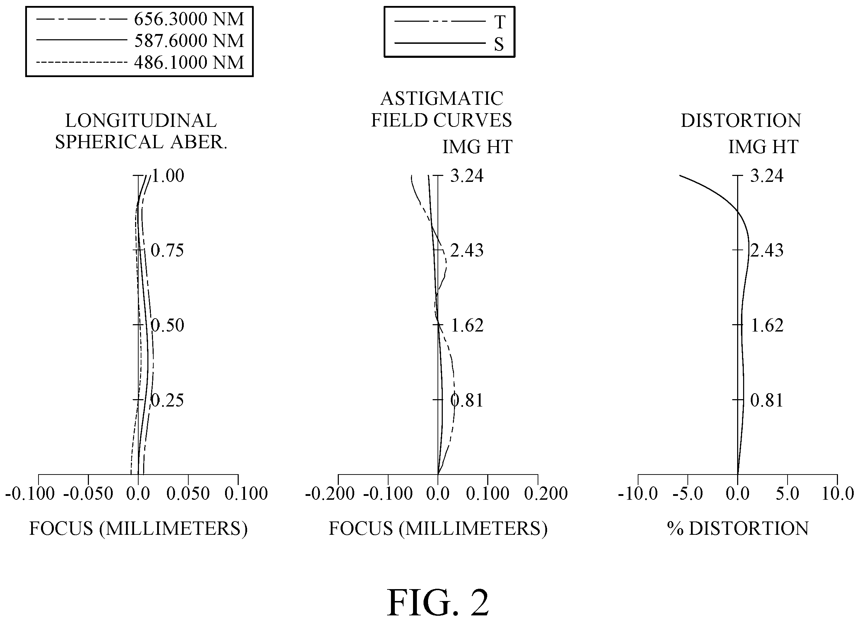

Fig. 1 is a schematic view of an image capturing unit according to the 1st embodiment of the present disclosure. Fig. 2 shows, in order from left to right, spherical aberration curves, astigmatic field curves and a distortion curve of the image capturing unit according to the 1st embodiment. In Fig. 1, the image capturing unit 1 includes the optical imaging capturing lens assembly (its reference numeral is omitted) of the present disclosure and an image sensor IS. The optical imaging capturing lens assembly includes, in order from an object side to an image side along an optical axis, a first lens element E1, a second lens element E2, an aperture stop ST, a third lens element E3, a fourth lens element E4, a stop S1, a fifth lens element E5, a sixth lens element E6, a seventh lens element E7, an eighth lens element E8, a filter E9 and an image surface IMG. The optical imaging capturing lens assembly includes eight lens elements (E1, E2, E3, E4, E5, E6, E7 and E8) with no additional lens element disposed between each of the adjacent eight lens elements.

The first lens element E1 with negative refractive power has an object-side surface being convex in a paraxial region thereof and an image-side surface being concave in a paraxial region thereof. The first lens element E1 is made of plastic material and has the object-side surface and the image-side surface being both aspheric. The object-side surface of the first lens element E1 has one inflection point in an off-axis region thereof. The image-side surface of the first lens element E1 has one inflection point in an off-axis region thereof.

The second lens element E2 with positive refractive power has an object-side surface being convex in a paraxial region thereof and an image-side surface being concave in a paraxial region thereof. The second lens element E2 is made of plastic material and has the object-side surface and the image-side surface being both aspheric. The object-side surface of the second lens element E2 has one inflection point in an off-axis region thereof.

The third lens element E3 with negative refractive power has an object-side surface being convex in a paraxial region thereof and an image-side surface being concave in a paraxial region thereof. The third lens element E3 is made of plastic material and has the object-side surface and the image-side surface being both aspheric. The object-side surface of the third lens element E3 has one inflection point in an off-axis region thereof. The image-side surface of the third lens element E3 has one inflection point in an off-axis region thereof.

The fourth lens element E4 with positive refractive power has an object-side surface being convex in a paraxial region thereof and an image-side surface being convex in a paraxial region thereof. The fourth lens element E4 is made of plastic material and has the object-side surface and the image-side surface being both aspheric. The object-side surface of the fourth lens element E4 has one inflection point in an off-axis region thereof.

The fifth lens element E5 with negative refractive power has an object-side surface being concave in a paraxial region thereof and an image-side surface being concave in a paraxial region thereof. The fifth lens element E5 is made of plastic material and has the object-side surface and the image-side surface being both aspheric. The image-side surface of the fifth lens element E5 has one inflection point in an off-axis region thereof. The image-side surface of the fifth lens element E5 has one critical point in the off-axis region thereof.

The sixth lens element E6 with negative refractive power has an object-side surface being concave in a paraxial region thereof and an image-side surface being convex in a paraxial region thereof. The sixth lens element E6 is made of plastic material and has the object-side surface and the image-side surface being both aspheric. The image-side surface of the sixth lens element E6 has one inflection point in an off-axis region thereof.

The seventh lens element E7 with positive refractive power has an object-side surface being convex in a paraxial region thereof and an image-side surface being convex in a paraxial region thereof. The seventh lens element E7 is made of plastic material and has the object-side surface and the image-side surface being both aspheric. The object-side surface of the seventh lens element E7 has one inflection point in an off-axis region thereof. The image-side surface of the seventh lens element E7 has two inflection points in an off-axis region thereof. The object-side surface of the seventh lens element E7 has one critical point in the off-axis region thereof. The image-side surface of the seventh lens element E7 has two critical points in the off-axis region thereof.

The eighth lens element E8 with negative refractive power has an object-side surface being convex in a paraxial region thereof and an image-side surface being concave in a paraxial region thereof. The eighth lens element E8 is made of plastic material and has the object-side surface and the image-side surface being both aspheric. The object-side surface of the eighth lens element E8 has one inflection point in an off-axis region thereof. The image-side surface of the eighth lens element E8 has one inflection point in an off-axis region thereof. The object-side surface of the eighth lens element E8 has one critical point in the off-axis region thereof. The image-side surface of the eighth lens element E8 has one critical point in the off-axis region thereof.

The filter E9 is made of glass material and located between the eighth lens element E8 and the image surface IMG, and will not affect the focal length of the optical imaging capturing lens assembly. The image sensor IS is disposed on or near the image surface IMG of the optical imaging capturing lens assembly.

The equation of the aspheric surface profiles of the aforementioned lens elements of the 1st embodiment is expressed as follows:

$$X(Y) = (Y^2/R)/\left(1 + sqrt\left(1 - (1+k)\times(Y/R)^2\right)\right) + \sum_i (Ai)\times(Y^i)$$

, where,

X is the displacement in parallel with an optical axis from an axial vertex on the aspheric surface to a point at a distance of Y from the optical axis on the aspheric surface;
Y is the vertical distance from the point on the aspheric surface to the optical axis;
R is the curvature radius;
k is the conic coefficient; and
Ai is the i-th aspheric coefficient, and in the embodiments, i may be, but is not limited to, 4, 6, 8, 10, 12, 14, 16, 18 and 20.

In the optical imaging capturing lens assembly of the image capturing unit according to the 1st embodiment, when a focal length of the optical imaging capturing lens assembly is f, an f-number of the optical imaging capturing lens assembly is Fno, and half of a maximum field of view of the optical imaging capturing lens assembly is HFOV, these parameters have the following values: f = 1.79 millimeters (mm), Fno = 1.78, HFOV = 62.5 degrees (deg.).

When an Abbe number of the second lens element E2 is V2, an Abbe number of the sixth lens element E6 is V6, and an Abbe number of the eighth lens element E8 is V8, the following condition is satisfied: V2+V6+V8 = 60.8.

When an Abbe number of the first lens element E1 is V1, the Abbe number of the second lens element E2 is V2, an Abbe number of the third lens element E3 is V3, an Abbe number of the fourth lens element E4 is V4, an Abbe number of the fifth lens element E5 is V5, the Abbe number of the sixth lens element E6 is V6, an Abbe number of the seventh lens element E7 is V7, the Abbe number of the eighth lens element E8 is V8, an Abbe number of the i-th lens element is Vi, a refractive index of the first lens element E1 is N1, a refractive index of the second lens element E2 is N2, a refractive index of the third lens element E3 is N3, a refractive index of the fourth lens element E4 is N4, a refractive index of the fifth lens element E5 is N5, a refractive index of the sixth lens element E6 is N6, a refractive index of the seventh lens element E7 is N7, a refractive index of the eighth lens element E8 is N8, a refractive index of the i-th lens element is Ni, and a minimum value of Vi/Ni is min(Vi/Ni), the following condition is satisfied: min(Vi/Ni) = 9.59, wherein i = 1, 2, 3, 4, 5, 6, 7 or 8. In this embodiment, a ratio (V3/N3) of the Abbe number to the refractive index of the third lens element E3 is substantially equal to a ratio (V6/N6) of the Abbe number to the refractive index of the sixth lens element E6 and a ratio (V8/N8) of the Abbe number to the refractive index of the eighth lens element E8 and is smaller than a ratio of the Abbe number to the refractive index of each of the other lens elements in the optical imaging capturing lens assembly, and min(Vi/Ni) is equal to V3/N3, V6/N6 or V8/N8.

When a central thickness of the fourth lens element E4 is CT4, a central thickness of the fifth lens element E5 is CT5, a central thickness of the sixth lens element E6 is CT6, a central thickness of the seventh lens element E7 is CT7, a central thickness of the eighth lens element E8 is CT8, an axial distance between the fourth lens element E4 and the fifth lens element E5 is T45, an axial distance between the fifth lens element E5 and the sixth lens element E6 is T56, an axial distance between the sixth lens element E6 and the seventh lens element E7 is T67, and an axial distance between the seventh lens element E7 and the eighth lens element E8 is T78, the following condition is satisfied: (CT4+CT5+CT6+CT7+CT8)/(T45+T56+T67+T78) = 3.61. In this embodiment, an axial distance between two adjacent lens elements is a distance in a paraxial region between two adjacent lens surfaces of the two adjacent lens elements.

When an axial distance between the first lens element E1 and the second lens element E2 is T12, an axial distance between the second lens element E2 and the third lens element E3 is T23, an axial distance between the third lens element E3 and the fourth lens element E4 is T34, the axial distance between the fourth lens element E4 and the fifth lens element E5 is T45, the axial distance between the fifth lens element E5 and the sixth lens element E6 is T56, the axial distance between the sixth lens element E6 and the seventh lens element E7 is T67, and the axial distance between the seventh lens element E7 and the eighth lens element E8 is T78, the following condition is satisfied: (T12+T23)/(T34+T45+T56+T67+T78) = 2.07.

When a central thickness of the first lens element E1 is CT1, and a central thickness of the third lens element E3 is CT3, the following condition is satisfied: CT1/CT3 = 1.37.

When a central thickness of the second lens element E2 is CT2, and the central thickness of the third lens element E3 is CT3, the following condition is satisfied: CT2/CT3 = 1.84.

When the central thickness of the second lens element E2 is CT2, and the axial distance between the third lens element E3 and the fourth lens element E4 is T34, the following condition is satisfied: CT2/T34 = 18.90.

When the central thickness of the fifth lens element E5 is CT5, and the axial distance between the third lens element E3 and the fourth lens element E4 is T34, the following condition is satisfied: CT5/T34 = 21.00.

When the central thickness of the sixth lens element E6 is CT6, and the central thickness of the eighth lens element E8 is CT8, the following condition is satisfied: CT8/CT6 = 1.30.

When the axial distance between the first lens element E1 and the second lens element E2 is T12, the axial distance between the sixth lens element E6 and the seventh lens element E7 is T67, and the axial distance between the seventh lens element E7 and the eighth lens element E8 is T78, the following condition is satisfied: T12/(T67+T78) = 22.93.

When an axial distance between the object-side surface of the first lens element E1 and the image-side surface of the eighth lens element E8 is TD, and the central thickness of the eighth lens element E8 is CT8, the following condition is satisfied: TD/CT8 = 14.33.

When an axial distance between the object-side surface of the first lens element E1 and the image surface IMG is TL, and an entrance pupil diameter of the optical imaging capturing lens assembly is EPD, the following condition is satisfied: TL/EPD = 6.41.

When the axial distance between the object-side surface of the first lens element E1 and the image surface IMG is TL, and the focal length of the optical imaging capturing lens assembly is f, the following condition is satisfied: TL/f = 3.60.

When the axial distance between the object-side surface of the first lens element E1 and the image surface IMG is TL, and a maximum image height of the optical imaging capturing lens assembly is ImgH, the following condition is satisfied: TL/ImgH = 1.99.

When a sum of axial distances between each of all adjacent lens elements of the optical imaging capturing lens assembly is ΣAT, and the axial distance between the third lens element E3 and the fourth lens element E4 is T34, the following condition is satisfied: ΣAT/T34 = 97.05. In this embodiment, ΣAT is a sum of axial distances between the first lens element E1 and the second lens element E2, the second lens element E2 and the third lens element E3, the third lens element E3 and the fourth lens element E4, the fourth lens element E4 and the fifth lens element E5, the fifth lens element E5 and the sixth lens element E6, the sixth lens element E6 and the seventh lens element E7, and the seventh lens element E7 and the eighth lens element E8.

When the sum of axial distances between each of all adjacent lens elements of the optical imaging capturing lens assembly is ΣAT, and a sum of central thicknesses of all lens elements of the optical imaging capturing lens assembly is ΣCT, the following condition is satisfied: ΣAT/ΣCT = 0.63. In this embodiment, ΣCT is a sum of central thicknesses of the first lens element E1, the second lens element E2, the third lens element E3, the fourth lens element E4, the fifth lens element E5, the sixth lens element E6, the seventh lens element E7, and the eighth lens element E8.

When a curvature radius of the image-side surface of the sixth lens element E6 is R12, and the focal length of the optical imaging capturing lens assembly is f, the following condition is satisfied: |R12/f| = 1.32.

When a curvature radius of the object-side surface of the sixth lens element E6 is R11, and the focal length of the optical imaging capturing lens assembly is f, the following condition is satisfied: R11/f = -0.69.

When the curvature radius of the image-side surface of the sixth lens element E6 is R12, and a curvature radius of the object-side surface of the seventh lens element E7 is R13, the following condition is satisfied: R12/R13 = -0.49.

When a focal length of the sixth lens element E6 is f6, a focal length of the seventh lens element E7 is f7, and a focal length of the eighth lens element E8 is f8, the following condition is satisfied: (f6+f8)/f7 = -5.20.

When the focal length of the optical imaging capturing lens assembly is f, a focal length of the first lens element E1 is f1, a focal length of the second lens element E2 is f2, a focal length of the third lens element E3 is f3, a focal length of the fourth lens element E4 is f4, a focal length of the fifth lens element E5 is f5, the focal length of the sixth lens element E6 is f6, the focal length of the seventh lens element E7 is f7, and the focal length of the eighth lens element E8 is f8, the following conditions are satisfied: f/f1 = -0.67; f/f2 = 0.28; |f/f3| = 0.08; |f/f4| = 0.79; |f/f5| = 0.02; f/f6 = -0.43; f/f7 = 0.83; and f/f8 = -0.25.

When the focal length of the optical imaging capturing lens assembly is f, and the central thickness of the fifth lens element E5 is CT5, the following condition is satisfied: f/CT5 = 4.26.

When the focal length of the optical imaging capturing lens assembly is f, the focal length of the third lens element E3 is f3, the focal length of the fourth lens element E4 is f4, and the focal length of the fifth lens element E5 is f5, the following condition is satisfied: f/f3+f/f4+f/f5 = 0.69.

When the focal length of the second lens element E2 is f2, and the central thickness of the second lens element E2 is CT2, the following condition is satisfied: f2/CT2 = 16.79.

When the focal length of the first lens element E1 is f1, and the focal length of the second lens element E2 is f2, the following condition is satisfied: f2/f1 = -2.38.

When the focal length of the sixth lens element E6 is f6, and the central thickness of the sixth lens element E6 is CT6, the following condition is satisfied: f6/CT6 = -15.32.

When a maximum value among absolute values of distortion in a maximum field of view of the optical imaging capturing lens assembly is |Dist|max, the following condition is satisfied: |Dist|max = 5.81%. In this embodiment, the maximum value among absolute values of distortion corresponds to the maximum image height, which can refer to the distortion curve at the right hand side of Fig. 2.

When a maximum effective radius of the object-side surface of the first lens element E1 is Y11, and a maximum effective radius of the image-side surface of the eighth lens element E8 is Y82, the following condition is satisfied: Y11/Y82 = 0.91.

When a vertical distance between the critical point on the object-side surface of the eighth lens element E8 and the optical axis is Yc81, and a maximum effective radius of the object-side surface of the eighth lens element E8 is Y81, the following condition is satisfied: Yc81/Y81 = 0.59.

When a vertical distance between the critical point on the image-side surface of the eighth lens element E8 and the optical axis is Yc82, and the maximum effective radius of the image-side surface of the eighth lens element E8 is Y82, the following condition is satisfied: Yc82/Y82 = 0.73.

The detailed optical data of the 1st embodiment are shown in Table 1 and the aspheric surface data are shown in Table 2 below.

| TABLE 1 | | | | | | | | |
|---|---|---|---|---|---|---|---|---|
| 1st Embodiment | | | | | | | | |
| f = 1.79 mm, Fno = 1.78, HFOV = 62.5 deg. | | | | | | | | |
| Surface # | | Curvature Radius | | Thickness | Material | Index | Abbe # | Focal Length |
| 0 | Object | Plano | | Infinity | | | | |
| 1 | Lens 1 | 4.9265 | (ASP) | 0.280 | Plastic | 1.544 | 56.0 | -2.67 |
| 2 | | 1.0984 | (ASP) | 0.917 | | | | |
| 3 | Lens 2 | 1.5806 | (ASP) | 0.378 | Plastic | 1.587 | 28.3 | 6.35 |
| 4 | | 2.5019 | (ASP) | 0.416 | | | | |
| 5 | Ape. Stop | Plano | | -0.025 | | | | |
| 6 | Lens 3 | 8.5658 | (ASP) | 0.205 | Plastic | 1.697 | 16.3 | -23.16 |
| 7 | | 5.5417 | (ASP) | 0.020 | | | | |
| 8 | Lens 4 | 3.0583 | (ASP) | 0.655 | Plastic | 1.544 | 56.0 | 2.28 |
| 9 | | -1.9259 | (ASP) | -0.285 | | | | |
| 10 | Stop | Plano | | 0.598 | | | | |
| 11 | Lens 5 | -168.6341 | (ASP) | 0.420 | Plastic | 1.544 | 56.0 | -94.44 |
| 12 | | 73.9540 | (ASP) | 0.260 | | | | |
| 13 | Lens 6 | -1.2359 | (ASP) | 0.270 | Plastic | 1.697 | 16.3 | -4.14 |
| 14 | | -2.3564 | (ASP) | 0.020 | | | | |
| 15 | Lens 7 | 4.8101 | (ASP) | 0.516 | Plastic | 1.544 | 56.0 | 2.15 |
| 16 | | -1.4910 | (ASP) | 0.020 | | | | |
| 17 | Lens 8 | 1.1652 | (ASP) | 0.350 | Plastic | 1.697 | 16.3 | -7.07 |
| 18 | | 0.8262 | (ASP) | 0.900 | | | | |
| 19 | Filter | Plano | | 0.210 | Glass | 1.517 | 64.2 | - |
| 20 | | Plano | | 0.326 | | | | |
| 21 | Image | Plano | - | | | | | |
| Note: Reference wavelength is 587.6 nm (d-line). | | | | | | | | |
| An effective radius of the stop S1 (Surface 10) is 0.890 mm. | | | | | | | | |

| TABLE 2 | | | | |
|---|---|---|---|---|
| Aspheric Coefficients | | | | |
| Surface # | 1 | 2 | 3 | 4 |
| k = | -2.35187E+01 | -8.64119E-01 | 3.50858E-01 | -3.89247E-01 |
| A4 = | -1.07772E-02 | -2.68868E-02 | -3.40044E-03 | 1.31112E-01 |
| A6 = | 1.71717E-02 | -1.03492E-02 | 7.71851E-02 | 8.14232E-02 |
| A8 = | -7.37924E-03 | 5.39582E-02 | -1.12319E-01 | 1.30313E-01 |
| A10 = | 1.74665E-03 | -3.13808E-02 | 1.97846E-01 | 3.68524E-02 |
| A12 = | -2.42528E-04 | 4.59570E-03 | -1.35316E-01 | -7.44342E-02 |
| A14 = | 1.80202E-05 | - | - | - |
| A16 = | -5.41163E-07 | - | - | - |
| Surface # | 6 | 7 | 8 | 9 |
| k = | -1.97192E+01 | -7.18757E+00 | -2.37376E+01 | -1.55892E+01 |
| A4 = | 4.84952E-03 | -3.81487E-02 | 3.73361E-02 | -4.01411E-01 |
| A6 = | 3.49715E-02 | 2.69180E-01 | 1.55780E-01 | 4.74831E-01 |
| A8 = | -1.23160E-01 | -5.18201E-01 | -3.76078E-01 | -6.41514E-01 |
| A10 = | 6.81637E-02 | 3.75683E-01 | 3.48068E-01 | 5.31385E-01 |
| A12 = | -1.58931E-01 | -1.81545E-01 | -1.51209E-01 | -1.95839E-01 |
| Surface # | 11 | 12 | 13 | 14 |
| k = | 9.00000E+01 | -9.00000E+01 | -1.87676E+00 | 7.95575E-01 |
| A4 = | -3.28535E-01 | -3.22613E-01 | -1.80105E-01 | -1.76313E-01 |
| A6 = | 1.90999E-01 | 1.45994E-01 | 7.24967E-01 | 5.66008E-01 |
| A8 = | -2.99864E-01 | 1.84510E-01 | -7.79500E-01 | -7.17779E-01 |
| A10 = | 4.43713E-01 | -1.11181E+00 | -4.98262E-01 | 4.98008E-01 |
| A12 = | -2.90338E-01 | 1.49549E+00 | 1.34486E+00 | -2.05068E-01 |
| A14 = | 4.86778E-02 | -8.04008E-01 | -8.36270E-01 | 5.03041E-02 |
| A16 = | 8.65103E-04 | 1.47538E-01 | 1.73374E-01 | -5.67272E-03 |
| Surface # | 15 | 16 | 17 | 18 |
| k = | 3.32436E+00 | -6.83462E+00 | -1.43611E+00 | -4.09235E+00 |
| A4 = | 1.51854E-01 | 2.55687E-01 | -2.99208E-01 | -1.01126E-01 |
| A6 = | -2.10886E-01 | -1.75963E-01 | 1.71434E-01 | 2.86214E-02 |
| A8 = | 1.58648E-01 | 8.28790E-02 | -9.39227E-02 | -1.02495E-03 |
| A10 = | -8.06254E-02 | -3.12807E-02 | 4.59985E-02 | -1.49124E-03 |
| A12 = | 2.26277E-02 | 7.82340E-03 | -1.56468E-02 | 4.11468E-04 |
| A14 = | -3.12962E-03 | -1.06646E-03 | 3.33405E-03 | -4.34130E-05 |
| A16 = | 1.64130E-04 | 5.78561E-05 | -4.25211E-04 | -1.13964E-07 |
| A18 = | - | - | 2.99612E-05 | 4.19823E-07 |
| A20 = | - | - | -9.15859E-07 | -2.62269E-08 |

In Table 1, the curvature radius, the thickness and the focal length are shown in millimeters (mm). Surface numbers 0-21 represent the surfaces sequentially arranged from the object side to the image side along the optical axis. In Table 2, k represents the conic coefficient of the equation of the aspheric surface profiles. A4-A20 represent the aspheric coefficients ranging from the 4th order to the 20th order. The tables presented below for each embodiment are the corresponding schematic parameter and aberration curves, and the definitions of the tables are the same as Table 1 and Table 2 of the 1st embodiment. Therefore, an explanation in this regard will not be provided again.

**2nd Embodiment**

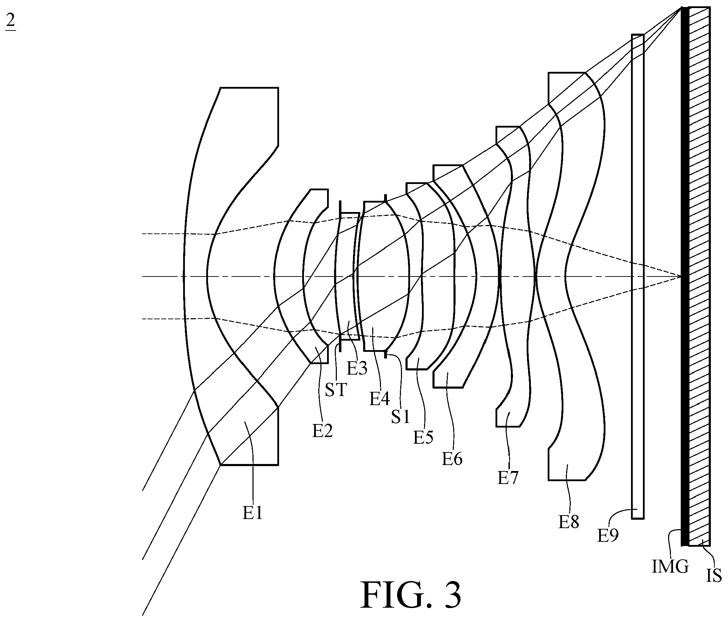

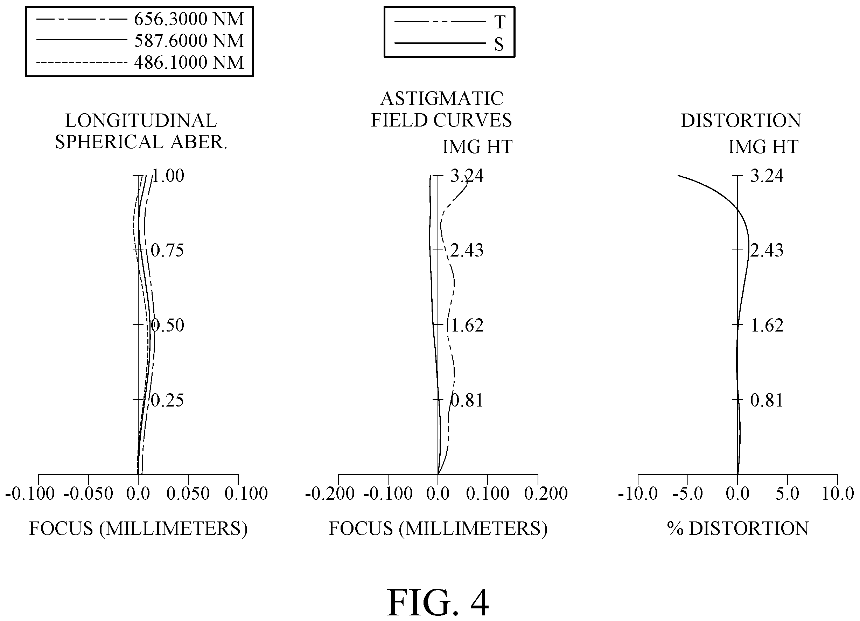

Fig. 3 is a schematic view of an image capturing unit according to the 2nd embodiment of the present disclosure. Fig. 4 shows, in order from left to right, spherical aberration curves, astigmatic field curves and a distortion curve of the image capturing unit according to the 2nd embodiment. In Fig. 3, the image capturing unit 2 includes the optical imaging capturing lens assembly (its reference numeral is omitted) of the present disclosure and an image sensor IS. The optical imaging capturing lens assembly includes, in order from an object side to an image side along an optical axis, a first lens element E1, a second lens element E2, an aperture stop ST, a third lens element E3, a fourth lens element E4, a stop S1, a fifth lens element E5, a sixth lens element E6, a seventh lens element E7, an eighth lens element E8, a filter E9 and an image surface IMG. The optical imaging capturing lens assembly includes eight lens elements (E1, E2, E3, E4, E5, E6, E7 and E8) with no additional lens element disposed between each of the adjacent eight lens elements.

The first lens element E1 with negative refractive power has an object-side surface being convex in a paraxial region thereof and an image-side surface being concave in a paraxial region thereof. The first lens element E1 is made of plastic material and has the object-side surface and the image-side surface being both aspheric. The object-side surface of the first lens element E1 has one inflection point in an off-axis region thereof. The image-side surface of the first lens element E1 has one inflection point in an off-axis region thereof.

The second lens element E2 with positive refractive power has an object-side surface being convex in a paraxial region thereof and an image-side surface being concave in a paraxial region thereof. The second lens element E2 is made of plastic material and has the object-side surface and the image-side surface being both aspheric. The object-side surface of the second lens element E2 has one inflection point in an off-axis region thereof.

The third lens element E3 with positive refractive power has an object-side surface being convex in a paraxial region thereof and an image-side surface being concave in a paraxial region thereof. The third lens element E3 is made of plastic material and has the object-side surface and the image-side surface being both aspheric.

The fourth lens element E4 with positive refractive power has an object-side surface being convex in a paraxial region thereof and an image-side surface being convex in a paraxial region thereof. The fourth lens element E4 is made of glass material and has the object-side surface and the image-side surface being both aspheric. The object-side surface of the fourth lens element E4 has one inflection point in an off-axis region thereof.

The fifth lens element E5 with positive refractive power has an object-side surface being convex in a paraxial region thereof and an image-side surface being concave in a paraxial region thereof. The fifth lens element E5 is made of plastic material and has the object-side surface and the image-side surface being both aspheric. The object-side surface of the fifth lens element E5 has one inflection point in an off-axis region thereof. The image-side surface of the fifth lens element E5 has one inflection point in an off-axis region thereof. The object-side surface of the fifth lens element E5 has one critical point in the off-axis region thereof. The image-side surface of the fifth lens element E5 has one critical point in the off-axis region thereof.

The sixth lens element E6 with negative refractive power has an object-side surface being concave in a paraxial region thereof and an image-side surface being convex in a paraxial region thereof. The sixth lens element E6 is made of plastic material and has the object-side surface and the image-side surface being both aspheric. The image-side surface of the sixth lens element E6 has one inflection point in an off-axis region thereof.

The seventh lens element E7 with positive refractive power has an object-side surface being convex in a paraxial region thereof and an image-side surface being convex in a paraxial region thereof. The seventh lens element E7 is made of plastic material and has the object-side surface and the image-side surface being both aspheric. The object-side surface of the seventh lens element E7 has one inflection point in an off-axis region thereof. The image-side surface of the seventh lens element E7 has two inflection points in an off-axis region thereof. The object-side surface of the seventh lens element E7 has one critical point in the off-axis region thereof. The image-side surface of the seventh lens element E7 has two critical points in the off-axis region thereof.

The eighth lens element E8 with negative refractive power has an object-side surface being convex in a paraxial region thereof and an image-side surface being concave in a paraxial region thereof. The eighth lens element E8 is made of plastic material and has the object-side surface and the image-side surface being both aspheric. The object-side surface of the eighth lens element E8 has one inflection point in an off-axis region thereof. The image-side surface of the eighth lens element E8 has one inflection point in an off-axis region thereof. The object-side surface of the eighth lens element E8 has one critical point in the off-axis region thereof. The image-side surface of the eighth lens element E8 has one critical point in the off-axis region thereof.

The filter E9 is made of glass material and located between the eighth lens element E8 and the image surface IMG, and will not affect the focal length of the optical imaging capturing lens assembly. The image sensor IS is disposed on or near the image surface IMG of the optical imaging capturing lens assembly.

The detailed optical data of the 2nd embodiment are shown in Table 3 and the aspheric surface data are shown in Table 4 below.

| TABLE 3 | | | | | | | | |
|---|---|---|---|---|---|---|---|---|
| 2nd Embodiment | | | | | | | | |
| f = 1.79 mm, Fno = 1.75, HFOV = 62.5 deg. | | | | | | | | |
| Surface # | | Curvature Radius | | Thickness | Material | Index | Abbe # | Focal Length |
| 0 | Object | Plano | | Infinity | | | | |
| 1 | Lens 1 | 8.6638 | (ASP) | 0.280 | Plastic | 1.528 | 60.1 | -2.82 |
| 2 | | 1.2567 | (ASP) | 0.808 | | | | |
| 3 | Lens 2 | 1.2959 | (ASP) | 0.350 | Plastic | 1.566 | 37.4 | 5.90 |
| 4 | | 1.9104 | (ASP) | 0.450 | | | | |
| 5 | Ape. Stop | Plano | | -0.063 | | | | |
| 6 | Lens 3 | 3.9187 | (ASP) | 0.221 | Plastic | 1.686 | 18.4 | 761.70 |
| 7 | | 3.8577 | (ASP) | 0.050 | | | | |
| 8 | Lens 4 | 3.6866 | (ASP) | 0.622 | Glass | 1.522 | 62.2 | 3.30 |
| 9 | | -3.0484 | (ASP) | -0.287 | | | | |
| 10 | Stop | Plano | | 0.439 | | | | |
| 11 | Lens 5 | 3.7299 | (ASP) | 0.394 | Plastic | 1.528 | 60.1 | 8.60 |
| 12 | | 20.1208 | (ASP) | 0.264 | | | | |
| 13 | Lens 6 | -1.1792 | (ASP) | 0.270 | Plastic | 1.713 | 12.4 | -4.20 |
| 14 | | -2.1292 | (ASP) | 0.020 | | | | |
| 15 | Lens 7 | 5.4381 | (ASP) | 0.408 | Plastic | 1.528 | 60.1 | 2.46 |
| 16 | | -1.6613 | (ASP) | 0.020 | | | | |
| 17 | Lens 8 | 1.0443 | (ASP) | 0.350 | Plastic | 1.705 | 14.0 | -11.57 |
| 18 | | 0.7974 | (ASP) | 0.800 | | | | |
| 19 | Filter | Plano | | 0.145 | Glass | 1.517 | 64.2 | - |
| 20 | | Plano | | 0.460 | | | | |
| 21 | Image | Plano | | - | | | | |
| Note: Reference wavelength is 587.6 nm (d-line). | | | | | | | | |
| An effective radius of the stop S1 (Surface 10) is 0.900 mm. | | | | | | | | |

| TABLE 4 | | | | |
|---|---|---|---|---|
| Aspheric Coefficients | | | | |
| Surface # | 1 | 2 | 3 | 4 |
| k = | -1.15804E+01 | -9.43753E-01 | -2.65233E-01 | -1.28683E+00 |
| A4 = | -4.48760E-03 | -2.78324E-02 | -1.23014E-02 | 1.41152E-01 |
| A6 = | 1.66514E-02 | 1.46127E-02 | -2.36076E-02 | 2.18776E-02 |
| A8 = | -9.67904E-03 | 2.01647E-03 | 5.30614E-02 | 1.81525E-01 |
| A10 = | 3.28785E-03 | -5.24038E-03 | -3.91419E-02 | -9.01763E-02 |
| A12 = | -6.70220E-04 | 9.01449E-04 | -1.17668E-02 | 1.44527E-01 |

(continued)

| TABLE 4 | | | | |
|---|---|---|---|---|
| Aspheric Coefficients | | | | |
| Surface # | 1 | 2 | 3 | 4 |
| A14 = | 7.50145E-05 | - | - | - |
| A16 = | -3.58603E-06 | - | - | - |
| Surface # | 6 | 7 | 8 | 9 |
| k = | -5.22119E+00 | -7.49675E+00 | -3.24473E+01 | -1.37183E+01 |
| A4 = | -1.71231E-02 | -6.73318E-02 | 2.44641E-03 | -3.98033E-01 |
| A6 = | 1.09419E-01 | 2.56614E-01 | 1.01536E-01 | 3.78049E-01 |
| A8 = | -6.93010E-02 | -3.09718E-01 | -1.45934E-01 | -4.62206E-01 |
| A10 = | -7.04821E-02 | 2.41592E-01 | 1.07747E-01 | 3.23085E-01 |
| A12 = | 3.67731E-02 | -1.42082E-01 | -6.23381E-02 | -1.21058E-01 |
| Surface # | 11 | 12 | 13 | 14 |
| k = | -6.15468E+01 | -4.33458E+00 | -2.25423E+00 | 8.11172E-01 |
| A4 = | -2.61335E-01 | -1.49357E-01 | 6.67144E-02 | -1.17192E-01 |
| A6 = | -1.53558E-01 | -4.14761E-01 | -6.09369E-01 | 6.01507E-02 |
| A8 = | 6.92568E-01 | 1.02489E+00 | 1.94506E+00 | 4.30685E-01 |
| A10 = | -1.78813E+00 | -1.61072E+00 | -3.06404E+00 | -7.27395E-01 |
| A12 = | 2.77619E+00 | 1.51863E+00 | 2.44499E+00 | 4.95958E-01 |
| A14 = | -2.27970E+00 | -7.63084E-01 | -9.61071E-01 | -1.57662E-01 |
| A16 = | 7.39218E-01 | 1.58068E-01 | 1.48593E-01 | 1.95386E-02 |
| Surface # | 15 | 16 | 17 | 18 |
| k = | -4.74666E+00 | -5.41928E+00 | -1.43755E+00 | -3.37986E+00 |
| A4 = | 3.84256E-02 | 2.31690E-01 | -3.58211E-01 | -1.39394E-01 |
| A6 = | 2.48701E-02 | -8.18386E-02 | 2.91767E-01 | 1.06745E-01 |
| A8 = | -7.07278E-02 | -1.00075E-02 | -1.85725E-01 | -6.42443E-02 |
| A10 = | 4.16126E-02 | 1.18652E-02 | 8.25740E-02 | 2.70198E-02 |
| A12 = | -1.58634E-02 | -2.92154E-03 | -2.33711E-02 | -7.56551E-03 |
| A14 = | 3.56549E-03 | 2.88917E-04 | 3.88102E-03 | 1.36996E-03 |
| A16 = | -3.17201E-04 | -8.65495E-06 | -3.27489E-04 | -1.54691E-04 |
| A18 = | - | - | 7.70393E-06 | 9.96993E-06 |
| A20 = | - | - | 3.58018E-07 | -2.82913E-07 |

In the 2nd embodiment, the equation of the aspheric surface profiles of the aforementioned lens elements is the same as the equation of the 1st embodiment. Also, the definitions of these parameters shown in the following table are the same as those stated in the 1st embodiment with corresponding values for the 2nd embodiment, so an explanation in this regard will not be provided again.

Moreover, these parameters can be calculated from Table 3 and Table 4 as the following values and satisfy the following conditions:

| 2nd Embodiment | | | |
|---|---|---|---|
| f [mm] | 1.79 | R11/f | -0.66 |

(continued)

| 2nd Embodiment | | | |
|---|---|---|---|
| Fno | 1.75 | R12/R13 | -0.39 |
| HFOV [deg.] | 62.5 | (f6+f8)/f7 | -6.41 |
| V2+V6+V8 | 63.8 | f/f1 | -0.64 |
| min(Vi/Ni) | 7.21 | f/f2 | 0.30 |
| (CT4+CT5+CT6+CT7+CT8)/(T45+T56+T67+T78) | 4.48 | \|f/f3\| | 2.35E-03 |
| (T12+T23)/(T34+T45+T56+T67+T78) | 2.36 | \|f/f4\| | 0.54 |
| CT1/CT3 | 1.27 | \|f/f5\| | 0.21 |
| CT2/CT3 | 1.58 | f/f6 | -0.43 |
| CT2/T34 | 7.00 | f/f7 | 0.73 |
| CT5/T34 | 7.88 | f/f8 | -0.15 |
| CT8/CT6 | 1.30 | f/CT5 | 4.55 |
| T12/(T67+T78) | 20.20 | f/f3+f/f4+f/f5 | 0.75 |
| TD/CT8 | 13.13 | f2/CT2 | 16.87 |
| TL/EPD | 5.86 | f2/f1 | -2.09 |
| TL/f | 3.35 | f6/CT6 | -15.57 |
| TL/ImgH | 1.85 | \|Dist\|max [%] | 5.98 |
| ΣAT/T34 | 34.02 | Y11/Y82 | 0.93 |
| ΣAT/ΣCT | 0.59 | Yc81/Y81 | 0.75 |
| \|R12/f\| | 1.19 | Yc82/Y82 | 0.75 |

### 3rd Embodiment

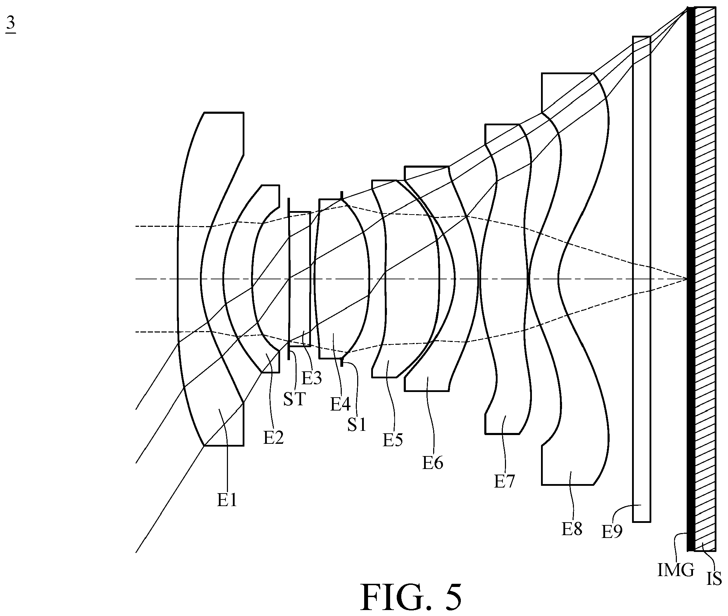

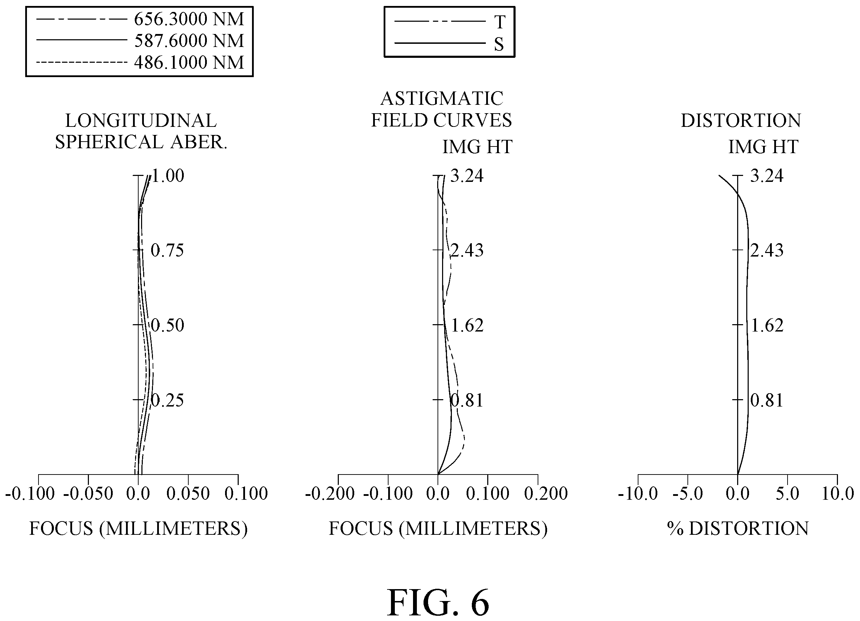

Fig. 5 is a schematic view of an image capturing unit according to the 3rd embodiment of the present disclosure. Fig. 6 shows, in order from left to right, spherical aberration curves, astigmatic field curves and a distortion curve of the image capturing unit according to the 3rd embodiment. In Fig. 5, the image capturing unit 3 includes the optical imaging capturing lens assembly (its reference numeral is omitted) of the present disclosure and an image sensor IS. The optical imaging capturing lens assembly includes, in order from an object side to an image side along an optical axis, a first lens element E1, a second lens element E2, an aperture stop ST, a third lens element E3, a fourth lens element E4, a stop S1, a fifth lens element E5, a sixth lens element E6, a seventh lens element E7, an eighth lens element E8, a filter E9 and an image surface IMG. The optical imaging capturing lens assembly includes eight lens elements (E1, E2, E3, E4, E5, E6, E7 and E8) with no additional lens element disposed between each of the adjacent eight lens elements.

The first lens element E1 with negative refractive power has an object-side surface being convex in a paraxial region thereof and an image-side surface being concave in a paraxial region thereof. The first lens element E1 is made of plastic material and has the object-side surface and the image-side surface being both aspheric. The image-side surface of the first lens element E1 has two inflection points in an off-axis region thereof.

The second lens element E2 with positive refractive power has an object-side surface being convex in a paraxial region thereof and an image-side surface being concave in a paraxial region thereof. The second lens element E2 is made of plastic material and has the object-side surface and the image-side surface being both aspheric. The object-side surface of the second lens element E2 has one inflection point in an off-axis region thereof.

The third lens element E3 with negative refractive power has an object-side surface being concave in a paraxial region thereof and an image-side surface being convex in a paraxial region thereof. The third lens element E3 is made of plastic material and has the object-side surface and the image-side surface being both aspheric. The image-side surface of the third lens element E3 has one inflection point in an off-axis region thereof. The image-side surface of the third lens element E3 has one critical point in the off-axis region thereof.

The fourth lens element E4 with positive refractive power has an object-side surface being convex in a paraxial region thereof and an image-side surface being convex in a paraxial region thereof. The fourth lens element E4 is made of plastic material and has the object-side surface and the image-side surface being both aspheric. The object-side surface of the fourth lens element E4 has one inflection point in an off-axis region thereof.

The fifth lens element E5 with positive refractive power has an object-side surface being convex in a paraxial region thereof and an image-side surface being convex in a paraxial region thereof. The fifth lens element E5 is made of plastic material and has the object-side surface and the image-side surface being both aspheric. The object-side surface of the fifth lens element E5 has two inflection points in an off-axis region thereof. The image-side surface of the fifth lens element E5 has one inflection point in an off-axis region thereof. The object-side surface of the fifth lens element E5 has one critical point in the off-axis region thereof.

The sixth lens element E6 with negative refractive power has an object-side surface being concave in a paraxial region thereof and an image-side surface being convex in a paraxial region thereof. The sixth lens element E6 is made of plastic material and has the object-side surface and the image-side surface being both aspheric. The object-side surface of the sixth lens element E6 has two inflection points in an off-axis region thereof. The image-side surface of the sixth lens element E6 has one inflection point in an off-axis region thereof. The image-side surface of the sixth lens element E6 has one critical point in the off-axis region thereof.

The seventh lens element E7 with positive refractive power has an object-side surface being convex in a paraxial region thereof and an image-side surface being convex in a paraxial region thereof. The seventh lens element E7 is made of plastic material and has the object-side surface and the image-side surface being both aspheric. The object-side surface of the seventh lens element E7 has one inflection point in an off-axis region thereof. The image-side surface of the seventh lens element E7 has two inflection points in an off-axis region thereof. The object-side surface of the seventh lens element E7 has one critical point in the off-axis region thereof. The image-side surface of the seventh lens element E7 has two critical points in the off-axis region thereof.

The eighth lens element E8 with negative refractive power has an object-side surface being convex in a paraxial region thereof and an image-side surface being concave in a paraxial region thereof. The eighth lens element E8 is made of plastic material and has the object-side surface and the image-side surface being both aspheric. The object-side surface of the eighth lens element E8 has one inflection point in an off-axis region thereof. The image-side surface of the eighth lens element E8 has one inflection point in an off-axis region thereof. The object-side surface of the eighth lens element E8 has one critical point in the off-axis region thereof. The image-side surface of the eighth lens element E8 has one critical point in the off-axis region thereof.

The filter E9 is made of glass material and located between the eighth lens element E8 and the image surface IMG, and will not affect the focal length of the optical imaging capturing lens assembly. The image sensor IS is disposed on or near the image surface IMG of the optical imaging capturing lens assembly.

The detailed optical data of the 3rd embodiment are shown in Table 5 and the aspheric surface data are shown in Table 6 below.

| TABLE 5 | | | | | | | |
|---|---|---|---|---|---|---|---|
| 3rd Embodiment | | | | | | | |
| f = 2.10 mm, Fno = 1.65, HFOV = 57.5 deg. | | | | | | | |
| Surface # | | Curvature Radius | | Thickness | Material | Index | Abbe # | Focal Length |
| 0 | Object | Plano | | Infinity | | | | |
| 1 | Lens 1 | 200.0000 | (ASP) | 0.280 | Plastic | 1.545 | 56.1 | -2.72 |
| 2 | | 1.4720 | (ASP) | 0.271 | | | | |
| 3 | Lens 2 | 1.4629 | (ASP) | 0.348 | Plastic | 1.582 | 30.2 | 5.27 |
| 4 | | 2.5486 | (ASP) | 0.444 | | | | |
| 5 | Ape. Stop | Plano | | 0.010 | | | | |
| 6 | Lens 3 | -41.2134 | (ASP) | 0.246 | Plastic | 1.686 | 18.4 | -75.71 |
| 7 | | -200.0000 | (ASP) | 0.051 | | | | |
| 8 | Lens 4 | 4.1591 | (ASP) | 0.664 | Plastic | 1.544 | 56.0 | 3.44 |
| 9 | | -3.2157 | (ASP) | -0.334 | | | | |
| 10 | Stop | Plano | | 0.527 | | | | |
| 11 | Lens 5 | 5.7441 | (ASP) | 0.648 | Plastic | 1.544 | 56.0 | 5.71 |
| 12 | | -6.4866 | (ASP) | 0.188 | | | | |
| 13 | Lens 6 | -1.0199 | (ASP) | 0.282 | Plastic | 1.686 | 18.4 | -2.85 |

(continued)

| TABLE 5 | | | | | | | |
|---|---|---|---|---|---|---|---|
| 3rd Embodiment | | | | | | | |
| f = 2.10 mm, Fno = 1.65, HFOV = 57.5 deg. | | | | | | | |
| Surface # | | Curvature Radius | | Thickness | Material | Index | Abbe # | Focal Length |
| 14 | | -2.3689 | (ASP) | 0.024 | | | | |
| 15 | Lens 7 | 2.4315 | (ASP) | 0.570 | Plastic | 1.544 | 56.0 | 2.15 |
| 16 | | -2.0747 | (ASP) | 0.020 | | | | |
| 17 | Lens 8 | 0.9405 | (ASP) | 0.350 | Plastic | 1.614 | 25.6 | -8.65 |
| 18 | | 0.6860 | (ASP) | 0.900 | | | | |
| 19 | Filter | Plano | | 0.210 | Glass | 1.517 | 64.2 | - |
| 20 | | Plano | | 0.451 | | | | |
| 21 | Image | Plano | | - | | | | |
| Note: Reference wavelength is 587.6 nm (d-line). | | | | | | | |
| An effective radius of the stop S1 (Surface 10) is 0.960 mm. | | | | | | | |

| TABLE 6 | | | | |
|---|---|---|---|---|
| Aspheric Coefficients | | | | |
| Surface # | 1 | 2 | 3 | 4 |
| k = | 1.00000E+00 | -1.31325E+00 | -1.22532E-01 | -8.84712E-01 |
| A4 = | 3.45029E-02 | -5.87188E-02 | -5.34581E-02 | 1.52068E-01 |
| A6 = | -4.27515E-03 | 3.36889E-02 | 1.49249E-03 | 6.26639E-04 |
| A8 = | -2.98815E-03 | -2.75022E-02 | 9.80721E-02 | 4.64616E-01 |
| A10 = | 2.46160E-03 | 9.92904E-03 | -7.99124E-02 | -6.31553E-01 |
| A12 = | -8.08846E-04 | -1.12839E-03 | 1.04630E-02 | 5.16850E-01 |
| A14 = | 1.27547E-04 | - | - | - |
| A16 = | -7.69613E-06 | - | - | - |
| Surface # | 6 | 7 | 8 | 9 |
| k = | -9.00000E+01 | 2.00000E+01 | -3.48252E+01 | -4.16407E+01 |
| A4 = | 1.36601E-03 | -3.01117E-02 | 2.47430E-02 | -4.29289E-01 |
| A6 = | -8.19117E-02 | 6.70642E-02 | -7.01796E-02 | 3.95017E-01 |
| A8 = | 3.05500E-01 | -6.84879E-02 | 8.10651E-02 | -4.57285E-01 |
| A10 = | -4.67729E-01 | 6.97199E-02 | -1.45413E-01 | 3.20184E-01 |
| A12 = | 2.62180E-01 | -3.22812E-03 | 7.55917E-02 | -1.17735E-01 |
| Surface # | 11 | 12 | 13 | 14 |
| k = | -1.58686E+01 | -1.06751E-01 | -2.02067E+00 | 7.91508E-01 |
| A4 = | -3.11702E-01 | -2.17820E-01 | -9.32497E-02 | -1.91374E-01 |
| A6 = | 2.37941E-01 | -1.68311E-01 | 1.91035E-01 | 3.85600E-01 |
| A8 = | -5.54908E-01 | 5.30270E-01 | -6.20692E-02 | -3.06217E-01 |
| A10 = | 1.02296E+00 | -8.97229E-01 | -3.23953E-01 | 1.18754E-01 |
| A12 = | -9.87588E-01 | 8.70303E-01 | 4.01035E-01 | -2.29987E-02 |

(continued)

| Surface # | 11 | 12 | 13 | 14 |
|---|---|---|---|---|
| A14 = | 4.82597E-01 | -4.29052E-01 | -1.68984E-01 | 7.28614E-03 |
| A16 = | -9.16411E-02 | 8.45423E-02 | 2.32963E-02 | -1.96224E-03 |
| Surface # | 15 | 16 | 17 | 18 |
| k = | -6.23504E+00 | -1.90241E+01 | -1.40423E+00 | -3.14401E+00 |
| A4 = | 5.12851E-02 | 2.64770E-01 | -3.23394E-01 | -4.64231E-02 |
| A6 = | -5.76420E-02 | -1.52960E-01 | 2.57726E-01 | -2.51841E-02 |
| A8 = | 2.25576E-02 | 2.37709E-02 | -2.13508E-01 | 3.23205E-02 |
| A10 = | -2.46468E-02 | 8.63906E-03 | 1.44555E-01 | -1.52205E-02 |
| A12 = | 1.32021E-02 | -4.94062E-03 | -6.63634E-02 | 4.01682E-03 |
| A14 = | -2.79254E-03 | 9.30570E-04 | 1.93325E-02 | -6.44265E-04 |
| A16 = | 1.99681E-04 | -6.49814E-05 | -3.41894E-03 | 6.23683E-05 |
| A18 = | - | - | 3.32988E-04 | -3.35956E-06 |
| A20 = | - | - | -1.35971E-05 | 7.74664E-08 |

In the 3rd embodiment, the equation of the aspheric surface profiles of the aforementioned lens elements is the same as the equation of the 1st embodiment. Also, the definitions of these parameters shown in the following table are the same as those stated in the 1st embodiment with corresponding values for the 3rd embodiment, so an explanation in this regard will not be provided again.

Moreover, these parameters can be calculated from Table 5 and Table 6 as the following values and satisfy the following conditions:

| 3rd Embodiment | | | | |
|---|---|---|---|---|
| f [mm] | 2.10 | R11/f | -0.49 |
| Fno | 1.65 | R12/R13 | -0.97 |
| HFOV [deg.] | 57.5 | (f6+f8)/f7 | -5.34 |
| V2+V6+V8 | 74.2 | f/f1 | -0.77 |
| min(Vi/Ni) | 10.90 | f/f2 | 0.40 |
| (CT4+CT5+CT6+CT7+CT8)/(T45+T56+T67+T78) | 5.92 | \|f/f3\| | 0.03 |
| (T12+T23)/(T34+T45+T56+T67+T78) | 1.52 | \|f/f4\| | 0.61 |
| CT1/CT3 | 1.14 | \|f/f5\| | 0.37 |
| CT2/CT3 | 1.41 | f/f6 | -0.74 |
| CT2/T34 | 6.82 | f/f7 | 0.98 |
| CT5/T34 | 12.71 | f/f8 | -0.24 |
| CT8/CT6 | 1.24 | f/CT5 | 3.24 |
| T12/(T67+T78) | 6.16 | f/f3+f/f4+f/f5 | 0.95 |
| TD/CT8 | 13.11 | f2/CT2 | 15.15 |
| TL/EPD | 4.83 | f2/f1 | -1.94 |
| TL/f | 2.93 | f6/CT6 | -10.12 |
| TL/ImgH | 1.90 | \|Dist\|max [%] | 1.87 |
| ΣAT/T34 | 23.55 | Y11/Y82 | 0.81 |
| ΣAT/ΣCT | 0.35 | Yc81/Y81 | 0.76 |

(continued)

| 3rd Embodiment | | | |
|---|---|---|---|
| \|R12/f\| | 1.13 | Yc82/Y82 | 0.77 |

## 4th Embodiment

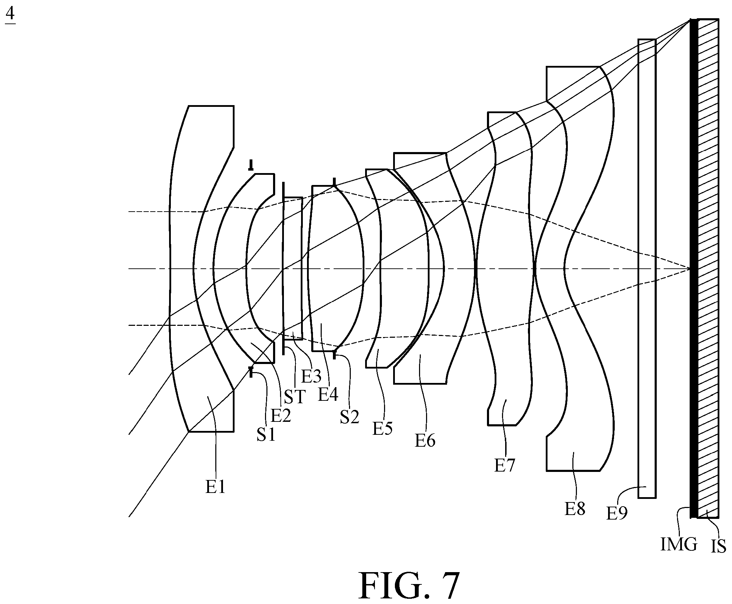

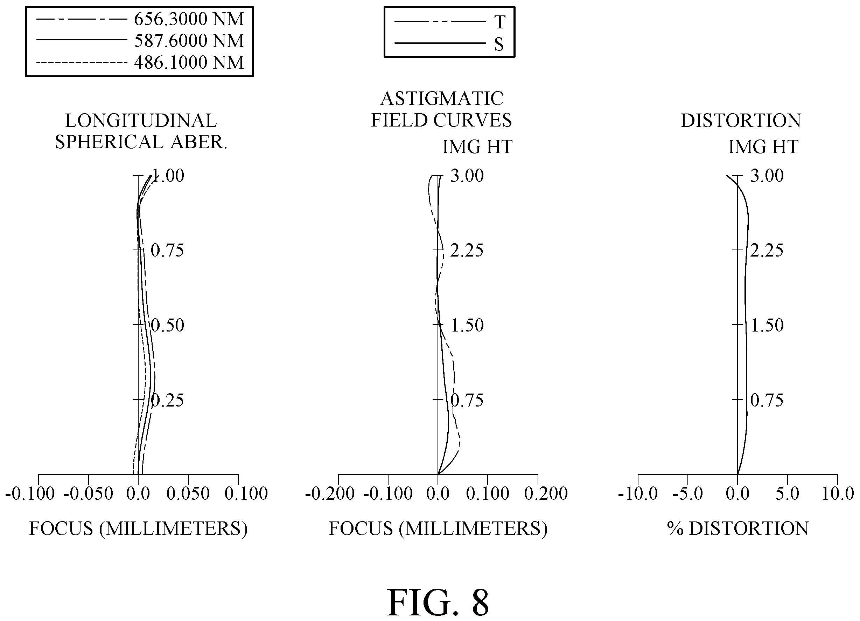

Fig. 7 is a schematic view of an image capturing unit according to the 4th embodiment of the present disclosure. Fig. 8 shows, in order from left to right, spherical aberration curves, astigmatic field curves and a distortion curve of the image capturing unit according to the 4th embodiment. In Fig. 7, the image capturing unit 4 includes the optical imaging capturing lens assembly (its reference numeral is omitted) of the present disclosure and an image sensor IS. The optical imaging capturing lens assembly includes, in order from an object side to an image side along an optical axis, a first lens element E1, a stop S1, a second lens element E2, an aperture stop ST, a third lens element E3, a fourth lens element E4, a stop S2, a fifth lens element E5, a sixth lens element E6, a seventh lens element E7, an eighth lens element E8, a filter E9 and an image surface IMG. The optical imaging capturing lens assembly includes eight lens elements (E1, E2, E3, E4, E5, E6, E7 and E8) with no additional lens element disposed between each of the adjacent eight lens elements.

The first lens element E1 with negative refractive power has an object-side surface being concave in a paraxial region thereof and an image-side surface being concave in a paraxial region thereof. The first lens element E1 is made of plastic material and has the object-side surface and the image-side surface being both aspheric. The object-side surface of the first lens element E1 has one inflection point in an off-axis region thereof. The image-side surface of the first lens element E1 has one inflection point in an off-axis region thereof. The object-side surface of the first lens element E1 has one critical point in the off-axis region thereof.

The second lens element E2 with positive refractive power has an object-side surface being convex in a paraxial region thereof and an image-side surface being concave in a paraxial region thereof. The second lens element E2 is made of plastic material and has the object-side surface and the image-side surface being both aspheric. The object-side surface of the second lens element E2 has one inflection point in an off-axis region thereof.

The third lens element E3 with positive refractive power has an object-side surface being convex in a paraxial region thereof and an image-side surface being concave in a paraxial region thereof. The third lens element E3 is made of plastic material and has the object-side surface and the image-side surface being both aspheric. The object-side surface of the third lens element E3 has one inflection point in an off-axis region thereof.

The fourth lens element E4 with positive refractive power has an object-side surface being convex in a paraxial region thereof and an image-side surface being convex in a paraxial region thereof. The fourth lens element E4 is made of plastic material and has the object-side surface and the image-side surface being both aspheric. The object-side surface of the fourth lens element E4 has one inflection point in an off-axis region thereof. The object-side surface of the fourth lens element E4 has one critical point in the off-axis region thereof.

The fifth lens element E5 with positive refractive power has an object-side surface being convex in a paraxial region thereof and an image-side surface being convex in a paraxial region thereof. The fifth lens element E5 is made of plastic material and has the object-side surface and the image-side surface being both aspheric. The object-side surface of the fifth lens element E5 has two inflection points in an off-axis region thereof. The object-side surface of the fifth lens element E5 has one critical point in the off-axis region thereof.

The sixth lens element E6 with negative refractive power has an object-side surface being concave in a paraxial region thereof and an image-side surface being convex in a paraxial region thereof. The sixth lens element E6 is made of plastic material and has the object-side surface and the image-side surface being both aspheric. The image-side surface of the sixth lens element E6 has one inflection point in an off-axis region thereof. The image-side surface of the sixth lens element E6 has one critical point in the off-axis region thereof.

The seventh lens element E7 with positive refractive power has an object-side surface being convex in a paraxial region thereof and an image-side surface being convex in a paraxial region thereof. The seventh lens element E7 is made of plastic material and has the object-side surface and the image-side surface being both aspheric. The object-side surface of the seventh lens element E7 has one inflection point in an off-axis region thereof. The image-side surface of the seventh lens element E7 has two inflection points in an off-axis region thereof. The object-side surface of the seventh lens element E7 has one critical point in the off-axis region thereof. The image-side surface of the seventh lens element E7 has two critical points in the off-axis region thereof.

The eighth lens element E8 with negative refractive power has an object-side surface being convex in a paraxial region thereof and an image-side surface being concave in a paraxial region thereof. The eighth lens element E8 is made of plastic material and has the object-side surface and the image-side surface being both aspheric. The object-side surface of the eighth lens element E8 has one inflection point in an off-axis region thereof. The image-side surface of the eighth lens element E8 has one inflection point in an off-axis region thereof. The object-side surface of the eighth lens element E8 has one critical point in the off-axis region thereof. The image-side surface of the eighth lens element E8 has one critical point in the off-axis region thereof.

The filter E9 is made of glass material and located between the eighth lens element E8 and the image surface IMG, and will not affect the focal length of the optical imaging capturing lens assembly. The image sensor IS is disposed on or near the image surface IMG of the optical imaging capturing lens assembly.

The detailed optical data of the 4th embodiment are shown in Table 7 and the aspheric surface data are shown in Table 8 below.

| TABLE 7 | | | | | | | | |
|---|---|---|---|---|---|---|---|---|
| 4th Embodiment | | | | | | | | |
| f = 2.12 mm, Fno = 1.54, HFOV = 55.0 deg. | | | | | | | | |
| Surface # | | Curvature Radius | | Thickness | Material | Index | Abbe # | Focal Length |
| 0 | Object | Plano | | Infinity | | | | |
| 1 | Lens 1 | -11.5078 | (ASP) | 0.280 | Plastic | 1.544 | 56.0 | -2.78 |
| 2 | | 1.7593 | (ASP) | 0.695 | | | | |
| 3 | Stop | Plano | | -0.454 | | | | |
| 4 | Lens 2 | 1.5777 | (ASP) | 0.397 | Plastic | 1.582 | 30.2 | 5.01 |
| 5 | | 3.1130 | (ASP) | 0.450 | | | | |
| 6 | Ape. Stop | Plano | | -0.009 | | | | |
| 7 | Lens 3 | 27.8486 | (ASP) | 0.232 | Plastic | 1.698 | 14.5 | 219.06 |
| 8 | | 33.9287 | (ASP) | 0.077 | | | | |
| 9 | Lens 4 | 4.7496 | (ASP) | 0.674 | Plastic | 1.544 | 56.0 | 3.71 |
| 10 | | -3.3418 | (ASP) | -0.354 | | | | |
| 11 | Stop | Plano | | 0.556 | | | | |
| 12 | Lens 5 | 5.3884 | (ASP) | 0.586 | Plastic | 1.544 | 56.0 | 5.82 |
| 13 | | -7.3855 | (ASP) | 0.187 | | | | |
| 14 | Lens 6 | -1.0215 | (ASP) | 0.375 | Plastic | 1.680 | 18.2 | -2.90 |
| 15 | | -2.4361 | (ASP) | 0.020 | | | | |
| 16 | Lens 7 | 2.5155 | (ASP) | 0.687 | Plastic | 1.544 | 56.0 | 2.07 |
| 17 | | -1.8468 | (ASP) | 0.020 | | | | |
| 18 | Lens 8 | 0.9680 | (ASP) | 0.350 | Plastic | 1.587 | 28.3 | -6.78 |
| 19 | | 0.6746 | (ASP) | 0.900 | | | | |
| 20 | Filter | Plano | | 0.210 | Glass | 1.517 | 64.2 | - |
| 21 | | Plano | | 0.421 | | | | |
| 22 | Image | Plano | | - | | | | |
| Note: Reference wavelength is 587.6 nm (d-line). | | | | | | | | |
| An effective radius of the stop S1 (Surface 3) is 1.200 mm. | | | | | | | | |
| An effective radius of the stop S2 (Surface 11) is 1.000 mm. | | | | | | | | |

| TABLE 8 | | | | |
|---|---|---|---|---|
| Aspheric Coefficients | | | | |
| Surface # | 1 | 2 | 4 | 5 |
| k = | -5.00000E+01 | -9.99348E-01 | 1.88623E-01 | -6.54481E-01 |

(continued)

| TABLE 8 | | | | |
|---|---|---|---|---|
| Aspheric Coefficients | | | | |
| Surface # | 1 | 2 | 4 | 5 |
| A4 = | 6.38929E-02 | -5.35821E-02 | -7.33115E-02 | 1.50153E-01 |
| A6 = | -2.85573E-02 | 5.71086E-02 | 6.88442E-02 | 2.10672E-02 |
| A8 = | 9.97596E-03 | -4.19172E-02 | 5.56636E-02 | 4.56868E-01 |
| A10 = | -2.04002E-03 | 1.26825E-02 | -6.16632E-02 | -6.12408E-01 |
| A12 = | 1.74247E-04 | -1.36826E-03 | 6.67515E-03 | 4.20935E-01 |
| A14 = | 4.44892E-06 | - | - | - |
| A16 = | -1.16525E-06 | - | - | - |
| Surface # | 7 | 8 | 9 | 10 |
| k = | -4.89729E+01 | -1.87040E+01 | -3.86397E+01 | -4.01420E+01 |
| A4 = | -1.18938E-03 | -4.04250E-02 | -7.84048E-03 | -4.09561E-01 |
| A6 = | 2.34756E-02 | 1.27253E-01 | 2.81850E-02 | 3.65183E-01 |
| A8 = | -3.33475E-02 | -1.90083E-01 | -6.26209E-02 | -3.63560E-01 |
| A10 = | 7.13835E-03 | 1.45955E-01 | 1.18335E-03 | 2.24504E-01 |
| A12 = | -2.20305E-02 | -4.17344E-02 | 1.05097E-02 | -7.55566E-02 |
| Surface # | 12 | 13 | 14 | 15 |
| k = | -1.84490E+01 | -9.56089E+00 | -2.01892E+00 | 8.03727E-01 |
| A4 = | -3.21064E-01 | -2.69362E-01 | -1.67243E-01 | -1.63070E-01 |
| A6 = | 2.21838E-01 | 1.06854E-01 | 5.68479E-01 | 3.63541E-01 |
| A8 = | -4.63810E-01 | -1.36803E-01 | -9.74328E-01 | -3.61528E-01 |
| A10 = | 8.67162E-01 | 6.90507E-02 | 9.24189E-01 | 2.26399E-01 |
| A12 = | -8.18481E-01 | 5.35289E-02 | -5.46792E-01 | -9.27320E-02 |
| A14 = | 3.78581E-01 | -6.06167E-02 | 2.00224E-01 | 2.51466E-02 |
| A16 = | -6.77035E-02 | 1.56340E-02 | -3.45618E-02 | -3.28475E-03 |
| Surface # | 16 | 17 | 18 | 19 |
| k = | -5.01547E+00 | -1.70961E+01 | -1.38217E+00 | -3.34951E+00 |
| A4 = | 4.26624E-02 | 2.24495E-01 | -2.63290E-01 | 1.79842E-03 |
| A6 = | -5.48850E-02 | -1.66265E-01 | 1.82852E-01 | -8.00440E-02 |
| A8 = | 2.55871E-02 | 7.27069E-02 | -1.64300E-01 | 6.29520E-02 |
| A10 = | -1.48120E-02 | -2.30551E-02 | 1.16993E-01 | -2.56602E-02 |
| A12 = | 5.31923E-03 | 4.75082E-03 | -5.31123E-02 | 6.36423E-03 |
| A14 = | -8.60821E-04 | -5.63740E-04 | 1.49043E-02 | -9.97425E-04 |
| A16 = | 4.79908E-05 | 2.85797E-05 | -2.52018E-03 | 9.66911E-05 |
| A18 = | - | - | 2.34652E-04 | -5.30572E-06 |
| A20 = | - | - | -9.17907E-06 | 1.25990E-07 |

In the 4th embodiment, the equation of the aspheric surface profiles of the aforementioned lens elements is the same as the equation of the 1st embodiment. Also, the definitions of these parameters shown in the following table are the same as those stated in the 1st embodiment with corresponding values for the 4th embodiment, so an explanation in this regard will not be provided again.

Moreover, these parameters can be calculated from Table 7 and Table 8 as the following values and satisfy the following conditions:

| 4th Embodiment | | | |
|---|---|---|---|
| f [mm] | 2.12 | R11/f | -0.48 |
| Fno | 1.54 | R12/R13 | -0.97 |
| HFOV [deg.] | 55.0 | (f6+f8)/f7 | -4.67 |
| V2+V6+V8 | 76.7 | f/f1 | -0.76 |
| min(Vi/Ni) | 8.53 | f/f2 | 0.42 |
| (CT4+CT5+CT6+CT7+CT8)/(T45+T56+T67+T78) | 6.23 | \|f/f3\| | 0.01 |
| (T12+T23)/(T34+T45+T56+T67+T78) | 1.35 | \|f/f4\| | 0.57 |
| CT1/CT3 | 1.21 | \|f/f5\| | 0.36 |
| CT2/CT3 | 1.71 | f/f6 | -0.73 |
| CT2/T34 | 5.16 | f/f7 | 1.02 |
| CT5/T34 | 7.61 | f/f8 | -0.31 |
| CT8/CT6 | 0.93 | f/CT5 | 3.62 |
| T12/(T67+T78) | 6.03 | f/f3+f/f4+f/f5 | 0.95 |
| TD/CT8 | 13.63 | f2/CT2 | 12.63 |
| TL/EPD | 4.57 | f2/f1 | -1.80 |
| TL/f | 2.97 | f6/CT6 | -7.73 |
| TUImgH | 2.10 | \|Dist\|max [%] | 1.11 |
| ΣAT/T34 | 15.43 | Y11/Y82 | 0.81 |
| ΣAT/ΣCT | 0.33 | Yc81/Y81 | 0.73 |
| \|R12/f\| | 1.15 | Yc82/Y82 | 0.78 |

## 5th Embodiment

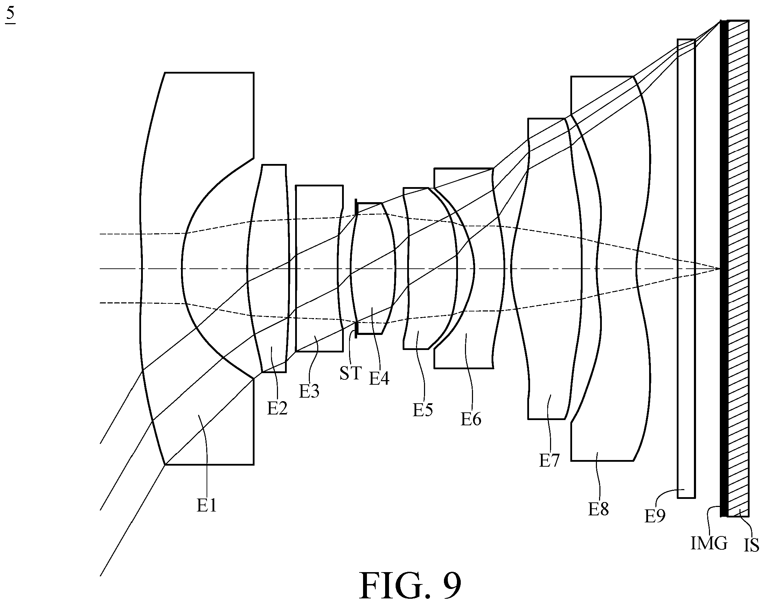

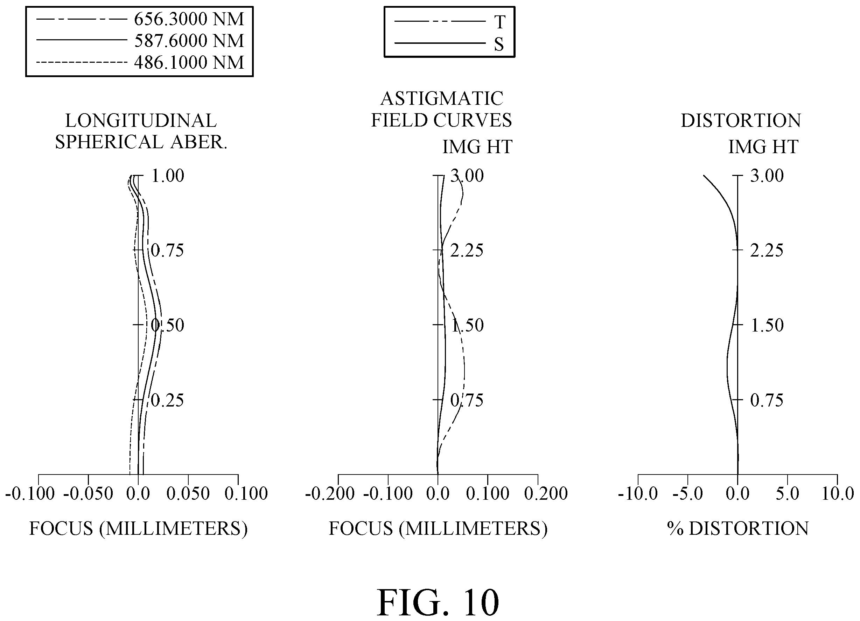

Fig. 9 is a schematic view of an image capturing unit according to the 5th embodiment of the present disclosure. Fig. 10 shows, in order from left to right, spherical aberration curves, astigmatic field curves and a distortion curve of the image capturing unit according to the 5th embodiment. In Fig. 9, the image capturing unit 5 includes the optical imaging capturing lens assembly (its reference numeral is omitted) of the present disclosure and an image sensor IS. The optical imaging capturing lens assembly includes, in order from an object side to an image side along an optical axis, a first lens element E1, a second lens element E2, a third lens element E3, an aperture stop ST, a fourth lens element E4, a fifth lens element E5, a sixth lens element E6, a seventh lens element E7, an eighth lens element E8, a filter E9 and an image surface IMG. The optical imaging capturing lens assembly includes eight lens elements (E1, E2, E3, E4, E5, E6, E7 and E8) with no additional lens element disposed between each of the adjacent eight lens elements.

The first lens element E1 with negative refractive power has an object-side surface being concave in a paraxial region thereof and an image-side surface being concave in a paraxial region thereof. The first lens element E1 is made of plastic material and has the object-side surface and the image-side surface being both aspheric. The object-side surface of the first lens element E1 has one inflection point in an off-axis region thereof. The image-side surface of the first lens element E1 has one inflection point in an off-axis region thereof. The object-side surface of the first lens element E1 has one critical point in the off-axis region thereof.

The second lens element E2 with positive refractive power has an object-side surface being convex in a paraxial region thereof and an image-side surface being convex in a paraxial region thereof. The second lens element E2 is made of plastic material and has the object-side surface and the image-side surface being both aspheric. The object-side surface of the second lens element E2 has one inflection point in an off-axis region thereof.

The third lens element E3 with negative refractive power has an object-side surface being concave in a paraxial region thereof and an image-side surface being concave in a paraxial region thereof. The third lens element E3 is made of

24

plastic material and has the object-side surface and the image-side surface being both aspheric.

The fourth lens element E4 with positive refractive power has an object-side surface being convex in a paraxial region thereof and an image-side surface being convex in a paraxial region thereof. The fourth lens element E4 is made of plastic material and has the object-side surface and the image-side surface being both aspheric. The image-side surface of the fourth lens element E4 has one inflection point in an off-axis region thereof.

The fifth lens element E5 with positive refractive power has an object-side surface being convex in a paraxial region thereof and an image-side surface being convex in a paraxial region thereof. The fifth lens element E5 is made of plastic material and has the object-side surface and the image-side surface being both aspheric. The object-side surface of the fifth lens element E5 has two inflection points in an off-axis region thereof. The image-side surface of the fifth lens element E5 has one inflection point in an off-axis region thereof. The object-side surface of the fifth lens element E5 has one critical point in the off-axis region thereof.

The sixth lens element E6 with negative refractive power has an object-side surface being concave in a paraxial region thereof and an image-side surface being convex in a paraxial region thereof. The sixth lens element E6 is made of plastic material and has the object-side surface and the image-side surface being both aspheric. The object-side surface of the sixth lens element E6 has one inflection point in an off-axis region thereof. The image-side surface of the sixth lens element E6 has one inflection point in an off-axis region thereof. The image-side surface of the sixth lens element E6 has one critical point in the off-axis region thereof.

The seventh lens element E7 with positive refractive power has an object-side surface being convex in a paraxial region thereof and an image-side surface being concave in a paraxial region thereof. The seventh lens element E7 is made of plastic material and has the object-side surface and the image-side surface being both aspheric. The object-side surface of the seventh lens element E7 has one inflection point in an off-axis region thereof. The image-side surface of the seventh lens element E7 has three inflection points in an off-axis region thereof. The object-side surface of the seventh lens element E7 has one critical point in the off-axis region thereof. The image-side surface of the seventh lens element E7 has one critical point in the off-axis region thereof.

The eighth lens element E8 with negative refractive power has an object-side surface being convex in a paraxial region thereof and an image-side surface being concave in a paraxial region thereof. The eighth lens element E8 is made of plastic material and has the object-side surface and the image-side surface being both aspheric. The object-side surface of the eighth lens element E8 has one inflection point in an off-axis region thereof. The image-side surface of the eighth lens element E8 has one inflection point in an off-axis region thereof. The object-side surface of the eighth lens element E8 has one critical point in the off-axis region thereof. The image-side surface of the eighth lens element E8 has one critical point in the off-axis region thereof.

The filter E9 is made of glass material and located between the eighth lens element E8 and the image surface IMG, and will not affect the focal length of the optical imaging capturing lens assembly. The image sensor IS is disposed on or near the image surface IMG of the optical imaging capturing lens assembly.

The detailed optical data of the 5th embodiment are shown in Table 9 and the aspheric surface data are shown in Table 10 below.

| TABLE 9 | | | | | | | | |
|---|---|---|---|---|---|---|---|---|
| 5th Embodiment | | | | | | | | |
| f = 1.80 mm, Fno = 2.17, HFOV = 59.9 deg. | | | | | | | | |
| Surface # | | Curvature Radius | | Thickness | Material | Index | Abbe # | Focal Length |
| 0 | Object | Plano | | Infinity | | | | |
| 1 | Lens 1 | -4.5867 | (ASP) | 0.481 | Plastic | 1.545 | 56.1 | -2.45 |
| 2 | | 1.9543 | (ASP) | 0.791 | | | | |
| 3 | Lens 2 | 3.2939 | (ASP) | 0.508 | Plastic | 1.639 | 23.5 | 4.41 |
| 4 | | -18.2374 | (ASP) | 0.084 | | | | |
| 5 | Lens 3 | -129.5242 | (ASP) | 0.502 | Plastic | 1.680 | 18.2 | -8.21 |
| 6 | | 5.8446 | (ASP) | 0.220 | | | | |
| 7 | Ape. Stop | Plano | | -0.063 | | | | |
| 8 | Lens 4 | 2.4211 | (ASP) | 0.541 | Plastic | 1.544 | 56.0 | 2.89 |
| 9 | | -4.1286 | (ASP) | 0.154 | | | | |
| 10 | Lens 5 | 4.7658 | (ASP) | 0.593 | Plastic | 1.544 | 56.0 | 3.70 |

(continued)

| TABLE 9 | | | | | | | |
|---|---|---|---|---|---|---|---|
| 5th Embodiment | | | | | | | |
| f = 1.80 mm, Fno = 2.17, HFOV = 59.9 deg. | | | | | | | |
| Surface # | | Curvature Radius | | Thickness | Material | Index | Abbe # | Focal Length |
| 11 | | -3.3296 | (ASP) | 0.207 | | | | |
| 12 | Lens 6 | -0.8480 | (ASP) | 0.365 | Plastic | 1.614 | 25.6 | -2.41 |
| 13 | | -2.3076 | (ASP) | 0.077 | | | | |
| 14 | Lens 7 | 1.4540 | (ASP) | 0.852 | Plastic | 1.544 | 56.0 | 2.70 |
| 15 | | 98.5015 | (ASP) | 0.182 | | | | |
| 16 | Lens 8 | 1.8587 | (ASP) | 0.480 | Plastic | 1.669 | 19.5 | -10.34 |
| 17 | | 1.3135 | (ASP) | 0.500 | | | | |
| 18 | Filter | Plano | | 0.210 | Glass | 1.517 | 64.2 | - |
| 19 | | Plano | | 0.311 | | | | |
| 20 | Image | Plano | | - | | | | |
| Note: Reference wavelength is 587.6 nm (d-line). | | | | | | | |

| TABLE 10 | | | | |
|---|---|---|---|---|
| Aspheric Coefficients | | | | |
| Surface # | 1 | 2 | 3 | 4 |
| k = | -9.60225E+01 | 8.59749E-02 | -3.42671E+01 | 9.90000E+01 |
| A4 = | 7.91047E-02 | 2.01678E-01 | 8.36402E-02 | -1.19967E-14 |
| A6 = | -3.80793E-02 | -1.45427E-01 | -1.02175E-01 | 8.01697E-14 |
| A8 = | 1.19863E-02 | 2.16337E-01 | 7.64080E-02 | -2.04991E-13 |
| A10 = | -2.48412E-03 | -2.83831E-01 | -2.17303E-02 | 2.52540E-13 |
| A12 = | 3.17223E-04 | 2.16703E-01 | -5.72565E-03 | -1.50560E-13 |
| A14 = | -2.22937E-05 | -8.24498E-02 | 2.51371E-03 | 3.48715E-14 |
| A16 = | 6.62640E-07 | 1.17835E-02 | - | - |
| Surface # | 5 | 6 | 8 | 9 |
| k = | -9.90000E+01 | -6.88789E+01 | -2.57816E+00 | -6.45393E+00 |
| A4 = | 4.43321E-15 | -2.69298E-03 | -5.46049E-02 | -4.26445E-01 |
| A6 = | -8.94099E-14 | 3.27249E-01 | -3.15374E-01 | 4.99974E-01 |
| A8 = | 4.24404E-13 | -1.44840E+00 | 2.96883E+00 | -1.34475E+00 |
| A10 = | -8.26715E-13 | 5.06820E+00 | -1.05908E+01 | 5.57330E+00 |
| A12 = | 7.20250E-13 | -8.72934E+00 | 1.80630E+01 | -1.36474E+01 |
| A14 = | -2.32876E-13 | 6.15862E+00 | -1.16535E+01 | 1.62566E+01 |
| A16 = | - | - | - | -7.12484E+00 |
| Surface # | 10 | 11 | 12 | 13 |
| k = | -1.33474E+01 | -3.64062E+00 | -1.12587E+00 | -2.29749E+01 |
| A4 = | -4.43229E-01 | -3.05854E-02 | 7.74001E-01 | -2.67458E-02 |
| A6 = | 8.01191E-01 | -4.32561E-01 | -2.71797E+00 | -3.86601E-01 |

(continued)

| Surface # | 10 | 11 | 12 | 13 |
|---|---|---|---|---|
| A8 = | -3.27176E+00 | -3.03947E-01 | 8.50348E+00 | 1.63051E+00 |
| A10 = | 1.06676E+01 | 2.88652E+00 | -2.58897E+01 | -3.11687E+00 |
| A12 = | -1.85335E+01 | -5.30611E+00 | 6.10630E+01 | 3.73448E+00 |
| A14 = | 1.56957E+01 | 3.90774E+00 | -9.60036E+01 | -2.98588E+00 |
| A16 = | -5.05884E+00 | -9.47797E-01 | 9.05681E+01 | 1.55406E+00 |
| A18 = | - | - | -4.55851E+01 | -4.71373E-01 |
| A20 = | - | - | 9.34447E+00 | 6.23496E-02 |
| Surface # | 14 | 15 | 16 | 17 |
| k = | -5.98336E-01 | 0.00000E+00 | -5.86009E-01 | -9.01783E-01 |
| A4 = | -3.70182E-01 | -1.38207E-01 | -4.15991E-01 | -4.31078E-01 |
| A6 = | 3.73673E-01 | 7.62302E-02 | 1.08344E-01 | 3.09140E-01 |
| A8 = | -3.64905E-01 | -1.28871E-02 | 1.81265E-01 | -1.50732E-01 |
| A10 = | 2.96442E-01 | 1.28888E-02 | -2.31436E-01 | 4.84085E-02 |
| A12 = | -1.82960E-01 | -1.60765E-02 | 1.30724E-01 | -1.03135E-02 |
| A14 = | 7.69193E-02 | 8.11293E-03 | -4.20858E-02 | 1.45997E-03 |
| A16 = | -2.01416E-02 | -2.05070E-03 | 7.86708E-03 | -1.35592E-04 |
| A18 = | 2.91819E-03 | 2.60348E-04 | -7.91342E-04 | 7.75094E-06 |
| A20 = | -1.77244E-04 | -1.32251E-05 | 3.30136E-05 | -2.12309E-07 |

In the 5th embodiment, the equation of the aspheric surface profiles of the aforementioned lens elements is the same as the equation of the 1st embodiment. Also, the definitions of these parameters shown in the following table are the same as those stated in the 1st embodiment with corresponding values for the 5th embodiment, so an explanation in this regard will not be provided again.

Moreover, these parameters can be calculated from Table 9 and Table 10 as the following values and satisfy the following conditions:

| 5th Embodiment | | | |
|---|---|---|---|
| f [mm] | 1.80 | R11/f | -0.47 |
| Fno | 2.17 | R12/R13 | -1.59 |
| HFOV [deg.] | 59.9 | (f6+f8)/f7 | -4.72 |
| V2+V6+V8 | 68.5 | f/f1 | -0.73 |
| min(Vi/Ni) | 10.81 | f/f2 | 0.41 |
| (CT4+CT5+CT6+CT7+CT8)/(T45+T56+T67+T78) | 4.57 | \|f/f3\| | 0.22 |
| (T12+T23)/(T34+T45+T56+T67+T78) | 1.13 | \|f/f4\| | 0.62 |
| CT1/CT3 | 0.96 | \|f/f5\| | 0.49 |
| CT2/CT3 | 1.01 | f/f6 | -0.74 |
| CT2/T34 | 3.24 | f/f7 | 0.66 |
| CT5/T34 | 3.78 | f/f8 | -0.17 |
| CT8/CT6 | 1.32 | f/CT5 | 3.03 |
| T12/(T67+T78) | 3.05 | f/f3+f/f4+f/f5 | 0.89 |
| TD/CT8 | 12.45 | f2/CT2 | 8.68 |

(continued)

| 5th Embodiment | | | |
|---|---|---|---|
| TL/EPD | 8.45 | f2/f1 | -1.80 |
| TL/f | 3.90 | f6/CT6 | -6.61 |
| TL/ImgH | 2.33 | \|Dist\|max [%] | 3.43 |
| ΣAT/T34 | 10.52 | Y11/Y82 | 1.02 |
| ΣAT/ΣCT | 0.38 | Yc81/Y81 | 0.36 |
| \|R12/f\| | 1.29 | Yc82/Y82 | 0.57 |

## 6th Embodiment

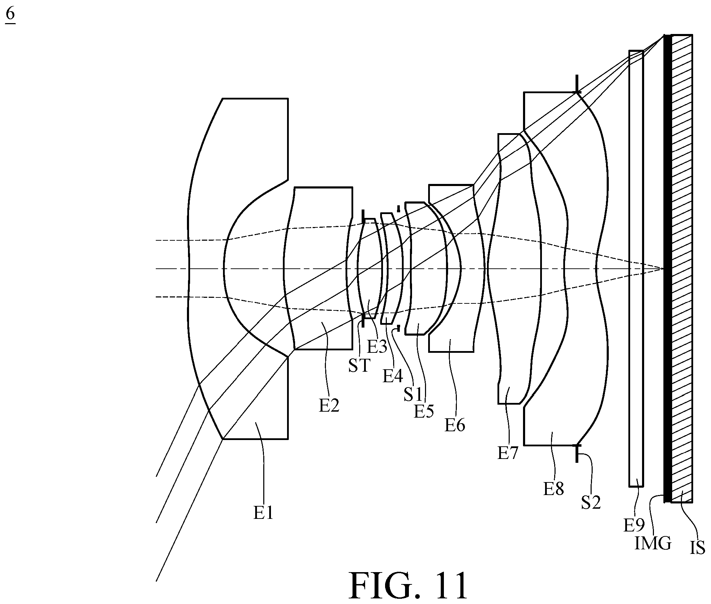

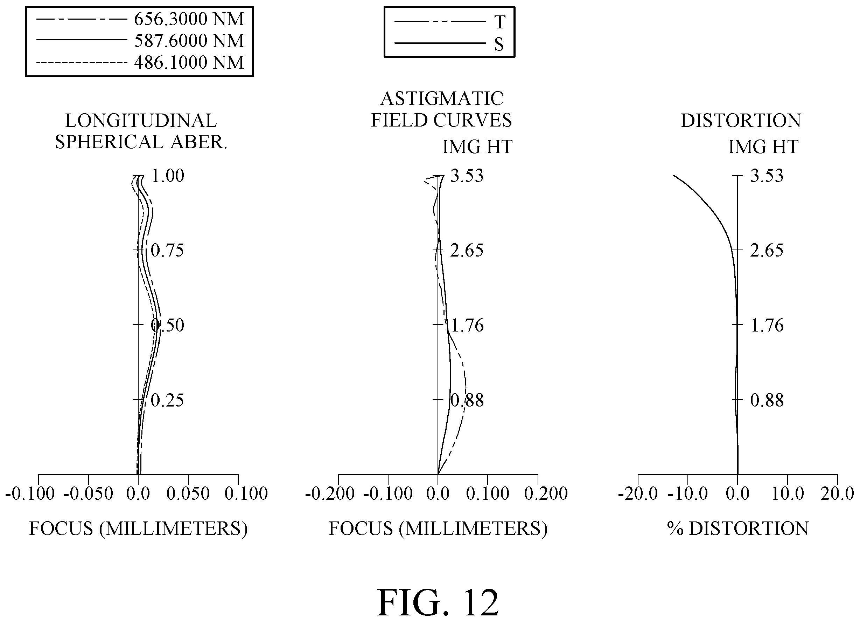

Fig. 11 is a schematic view of an image capturing unit according to the 6th embodiment of the present disclosure. Fig. 12 shows, in order from left to right, spherical aberration curves, astigmatic field curves and a distortion curve of the image capturing unit according to the 6th embodiment. In Fig. 11, the image capturing unit 6 includes the optical imaging capturing lens assembly (its reference numeral is omitted) of the present disclosure and an image sensor IS. The optical imaging capturing lens assembly includes, in order from an object side to an image side along an optical axis, a first lens element E1, a second lens element E2, an aperture stop ST, a third lens element E3, a fourth lens element E4, a stop S1, a fifth lens element E5, a sixth lens element E6, a seventh lens element E7, an eighth lens element E8, a stop S2, a filter E9 and an image surface IMG. The optical imaging capturing lens assembly includes eight lens elements (E1, E2, E3, E4, E5, E6, E7 and E8) with no additional lens element disposed between each of the adjacent eight lens elements.

The first lens element E1 with negative refractive power has an object-side surface being concave in a paraxial region thereof and an image-side surface being concave in a paraxial region thereof. The first lens element E1 is made of plastic material and has the object-side surface and the image-side surface being both aspheric. The object-side surface of the first lens element E1 has one inflection point in an off-axis region thereof. The image-side surface of the first lens element E1 has one inflection point in an off-axis region thereof. The object-side surface of the first lens element E1 has one critical point in the off-axis region thereof.

The second lens element E2 with positive refractive power has an object-side surface being convex in a paraxial region thereof and an image-side surface being concave in a paraxial region thereof. The second lens element E2 is made of plastic material and has the object-side surface and the image-side surface being both aspheric. The object-side surface of the second lens element E2 has one inflection point in an off-axis region thereof. The object-side surface of the second lens element E2 has one critical point in the off-axis region thereof.

The third lens element E3 with positive refractive power has an object-side surface being convex in a paraxial region thereof and an image-side surface being convex in a paraxial region thereof. The third lens element E3 is made of plastic material and has the object-side surface and the image-side surface being both aspheric. The image-side surface of the third lens element E3 has one inflection point in an off-axis region thereof.

The fourth lens element E4 with negative refractive power has an object-side surface being concave in a paraxial region thereof and an image-side surface being convex in a paraxial region thereof. The fourth lens element E4 is made of plastic material and has the object-side surface and the image-side surface being both aspheric. The object-side surface of the fourth lens element E4 has one inflection point in an off-axis region thereof. The image-side surface of the fourth lens element E4 has two inflection points in an off-axis region thereof.

The fifth lens element E5 with positive refractive power has an object-side surface being convex in a paraxial region thereof and an image-side surface being convex in a paraxial region thereof. The fifth lens element E5 is made of plastic material and has the object-side surface and the image-side surface being both aspheric. The object-side surface of the fifth lens element E5 has two inflection points in an off-axis region thereof. The image-side surface of the fifth lens element E5 has one inflection point in an off-axis region thereof. The object-side surface of the fifth lens element E5 has one critical point in the off-axis region thereof.

The sixth lens element E6 with negative refractive power has an object-side surface being concave in a paraxial region thereof and an image-side surface being convex in a paraxial region thereof. The sixth lens element E6 is made of plastic material and has the object-side surface and the image-side surface being both aspheric. The object-side surface of the sixth lens element E6 has one inflection point in an off-axis region thereof. The image-side surface of the sixth lens element E6 has one inflection point in an off-axis region thereof. The image-side surface of the sixth lens element E6 has one critical point in the off-axis region thereof.

The seventh lens element E7 with positive refractive power has an object-side surface being convex in a paraxial region thereof and an image-side surface being convex in a paraxial region thereof. The seventh lens element E7 is made of plastic material and has the object-side surface and the image-side surface being both aspheric. The object-side surface of the seventh lens element E7 has one inflection point in an off-axis region thereof. The image-side surface of the seventh lens element E7 has two inflection points in an off-axis region thereof. The object-side surface of the seventh lens element E7 has one critical point in the off-axis region thereof.

The eighth lens element E8 with negative refractive power has an object-side surface being convex in a paraxial region thereof and an image-side surface being concave in a paraxial region thereof. The eighth lens element E8 is made of plastic material and has the object-side surface and the image-side surface being both aspheric. The object-side surface of the eighth lens element E8 has two inflection points in an off-axis region thereof. The image-side surface of the eighth lens element E8 has three inflection points in an off-axis region thereof. The object-side surface of the eighth lens element E8 has one critical point in the off-axis region thereof. The image-side surface of the eighth lens element E8 has one critical point in the off-axis region thereof.

The filter E9 is made of glass material and located between the stop S2 and the image surface IMG, and will not affect the focal length of the optical imaging capturing lens assembly. The image sensor IS is disposed on or near the image surface IMG of the optical imaging capturing lens assembly.

The detailed optical data of the 6th embodiment are shown in Table 11 and the aspheric surface data are shown in Table 12 below.

| TABLE 11 | | | | | | | | |
|---|---|---|---|---|---|---|---|---|
| 6th Embodiment | | | | | | | | |
| f = 1.89 mm, Fno = 2.21, HFOV = 65.0 deg. | | | | | | | | |
| Surface # | | Curvature Radius | | Thickness | Material | Index | Abbe # | Focal Length |
| 0 | Object | Plano | | Infinity | | | | |
| 1 | Lens 1 | -5.0567 | (ASP) | 0.522 | Plastic | 1.544 | 56.0 | -2.56 |
| 2 | | 1.9896 | (ASP) | 0.909 | | | | |
| 3 | Lens 2 | 2.9895 | (ASP) | 0.950 | Plastic | 1.614 | 25.6 | 11.96 |
| 4 | | 4.4311 | (ASP) | 0.251 | | | | |
| 5 | Ape. Stop | Plano | | -0.082 | | | | |
| 6 | Lens 3 | 2.4838 | (ASP) | 0.372 | Plastic | 1.534 | 56.0 | 2.51 |
| 7 | | -2.7609 | (ASP) | 0.083 | | | | |
| 8 | Lens 4 | -3.6670 | (ASP) | 0.230 | Plastic | 1.544 | 56.0 | -72.48 |
| 9 | | -4.1323 | (ASP) | -0.066 | | | | |
| 10 | Stop | Plano | | 0.184 | | | | |
| 11 | Lens 5 | 5.2558 | (ASP) | 0.550 | Plastic | 1.544 | 56.0 | 3.94 |
| 12 | | -3.4854 | (ASP) | 0.207 | | | | |
| 13 | Lens 6 | -0.8964 | (ASP) | 0.365 | Plastic | 1.650 | 21.8 | -2.37 |
| 14 | | -2.4853 | (ASP) | 0.049 | | | | |
| 15 | Lens 7 | 1.5753 | (ASP) | 0.799 | Plastic | 1.544 | 56.0 | 2.83 |
| 16 | | -56.8932 | (ASP) | 0.348 | | | | |
| 17 | Lens 8 | 1.9038 | (ASP) | 0.486 | Plastic | 1.614 | 25.6 | -10.21 |
| 18 | | 1.3185 | (ASP) | -0.292 | | | | |
| 19 | Stop | Plano | | 0.792 | | | | |
| 20 | Filter | Plano | | 0.210 | Glass | 1.517 | 64.2 | - |
| 21 | | Plano | | 0.321 | | | | |
| 22 | Image | Plano | | - | | | | |
| Note: Reference wavelength is 587.6 nm (d-line). | | | | | | | | |

(continued)

| TABLE 11 | | | | | | | |
|---|---|---|---|---|---|---|---|
| 6th Embodiment | | | | | | | |
| f = 1.89 mm, Fno = 2.21, HFOV = 65.0 deg. | | | | | | | |
| Surface # | | Curvature Radius | Thickness | Material | Index | Abbe # | Focal Length |
| An effective radius of the stop S1 (Surface 10) is 0.870 mm. | | | | | | | |
| An effective radius of the stop S2 (Surface 19) is 2.670 mm. | | | | | | | |

| TABLE 12 | | | | |
|---|---|---|---|---|
| Aspheric Coefficients | | | | |
| Surface # | 1 | 2 | 3 | 4 |
| k = | -9.90000E+01 | 5.20833E-01 | -3.29131E+01 | -4.26885E+01 |
| A4 = | 8.20002E-02 | 2.06961E-01 | 1.29462E-01 | 4.38668E-02 |
| A6 = | -3.70096E-02 | -1.76277E-01 | -2.22574E-01 | 2.12662E-01 |
| A8 = | 1.14506E-02 | 3.55203E-01 | 2.70837E-01 | -1.07770E+00 |
| A10 = | -2.29625E-03 | -5.03658E-01 | -2.15608E-01 | 3.31822E+00 |
| A12 = | 2.79881E-04 | 4.02103E-01 | 8.50662E-02 | -5.02086E+00 |
| A14 = | -1.87779E-05 | -1.56902E-01 | -1.29462E-02 | 3.21097E+00 |
| A16 = | 5.34099E-07 | 2.24006E-02 | - | - |
| Surface # | 6 | 7 | 8 | 9 |
| k = | -2.68544E-02 | 4.50269E+00 | 1.00000E+01 | -2.91662E+01 |
| A4 = | -1.04920E-02 | -3.71541E-02 | -2.64559E-02 | -4.54878E-01 |
| A6 = | -8.20070E-02 | 6.15214E-01 | 3.33209E-01 | 6.79901E-01 |
| A8 = | 8.58814E-01 | -3.42292E+00 | -1.34233E+00 | -1.02275E+00 |
| A10 = | -2.58534E+00 | 9.54260E+00 | 1.57139E+00 | 1.05396E+00 |
| A12 = | 3.12657E+00 | -1.41299E+01 | 1.89718E-01 | -1.00487E+00 |
| A14 = | -8.95081E-01 | 8.86276E+00 | -7.64567E-01 | 1.96058E+00 |
| A16 = | - | - | - | -1.49058E+00 |
| Surface # | 11 | 12 | 13 | 14 |
| k = | -1.69717E+01 | -1.10031E+01 | -1.12910E+00 | -1.85665E+01 |
| A4 = | -4.63097E-01 | -3.48182E-02 | 6.59385E-01 | 4.41258E-02 |
| A6 = | 7.74299E-01 | -7.94086E-01 | -2.45669E+00 | -7.46960E-01 |
| A8 = | -2.19865E+00 | 2.19217E+00 | 7.21772E+00 | 2.47646E+00 |
| A10 = | 5.22223E+00 | -3.52260E+00 | -1.59677E+01 | -4.17227E+00 |
| A12 = | -7.16706E+00 | 2.96912E+00 | 2.60397E+01 | 4.25776E+00 |
| A14 = | 4.98740E+00 | -1.37026E+00 | -3.14112E+01 | -2.76082E+00 |
| A16 = | -1.33544E+00 | 3.35986E-01 | 2.52353E+01 | 1.12688E+00 |
| A18 = | - | - | -1.13700E+01 | -2.65847E-01 |
| A20 = | - | - | 2.11125E+00 | 2.76339E-02 |
| Surface # | 15 | 16 | 17 | 18 |
| k = | -4.92362E-01 | 0.00000E+00 | -5.77996E-01 | -9.70214E-01 |

(continued)

| Surface # | 15 | 16 | 17 | 18 |
|---|---|---|---|---|
| A4 = | -3.47594E-01 | -8.91335E-02 | -3.73955E-01 | -3.84303E-01 |
| A6 = | 2.48216E-01 | 1.07745E-02 | 1.05915E-01 | 2.60385E-01 |
| A8 = | -8.83668E-02 | -3.95279E-03 | 3.21315E-02 | -1.30452E-01 |
| A10 = | -3.57785E-02 | 3.95177E-02 | -4.48811E-02 | 4.62306E-02 |
| A12 = | 6.16976E-02 | -3.35037E-02 | 2.34192E-02 | -1.13028E-02 |
| A14 = | -3.46284E-02 | 1.24853E-02 | -7.39697E-03 | 1.85509E-03 |
| A16 = | 1.03380E-02 | -2.44512E-03 | 1.38479E-03 | -1.95217E-04 |
| A18 = | -1.63048E-03 | 2.45586E-04 | -1.37726E-04 | 1.18962E-05 |
| A20 = | 1.06536E-04 | -9.94839E-06 | 5.53339E-06 | -3.18362E-07 |

In the 6th embodiment, the equation of the aspheric surface profiles of the aforementioned lens elements is the same as the equation of the 1st embodiment. Also, the definitions of these parameters shown in the following table are the same as those stated in the 1st embodiment with corresponding values for the 6th embodiment, so an explanation in this regard will not be provided again.

Moreover, these parameters can be calculated from Table 11 and Table 12 as the following values and satisfy the following conditions:

| 6th Embodiment | | | |
|---|---|---|---|
| f [mm] | 1.89 | R11/f | -0.47 |
| Fno | 2.21 | R12/R13 | -1.58 |
| HFOV [deg.] | 65.0 | (f6+f8)/f7 | -4.44 |
| V2+V6+V8 | 73.0 | f/f1 | -0.74 |
| min(Vi/Ni) | 13.20 | f/f2 | 0.16 |
| (CT4+CT5+CT6+CT7+CT8)/(T45+T56+T67+T78) | 3.37 | \|f/f3\| | 0.75 |
| (T12+T23)/(T34+T45+T56+T67+T78) | 1.34 | \|f/f4\| | 0.03 |
| CT1/CT3 | 1.40 | \|f/f5\| | 0.48 |
| CT2/CT3 | 2.55 | f/f6 | -0.80 |
| CT2/T34 | 11.45 | f/f7 | 0.67 |
| CT5/T34 | 6.63 | f/f8 | -0.19 |
| CT8/CT6 | 1.33 | f/CT5 | 3.43 |
| T12/(T67+T78) | 2.29 | f/f3+f/f4+f/f5 | 1.21 |
| TD/CT8 | 12.67 | f2/CT2 | 12.59 |
| TL/EPD | 8.41 | f2/f1 | -4.68 |
| TL/f | 3.81 | f6/CT6 | -6.50 |
| TL/ImgH | 2.04 | \|Dist\|max [%] | 12.87 |
| ΣAT/T34 | 22.69 | Y11/Y82 | 0.96 |
| ΣAT/ΣCT | 0.44 | Yc81/Y81 | 0.32 |
| \|R12/f\| | 1.32 | Yc82/Y82 | 0.48 |

**7th Embodiment**

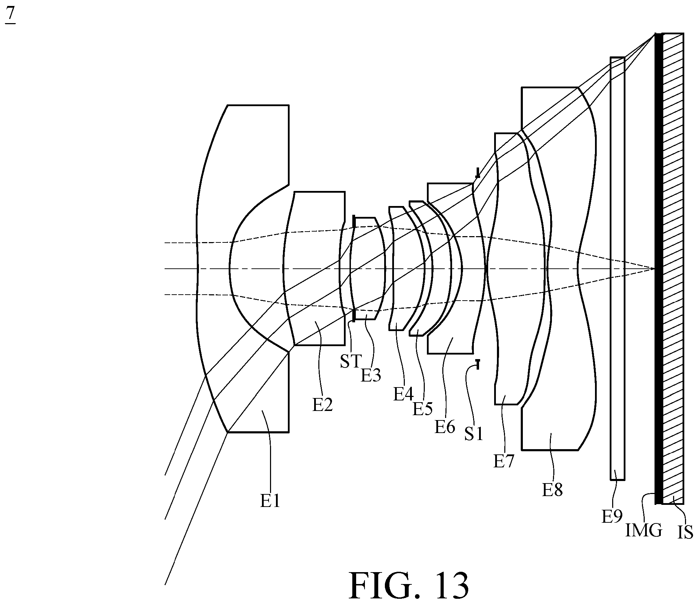

Fig. 13 is a schematic view of an image capturing unit according to the 7th embodiment of the present disclosure.

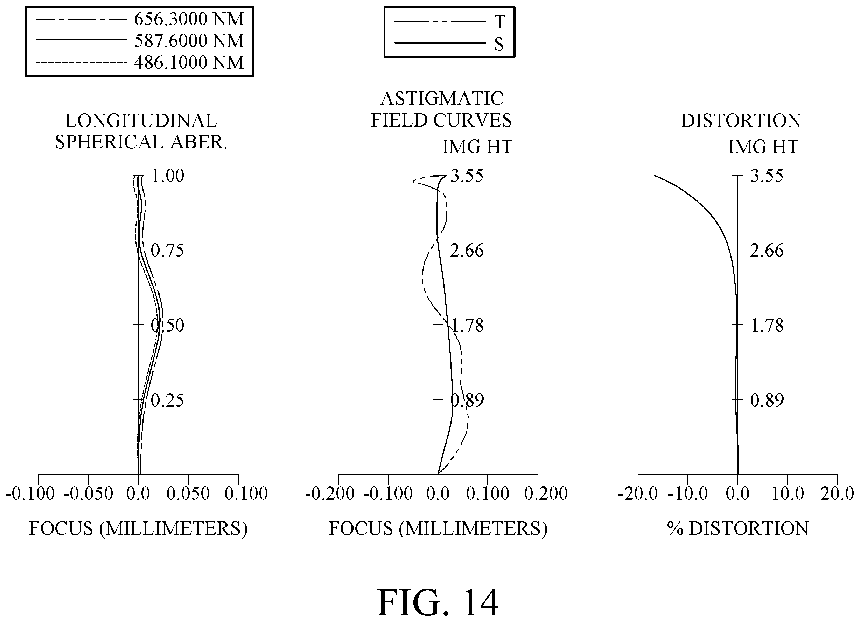

Fig. 14 shows, in order from left to right, spherical aberration curves, astigmatic field curves and a distortion curve of the image capturing unit according to the 7th embodiment. In Fig. 13, the image capturing unit 7 includes the optical imaging capturing lens assembly (its reference numeral is omitted) of the present disclosure and an image sensor IS. The optical imaging capturing lens assembly includes, in order from an object side to an image side along an optical axis, a first lens element E1, a second lens element E2, an aperture stop ST, a third lens element E3, a fourth lens element E4, a fifth lens element E5, a sixth lens element E6, a stop S1, a seventh lens element E7, an eighth lens element E8, a filter E9 and an image surface IMG. The optical imaging capturing lens assembly includes eight lens elements (E1, E2, E3, E4, E5, E6, E7 and E8) with no additional lens element disposed between each of the adjacent eight lens elements.

The first lens element E1 with negative refractive power has an object-side surface being concave in a paraxial region thereof and an image-side surface being concave in a paraxial region thereof. The first lens element E1 is made of plastic material and has the object-side surface and the image-side surface being both aspheric. The object-side surface of the first lens element E1 has one inflection point in an off-axis region thereof. The image-side surface of the first lens element E1 has one inflection point in an off-axis region thereof. The object-side surface of the first lens element E1 has one critical point in the off-axis region thereof.

The second lens element E2 with positive refractive power has an object-side surface being convex in a paraxial region thereof and an image-side surface being concave in a paraxial region thereof. The second lens element E2 is made of plastic material and has the object-side surface and the image-side surface being both aspheric. The object-side surface of the second lens element E2 has one inflection point in an off-axis region thereof.

The third lens element E3 with positive refractive power has an object-side surface being convex in a paraxial region thereof and an image-side surface being convex in a paraxial region thereof. The third lens element E3 is made of plastic material and has the object-side surface and the image-side surface being both aspheric. The image-side surface of the third lens element E3 has one inflection point in an off-axis region thereof.

The fourth lens element E4 with positive refractive power has an object-side surface being convex in a paraxial region thereof and an image-side surface being convex in a paraxial region thereof. The fourth lens element E4 is made of plastic material and has the object-side surface and the image-side surface being both aspheric. The object-side surface of the fourth lens element E4 has three inflection points in an off-axis region thereof. The image-side surface of the fourth lens element E4 has two inflection points in an off-axis region thereof. The object-side surface of the fourth lens element E4 has one critical point in the off-axis region thereof.

The fifth lens element E5 with negative refractive power has an object-side surface being concave in a paraxial region thereof and an image-side surface being convex in a paraxial region thereof. The fifth lens element E5 is made of plastic material and has the object-side surface and the image-side surface being both aspheric. The object-side surface of the fifth lens element E5 has one inflection point in an off-axis region thereof. The image-side surface of the fifth lens element E5 has one inflection point in an off-axis region thereof.

The sixth lens element E6 with negative refractive power has an object-side surface being concave in a paraxial region thereof and an image-side surface being convex in a paraxial region thereof. The sixth lens element E6 is made of plastic material and has the object-side surface and the image-side surface being both aspheric. The object-side surface of the sixth lens element E6 has one inflection point in an off-axis region thereof. The image-side surface of the sixth lens element E6 has one inflection point in an off-axis region thereof. The image-side surface of the sixth lens element E6 has one critical point in the off-axis region thereof.

The seventh lens element E7 with positive refractive power has an object-side surface being convex in a paraxial region thereof and an image-side surface being convex in a paraxial region thereof. The seventh lens element E7 is made of plastic material and has the object-side surface and the image-side surface being both aspheric. The object-side surface of the seventh lens element E7 has one inflection point in an off-axis region thereof. The image-side surface of the seventh lens element E7 has two inflection points in an off-axis region thereof. The object-side surface of the seventh lens element E7 has one critical point in the off-axis region thereof.

The eighth lens element E8 with negative refractive power has an object-side surface being convex in a paraxial region thereof and an image-side surface being concave in a paraxial region thereof. The eighth lens element E8 is made of plastic material and has the object-side surface and the image-side surface being both aspheric. The object-side surface of the eighth lens element E8 has four inflection points in an off-axis region thereof. The image-side surface of the eighth lens element E8 has one inflection point in an off-axis region thereof. The object-side surface of the eighth lens element E8 has one critical point in the off-axis region thereof. The image-side surface of the eighth lens element E8 has one critical point in the off-axis region thereof.

The filter E9 is made of glass material and located between the eighth lens element E8 and the image surface IMG, and will not affect the focal length of the optical imaging capturing lens assembly. The image sensor IS is disposed on or near the image surface IMG of the optical imaging capturing lens assembly.

The detailed optical data of the 7th embodiment are shown in Table 13 and the aspheric surface data are shown in Table 14 below.

| TABLE 13 | | | | | | | | |
|---|---|---|---|---|---|---|---|---|
| 7th Embodiment | | | | | | | | |
| f = 1.75 mm, Fno = 2.24, HFOV = 67.6 deg. | | | | | | | | |
| Surface # | | Curvature Radius | Thickness | Material | Index | Abbe # | Focal Length | |
| 0 | Object | Plano | Infinity | | | | | |
| 1 | Lens 1 | -4.7036 | (ASP) | 0.480 | Plastic | 1.545 | 56.1 | -2.37 |
| 2 | | 1.8474 | (ASP) | 0.811 | | | | |
| 3 | Lens 2 | 3.1454 | (ASP) | 0.849 | Plastic | 1.614 | 25.6 | 11.53 |
| 4 | | 5.0790 | (ASP) | 0.221 | | | | |
| 5 | Ape. Stop | Plano | | -0.057 | | | | |
| 6 | Lens 3 | 2.7249 | (ASP) | 0.533 | Plastic | 1.544 | 56.0 | 3.26 |
| 7 | | -4.7373 | (ASP) | 0.118 | | | | |
| 8 | Lens 4 | 4.5787 | (ASP) | 0.477 | Plastic | 1.544 | 56.0 | 2.25 |
| 9 | | -1.6097 | (ASP) | 0.120 | | | | |
| 10 | Lens 5 | -1.5150 | (ASP) | 0.284 | Plastic | 1.562 | 44.6 | -8.42 |
| 11 | | -2.3794 | (ASP) | 0.161 | | | | |
| 12 | Lens 6 | -0.8774 | (ASP) | 0.350 | Plastic | 1.656 | 21.3 | -2.41 |
| 13 | | -2.2788 | (ASP) | -0.110 | | | | |
| 14 | Stop | Plano | | 0.140 | | | | |
| 15 | Lens 7 | 1.4758 | (ASP) | 0.870 | Plastic | 1.544 | 56.0 | 2.57 |
| 16 | | -20.9059 | (ASP) | 0.041 | | | | |
| 17 | Lens 8 | 1.7203 | (ASP) | 0.457 | Plastic | 1.614 | 25.6 | -12.52 |
| 18 | | 1.2638 | (ASP) | 0.500 | | | | |
| 19 | Filter | Plano | | 0.210 | Glass | 1.517 | 64.2 | - |
| 20 | | Plano | | 0.466 | | | | |
| 21 | Image | Plano | | - | | | | |
| Note: Reference wavelength is 587.6 nm (d-line). | | | | | | | | |
| An effective radius of the stop S1 (Surface 14) is 1.390 mm. | | | | | | | | |

| TABLE 14 | | | | |
|---|---|---|---|---|
| Aspheric Coefficients | | | | |
| Surface # | 1 | 2 | 3 | 4 |
| k = | -9.86754E+01 | 2.53412E-01 | -3.24392E+01 | -2.33557E+01 |
| A4 = | 9.87094E-02 | 2.46755E-01 | 1.05254E-01 | -2.43690E-02 |
| A6 = | -5.17223E-02 | -2.45689E-01 | -1.75367E-01 | 8.27526E-01 |
| A8 = | 1.78863E-02 | 5.52800E-01 | 2.24765E-01 | -4.30955E+00 |
| A10 = | -3.99079E-03 | -8.82417E-01 | -1.56453E-01 | 1.49597E+01 |
| A12 = | 5.42908E-04 | 7.73584E-01 | 4.28370E-02 | -2.59662E+01 |
| A14 = | -4.06391E-05 | -3.28938E-01 | -3.15683E-03 | 1.85997E+01 |
| A16 = | 1.28482E-06 | 5.15935E-02 | - | - |

(continued)

| Surface # | 6 | 7 | 8 | 9 |
|---|---|---|---|---|
| k = | -9.44052E-01 | 3.86437E+00 | -2.10254E+01 | 4.66610E-01 |
| A4 = | -3.33482E-02 | -4.19592E-01 | -3.59327E-01 | 8.01804E-02 |
| A6 = | -3.80400E-01 | 1.90933E-01 | 3.37381E-01 | -1.68743E-02 |
| A8 = | 3.55286E+00 | 6.36671E-01 | -1.70658E+00 | -2.99020E+00 |
| A10 = | -1.35534E+01 | -2.49183E+00 | 6.70426E+00 | 1.23843E+01 |
| A12 = | 2.49334E+01 | 5.19634E+00 | -1.35677E+01 | -2.27616E+01 |
| A14 = | -1.72757E+01 | -6.71746E+00 | 1.37925E+01 | 2.02314E+01 |
| A16 = | - | 4.33908E+00 | -5.46847E+00 | -6.94909E+00 |
| Surface # | 10 | 11 | 12 | 13 |
| k = | 1.95459E-01 | -4.79938E+00 | -1.10074E+00 | -1.68768E+01 |
| A4 = | -7.57355E-03 | 3.24789E-02 | 9.11884E-01 | 1.40844E-01 |
| A6 = | 5.73626E-01 | -1.35890E+00 | -3.84637E+00 | -1.16302E+00 |
| A8 = | -4.59793E+00 | 4.42704E+00 | 1.03995E+01 | 3.22471 E+00 |
| A10 = | 1.49396E+01 | -8.27914E+00 | -1.76134E+01 | -4.82120E+00 |
| A12 = | -2.39808E+01 | 8.66156E+00 | 1.78440E+01 | 4.39637E+00 |
| A14 = | 1.86220E+01 | -5.02105E+00 | -1.16052E+01 | -2.53672E+00 |
| A16 = | -5.53266E+00 | 1.30893E+00 | 5.69723E+00 | 9.21940E-01 |
| A18 = | - | - | -2.13480E+00 | -1.96508E-01 |
| A20 = | - | - | 3.98567E-01 | 1.89842E-02 |
| Surface # | 15 | 16 | 17 | 18 |
| k = | -5.35602E-01 | 0.00000E+00 | -5.77568E-01 | -9.63344E-01 |
| A4 = | -3.59876E-01 | -1.61444E-01 | -4.44636E-01 | -3.92844E-01 |
| A6 = | 2.95378E-01 | 1.44969E-01 | 1.51970E-01 | 2.82719E-01 |
| A8 = | -2.60416E-01 | -1.71943E-01 | 8.53718E-02 | -1.37710E-01 |
| A10 = | 1.92739E-01 | 1.67668E-01 | -1.14870E-01 | 4.49744E-02 |
| A12 = | -1.05881E-01 | -9.24140E-02 | 5.67807E-02 | -9.93167E-03 |
| A14 = | 3.96907E-02 | 2.90140E-02 | -1.57070E-02 | 1.46550E-03 |
| A16 = | -9.39841E-03 | -5.21843E-03 | 2.51094E-03 | -1.38693E-04 |
| A18 = | 1.25215E-03 | 5.01114E-04 | -2.14454E-04 | 7.61885E-06 |
| A20 = | -7.14664E-05 | -1.98844E-05 | 7.50693E-06 | -1.84606E-07 |

In the 7th embodiment, the equation of the aspheric surface profiles of the aforementioned lens elements is the same as the equation of the 1st embodiment. Also, the definitions of these parameters shown in the following table are the same as those stated in the 1st embodiment with corresponding values for the 7th embodiment, so an explanation in this regard will not be provided again.

Moreover, these parameters can be calculated from Table 13 and Table 14 as the following values and satisfy the following conditions:

| 7th Embodiment | | | |
|---|---|---|---|
| f [mm] | 1.75 | R11/f | -0.50 |
| Fno | 2.24 | R12/R13 | -1.54 |

(continued)

| 7th Embodiment | | | |
|---|---|---|---|
| HFOV [deg.] | 67.6 | (f6+f8)/f7 | -5.81 |
| V2+V6+V8 | 72.4 | f/f1 | -0.74 |
| min(Vi/Ni) | 12.84 | f/f2 | 0.15 |
| (CT4+CT5+CT6+CT7+CT8)/(T45+T56+T67+T78) | 6.93 | \|f/f3\| | 0.54 |
| (T12+T23)/(T34+T45+T56+T67+T78) | 2.07 | \|f/f4\| | 0.78 |
| CT1/CT3 | 0.90 | \|f/f5\| | 0.21 |
| CT2/CT3 | 1.59 | f/f6 | -0.73 |
| CT2/T34 | 7.19 | f/f7 | 0.68 |
| CT5/T34 | 2.41 | f/f8 | -0.14 |
| CT8/CT6 | 1.31 | f/CT5 | 6.17 |
| T12/(T67+T78) | 11.42 | f/f3+f/f4+f/f5 | 1.11 |
| TD/CT8 | 12.57 | f2/CT2 | 13.58 |
| TL/EPD | 8.85 | f2/f1 | -4.86 |
| TL/f | 3.95 | f6/CT6 | -6.90 |
| TUImgH | 1.95 | \|Dist\|max [%] | 16.72 |
| ΣAT/T34 | 12.25 | Y11/Y82 | 0.90 |
| ΣAT/ΣCT | 0.34 | Yc81/Y81 | 0.32 |
| \|R12/f\| | 1.30 | Yc82/Y82 | 0.68 |

**8th Embodiment**

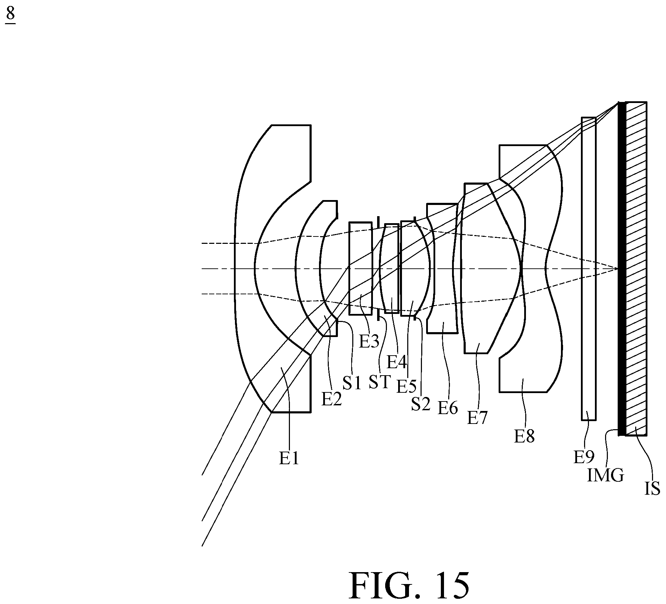

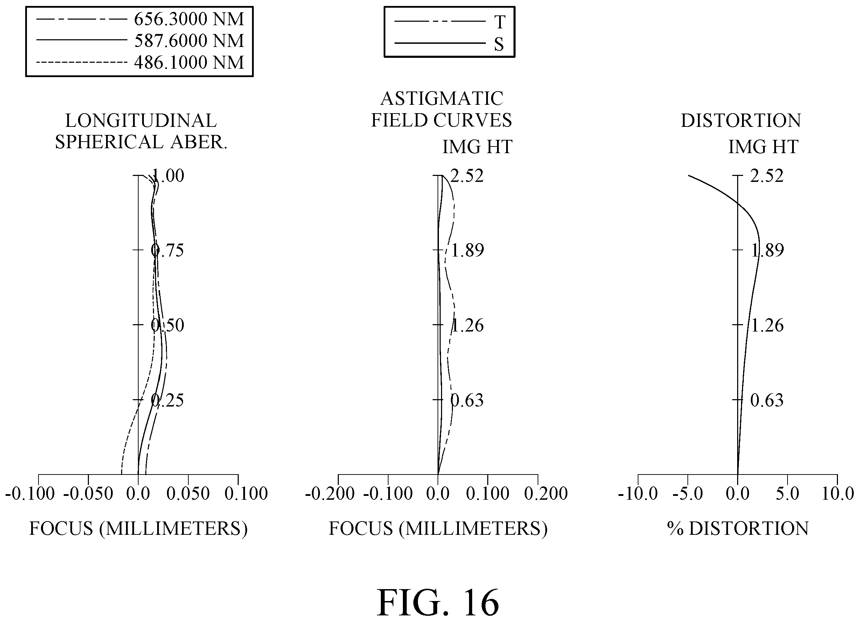

Fig. 15 is a schematic view of an image capturing unit according to the 8th embodiment of the present disclosure. Fig. 16 shows, in order from left to right, spherical aberration curves, astigmatic field curves and a distortion curve of the image capturing unit according to the 8th embodiment. In Fig. 15, the image capturing unit 8 includes the optical imaging capturing lens assembly (its reference numeral is omitted) of the present disclosure and an image sensor IS. The optical imaging capturing lens assembly includes, in order from an object side to an image side along an optical axis, a first lens element E1, a second lens element E2, a stop S1, a third lens element E3, an aperture stop ST, a fourth lens element E4, a fifth lens element E5, a stop S2, a sixth lens element E6, a seventh lens element E7, an eighth lens element E8, a filter E9 and an image surface IMG. The optical imaging capturing lens assembly includes eight lens elements (E1, E2, E3, E4, E5, E6, E7 and E8) with no additional lens element disposed between each of the adjacent eight lens elements.

The first lens element E1 with negative refractive power has an object-side surface being planar in a paraxial region thereof and an image-side surface being concave in a paraxial region thereof. The first lens element E1 is made of plastic material and has the object-side surface and the image-side surface being both aspheric. The image-side surface of the first lens element E1 has one inflection point in an off-axis region thereof.

The second lens element E2 with positive refractive power has an object-side surface being convex in a paraxial region thereof and an image-side surface being concave in a paraxial region thereof. The second lens element E2 is made of plastic material and has the object-side surface and the image-side surface being both aspheric. The object-side surface of the second lens element E2 has one inflection point in an off-axis region thereof.

The third lens element E3 with positive refractive power has an object-side surface being convex in a paraxial region thereof and an image-side surface being convex in a paraxial region thereof. The third lens element E3 is made of plastic material and has the object-side surface and the image-side surface being both aspheric. The object-side surface of the third lens element E3 has three inflection points in an off-axis region thereof. The image-side surface of the third lens element E3 has two inflection points in an off-axis region thereof. The object-side surface of the third lens element E3 has one critical point in the off-axis region thereof.

The fourth lens element E4 with positive refractive power has an object-side surface being convex in a paraxial region thereof and an image-side surface being concave in a paraxial region thereof. The fourth lens element E4 is made of plastic material and has the object-side surface and the image-side surface being both aspheric. The object-side surface of the fourth lens element E4 has one inflection point in an off-axis region thereof. The image-side surface of the fourth lens element E4 has three inflection points in an off-axis region thereof. The image-side surface of the fourth lens element E4 has one critical point in the off-axis region thereof.

The fifth lens element E5 with positive refractive power has an object-side surface being convex in a paraxial region thereof and an image-side surface being convex in a paraxial region thereof. The fifth lens element E5 is made of plastic material and has the object-side surface and the image-side surface being both aspheric. The object-side surface of the fifth lens element E5 has two inflection points in an off-axis region thereof. The object-side surface of the fifth lens element E5 has two critical points in the off-axis region thereof.

The sixth lens element E6 with negative refractive power has an object-side surface being convex in a paraxial region thereof and an image-side surface being concave in a paraxial region thereof. The sixth lens element E6 is made of plastic material and has the object-side surface and the image-side surface being both aspheric. The object-side surface of the sixth lens element E6 has one inflection point in an off-axis region thereof. The image-side surface of the sixth lens element E6 has two inflection points in an off-axis region thereof. The object-side surface of the sixth lens element E6 has one critical point in the off-axis region thereof.

The seventh lens element E7 with positive refractive power has an object-side surface being concave in a paraxial region thereof and an image-side surface being convex in a paraxial region thereof. The seventh lens element E7 is made of plastic material and has the object-side surface and the image-side surface being both aspheric. The object-side surface of the seventh lens element E7 has two inflection points in an off-axis region thereof. The image-side surface of the seventh lens element E7 has two inflection points in an off-axis region thereof. The object-side surface of the seventh lens element E7 has one critical point in the off-axis region thereof.

The eighth lens element E8 with negative refractive power has an object-side surface being convex in a paraxial region thereof and an image-side surface being concave in a paraxial region thereof. The eighth lens element E8 is made of plastic material and has the object-side surface and the image-side surface being both aspheric. The object-side surface of the eighth lens element E8 has one inflection point in an off-axis region thereof. The image-side surface of the eighth lens element E8 has one inflection point in an off-axis region thereof. The object-side surface of the eighth lens element E8 has one critical point in the off-axis region thereof. The image-side surface of the eighth lens element E8 has one critical point in the off-axis region thereof.

The filter E9 is made of glass material and located between the eighth lens element E8 and the image surface IMG, and will not affect the focal length of the optical imaging capturing lens assembly. The image sensor IS is disposed on or near the image surface IMG of the optical imaging capturing lens assembly.

The detailed optical data of the 8th embodiment are shown in Table 15 and the aspheric surface data are shown in Table 16 below.

| TABLE 15 | | | | | | | |
|---|---|---|---|---|---|---|---|
| 8th Embodiment | | | | | | | |
| f = 1.38 mm, Fno = 1.80, HFOV = 62.4 deg. | | | | | | | |
| Surface # | | Curvature Radius | | Thickness | Material | Index | Abbe # | Focal Length |
| 0 | Object | Plano | | Infinity | | | | |
| 1 | Lens 1 | ∞ | (ASP) | 0.300 | Plastic | 1.544 | 56.0 | -2.19 |
| 2 | | 1.1920 | (ASP) | 0.618 | | | | |
| 3 | Lens 2 | 1.6370 | (ASP) | 0.369 | Plastic | 1.642 | 22.5 | 7.75 |
| 4 | | 2.2260 | (ASP) | 0.257 | | | | |
| 5 | Stop | Plano | | 0.187 | | | | |
| 6 | Lens 3 | 208.2973 | (ASP) | 0.351 | Plastic | 1.669 | 19.5 | 11.33 |
| 7 | | -7.8598 | (ASP) | 0.090 | | | | |
| 8 | Ape. Stop | Plano | | 0.020 | | | | |
| 9 | Lens 4 | 3.2374 | (ASP) | 0.279 | Plastic | 1.544 | 56.0 | 6.21 |
| 10 | | 74.6794 | (ASP) | 0.040 | | | | |
| 11 | Lens 5 | 113.6519 | (ASP) | 0.439 | Plastic | 1.544 | 56.0 | 2.50 |
| 12 | | -1.3765 | (ASP) | -0.230 | | | | |
| 13 | Stop | Plano | | 0.296 | | | | |

(continued)

| TABLE 15 | | | | | | | |
|---|---|---|---|---|---|---|---|
| 8th Embodiment | | | | | | | |
| f = 1.38 mm, Fno = 1.80, HFOV = 62.4 deg. | | | | | | | |
| Surface # | | Curvature Radius | | Thickness | Material | Index | Abbe # | Focal Length |
| 14 | Lens 6 | 5.1517 | (ASP) | 0.286 | Plastic | 1.669 | 19.5 | -4.65 |
| 15 | | 1.8974 | (ASP) | 0.125 | | | | |
| 16 | Lens 7 | -12.9910 | (ASP) | 0.892 | Plastic | 1.544 | 56.0 | 1.55 |
| 17 | | -0.8098 | (ASP) | 0.020 | | | | |
| 18 | Lens 8 | 2.0620 | (ASP) | 0.358 | Plastic | 1.614 | 25.6 | -2.10 |
| 19 | | 0.7421 | (ASP) | 0.550 | | | | |
| 20 | Filter | Plano | | 0.210 | Glass | 1.517 | 64.2 | - |
| 21 | | Plano | | 0.346 | | | | |
| 22 | Image | Plano | | - | | | | |
| Note: Reference wavelength is 587.6 nm (d-line). | | | | | | | | |
| An effective radius of the stop S1 (Surface 5) is 0.765 mm. | | | | | | | | |
| An effective radius of the stop S2 (Surface 13) is 0.715 mm. | | | | | | | | |

| TABLE 16 | | | | |
|---|---|---|---|---|
| Aspheric Coefficients | | | | |
| Surface # | 1 | 2 | 3 | 4 |
| k = | 0.00000E+00 | -6.70078E-01 | 0.00000E+00 | 5.05252E+00 |
| A4 = | 3.99532E-02 | -5.63417E-02 | -2.95836E-02 | 1.67009E-01 |
| A6 = | -6.63837E-03 | 5.35072E-02 | 4.82712E-02 | -5.11251E-01 |
| A8 = | 1.18066E-03 | -1.05566E-02 | 3.09308E-01 | 3.78193E+00 |
| A10 = | -8.53306E-05 | 2.26146E-02 | -5.30144E-01 | -9.61079E+00 |
| A12 = | -2.24680E-05 | -1.20763E-02 | 3.69921E-01 | 1.18061E+01 |
| A14 = | 6.95374E-06 | -2.04993E-03 | -1.15387E-01 | -5.53122E+00 |
| A16 = | -5.42748E-07 | 1.02626E-03 | - | - |
| Surface # | 6 | 7 | 9 | 10 |
| k = | 9.00000E+01 | 5.36053E+00 | 1.64135E+01 | 9.00000E+01 |
| A4 = | -7.93162E-02 | 1.09246E-01 | 1.02894E-01 | 1.27607E-01 |
| A6 = | 1.83677E+00 | 1.27281E+00 | 9.70556E-02 | -3.39695E+00 |
| A8 = | -1.52427E+01 | -1.56754E+01 | -1.35518E+00 | 3.23189E+01 |
| A10 = | 6.95294E+01 | 9.19747E+01 | 1.41915E+00 | -1.59091E+02 |
| A12 = | -1.80797E+02 | -2.98955E+02 | 4.83317E+00 | 4.28054E+02 |
| A14 = | 2.48987E+02 | 5.06102E+02 | -1.27721E+01 | -5.89534E+02 |
| A16 = | -1.41302E+02 | -3.49736E+02 | - | 3.22698E+02 |
| Surface # | 11 | 12 | 14 | 15 |
| k = | -9.00000E+01 | -7.21303E+00 | 6.15977E+00 | 1.91063E+00 |
| A4 = | 1.81749E-01 | -8.26699E-01 | -1.05278E+00 | -6.16432E-01 |

(continued)

| Surface # | 11 | 12 | 14 | 15 |
|---|---|---|---|---|
| A6 = | -3.31714E+00 | 3.37632E+00 | 3.11348E+00 | 8.96261E-01 |
| A8 = | 2.90638E+01 | -9.23210E+00 | -7.42737E+00 | -1.56035E+00 |
| A10 = | -1.35735E+02 | 1.03413E+01 | 9.64929E+00 | 2.29307E+00 |
| A12 = | 3.42391 E+02 | 3.47607E+00 | -6.12616E+00 | -2.25984E+00 |
| A14 = | -4.42465E+02 | -2.08473E+01 | 1.07694E+00 | 1.30954E+00 |
| A16 = | 2.30949E+02 | 1.55803E+01 | 2.38952E-01 | -3.51669E-01 |
| Surface # | 16 | 17 | 18 | 19 |
| k = | -1.45802E+01 | -5.48347E+00 | 6.96771E-01 | -6.03879E+00 |
| A4 = | 2.78022E-01 | -1.77916E-01 | -4.05002E-01 | -1.24189E-01 |
| A6 = | -6.70119E-01 | 4.18872E-01 | 2.98532E-01 | 5.17083E-02 |
| A8 = | 9.15685E-01 | -5.42524E-01 | -3.24906E-01 | -2.13374E-02 |
| A10 = | -5.87874E-01 | 4.32352E-01 | 2.14617E-01 | 9.69087E-03 |
| A12 = | 1.00820E-01 | -1.90378E-01 | -6.12671E-02 | -3.48956E-03 |
| A14 = | 5.90106E-02 | 3.55675E-02 | -6.29283E-03 | 6.50668E-04 |
| A16 = | -2.22570E-02 | -9.29808E-04 | 4.71711E-03 | -4.60713E-05 |

In the 8th embodiment, the equation of the aspheric surface profiles of the aforementioned lens elements is the same as the equation of the 1st embodiment. Also, the definitions of these parameters shown in the following table are the same as those stated in the 1st embodiment with corresponding values for the 8th embodiment, so an explanation in this regard will not be provided again.

Moreover, these parameters can be calculated from Table 15 and Table 16 as the following values and satisfy the following conditions:

| 8th Embodiment | | | | |
|---|---|---|---|---|
| f [mm] | 1.38 | R11/f | 3.74 |
| Fno | 1.80 | R12/R13 | -0.15 |
| HFOV [deg.] | 62.4 | (f6+f8)/f7 | -4.37 |
| V2+V6+V8 | 67.5 | f/f1 | -0.63 |
| min(Vi/Ni) | 11.65 | f/f2 | 0.18 |
| (CT4+CT5+CT6+CT7+CT8)/(T45+T56+T67+T78) | 8.98 | \|f/f3\| | 0.12 |
| (T12+T23)/(T34+T45+T56+T67+T78) | 2.94 | \|f/f4\| | 0.22 |
| CT1/CT3 | 0.85 | \|f/f5\| | 0.55 |
| CT2/CT3 | 1.05 | f/f6 | -0.30 |
| CT2/T34 | 3.35 | f/f7 | 0.89 |
| CT5/T34 | 3.99 | f/f8 | -0.65 |
| CT8/CT6 | 1.25 | f/CT5 | 3.14 |
| T12/(T67+T78) | 4.26 | f/f3+f/f4+f/f5 | 0.89 |
| TD/CT8 | 13.12 | f2/CT2 | 20.99 |
| TL/EPD | 7.59 | f2/f1 | -3.53 |
| TL/f | 4.21 | f6/CT6 | -16.27 |
| TL/ImgH | 2.30 | \|Dist\|max [%] | 4.94 |

(continued)

| 8th Embodiment | | | |
|---|---|---|---|
| $\Sigma AT/T34$ | 12.94 | Y11/Y82 | 1.16 |
| $\Sigma AT/\Sigma CT$ | 0.43 | Yc81/Y81 | 0.50 |
| \|R12/f\| | 1.38 | Yc82/Y82 | 0.65 |

## 9th Embodiment

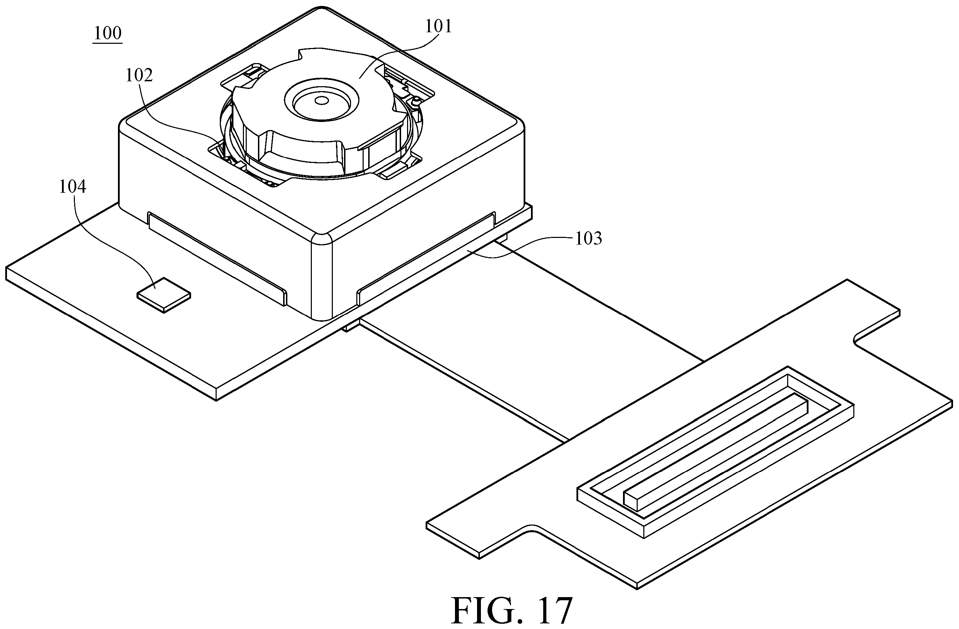

Fig. 17 is a perspective view of an image capturing unit according to the 9th embodiment of the present disclosure. In this embodiment, an image capturing unit 100 is a camera module including a lens unit 101, a driving device 102, an image sensor 103 and an image stabilizer 104. The lens unit 101 includes the optical imaging capturing lens assembly disclosed in the 1st embodiment, a barrel and a holder member (their reference numerals are omitted) for holding the optical imaging capturing lens assembly. However, the lens unit 101 may alternatively be provided with the optical imaging capturing lens assembly disclosed in other embodiments of the present disclosure, and the present disclosure is not limited thereto. The imaging light converges in the lens unit 101 of the image capturing unit 100 to generate an image with the driving device 102 utilized for image focusing on the image sensor 103, and the generated image is then digitally transmitted to other electronic component for further processing.

The driving device 102 can have auto focusing functionality, and different driving configurations can be obtained through the usages of voice coil motors (VCM), micro electro-mechanical systems (MEMS), piezoelectric systems, or shape memory alloy materials. The driving device 102 is favorable for obtaining a better imaging position of the lens unit 101, so that a clear image of the imaged object can be captured by the lens unit 101 with different object distances. The image sensor 103 (for example, CCD or CMOS), which can feature high photosensitivity and low noise, is disposed on the image surface of the optical imaging capturing lens assembly to provide higher image quality.

The image stabilizer 104, such as an accelerometer, a gyro sensor and a Hall Effect sensor, is configured to work with the driving device 102 to provide optical image stabilization (OIS). The driving device 102 working with the image stabilizer 104 is favorable for compensating for pan and tilt of the lens unit 101 to reduce blurring associated with motion during exposure. In some cases, the compensation can be provided by electronic image stabilization (EIS) with image processing software, thereby improving image quality while in motion or low-light conditions.

## 10th Embodiment

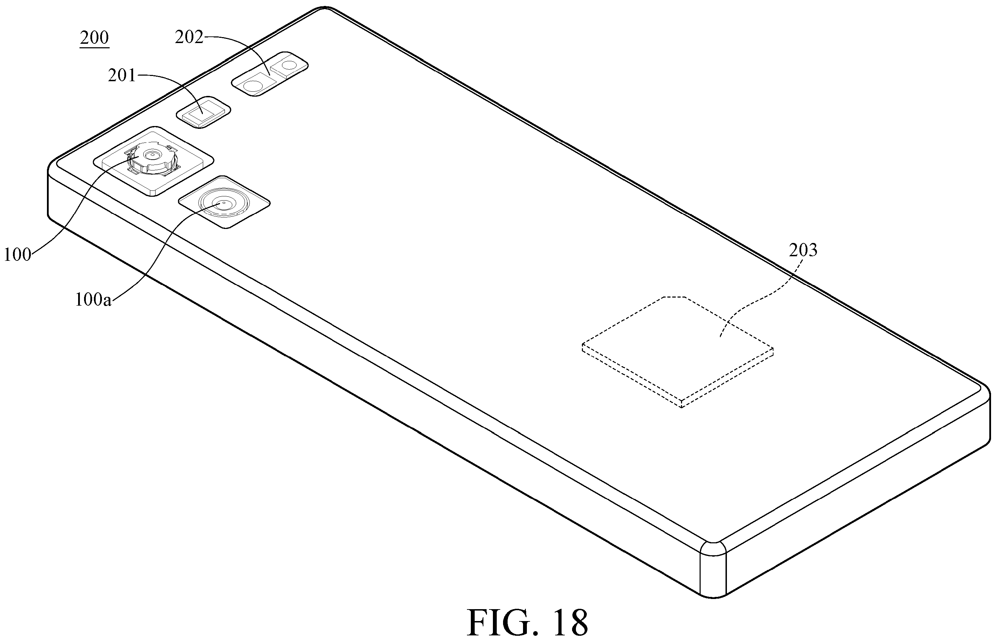

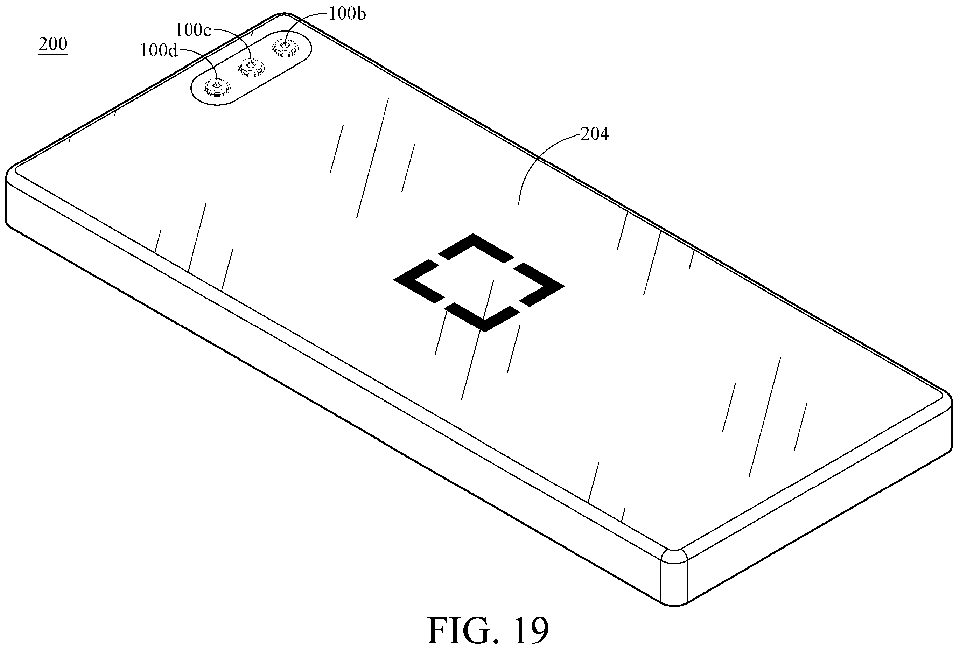

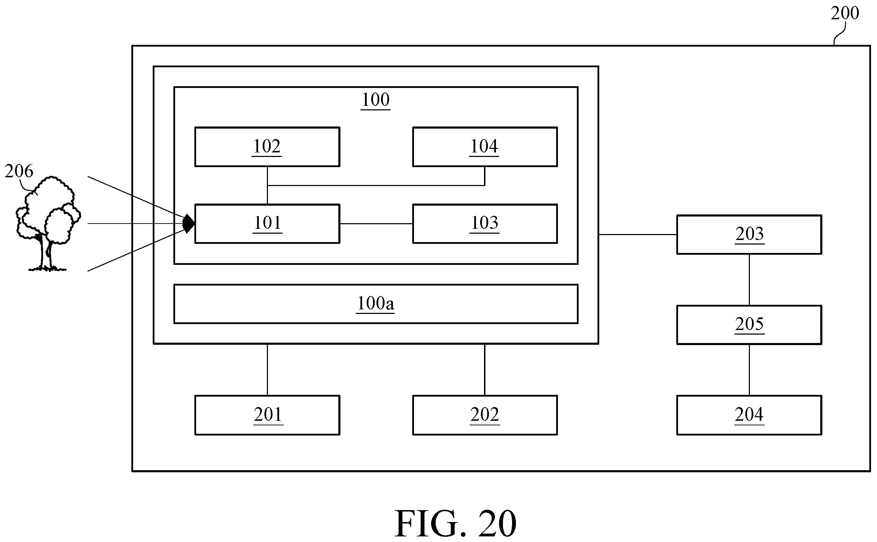

Fig. 18 is one perspective view of an electronic device according to the 10th embodiment of the present disclosure. Fig. 19 is another perspective view of the electronic device in Fig. 18. Fig. 20 is a block diagram of the electronic device in Fig. 18.

In this embodiment, an electronic device 200 is a smartphone including the image capturing unit 100 disclosed in the 9th embodiment, an image capturing unit 100a, an image capturing unit 100b, an image capturing unit 100c, an image capturing unit 100d, a flash module 201, a focus assist module 202, an image signal processor 203, a display module 204 and an image software processor 205. The image capturing unit 100 and the image capturing unit 100a are disposed on the same side of the electronic device 200. The focus assist module 202 can be a laser rangefinder or a ToF (time of flight) module, but the present disclosure is not limited thereto. The image capturing unit 100b, the image capturing unit 100c, the image capturing unit 100d and the display module 204 are disposed on the opposite side of the electronic device 200, and the display module 204 can be a user interface, such that the image capturing units 100b, 100c, 100d can be front-facing cameras of the electronic device 200 for taking selfies, but the present disclosure is not limited thereto. Furthermore, each of the image capturing units 100a, 100b, 100c and 100d can include the optical imaging capturing lens assembly of the present disclosure and can have a configuration similar to that of the image capturing unit 100. In detail, each of the image capturing units 100a, 100b, 100c and 100d can include a lens unit, a driving device, an image sensor and an image stabilizer, and each of the lens unit can include an optical lens assembly such as the optical imaging capturing lens assembly of the present disclosure, a barrel and a holder member for holding the optical lens assembly.

The image capturing unit 100 is a wide-angle image capturing unit, the image capturing unit 100a is an ultra-wide-angle image capturing unit, the image capturing unit 100b is a wide-angle image capturing unit, the image capturing unit 100c is an ultra-wide-angle image capturing unit, and the image capturing unit 100d is a ToF image capturing unit. In this embodiment, the image capturing units 100, 100a, 100b and 100c have different fields of view, such that the electronic device 200 can have various magnification ratios so as to meet the requirement of optical zoom functionality. In addition, the image capturing unit 100d can determine depth information of the imaged object. In this embodiment, the electronic device 200 includes multiple image capturing units 100, 100a, 100b, 100c and 100d, but the present disclosure is not limited to the number and arrangement of image capturing units.

When a user captures images of an object 206, the light rays converge in the image capturing unit 100 or the image capturing unit 100a to generate images, and the flash module 201 is activated for light supplement. The focus assist module 202 detects the object distance of the imaged object 206 to achieve fast auto focusing. The image signal processor 203 is configured to optimize the captured image to improve image quality. The light beam emitted from the focus assist module 202 can be either conventional infrared or laser. In addition, the light rays may converge in the image capturing unit 100b, 100c or 100d to generate images. The display module 204 can include a touch screen, and the user is able to interact with the display module 204 and the image software processor 205 having multiple functions to capture images and complete image processing. Alternatively, the user may capture images via a physical button. The image processed by the image software processor 205 can be displayed on the display module 204.

### 11th Embodiment

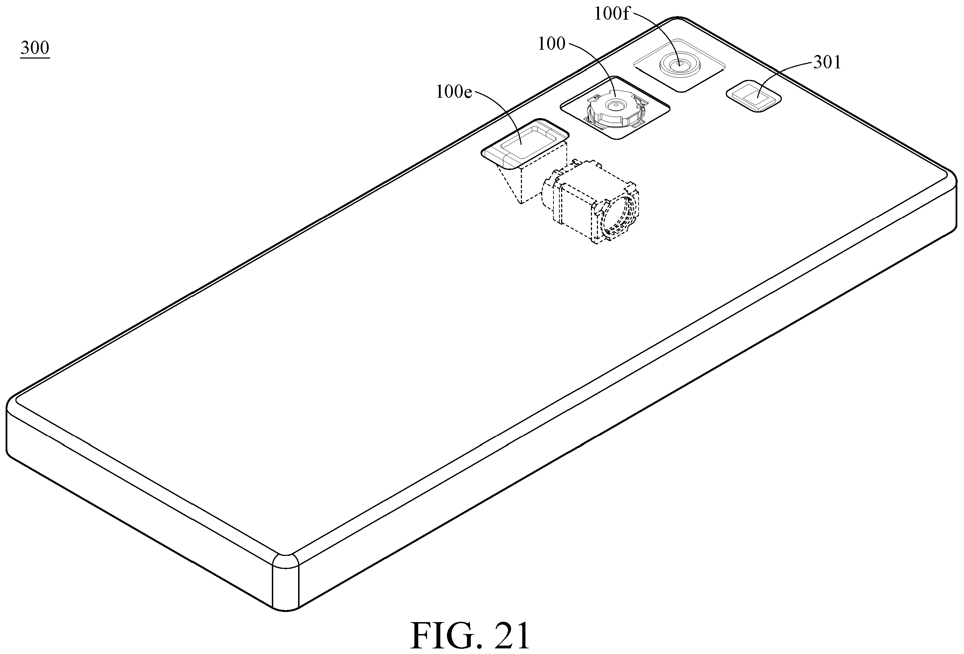

Fig. 21 is one perspective view of an electronic device according to the 11th embodiment of the present disclosure.

In this embodiment, an electronic device 300 is a smartphone including the image capturing unit 100 disclosed in the 9th embodiment, an image capturing unit 100e, an image capturing unit 100f, a flash module 301, a focus assist module, an image signal processor, a display module and an image software processor (not shown). The image capturing unit 100, the image capturing unit 100e and the image capturing unit 100f are disposed on the same side of the electronic device 300, while the display module is disposed on the opposite side of the electronic device 300. Furthermore, each of the image capturing units 100e and 100f can include the optical imaging capturing lens assembly of the present disclosure and can have a configuration similar to that of the image capturing unit 100, and the details in this regard will not be provided again.

The image capturing unit 100 is a wide-angle image capturing unit, the image capturing unit 100e is a telephoto image capturing unit, and the image capturing unit 100f is an ultra-wide-angle image capturing unit. In this embodiment, the image capturing units 100, 100e and 100f have different fields of view, such that the electronic device 300 can have various magnification ratios so as to meet the requirement of optical zoom functionality. Moreover, the image capturing unit 100e can be a telephoto image capturing unit having a light-folding element configuration, such that the total track length of the image capturing unit 100e is not limited by the thickness of the electronic device 300. Moreover, the light-folding element configuration of the image capturing unit 100e can be similar to, for example, one of the structures shown in Fig. 24 to Fig. 26, which can be referred to foregoing descriptions corresponding to Fig. 24 to Fig. 26, and the details in this regard will not be provided again. In this embodiment, the electronic device 30 includes multiple image capturing units 100, 100e and 100f, but the present disclosure is not limited to the number and arrangement of image capturing units. When a user captures images of an object, light rays converge in the image capturing unit 100, 100e or 100f to generate images, and the flash module 301 is activated for light supplement. Further, the subsequent processes are performed in a manner similar to the abovementioned embodiment, so the details in this regard will not be provided again.

### 12th Embodiment

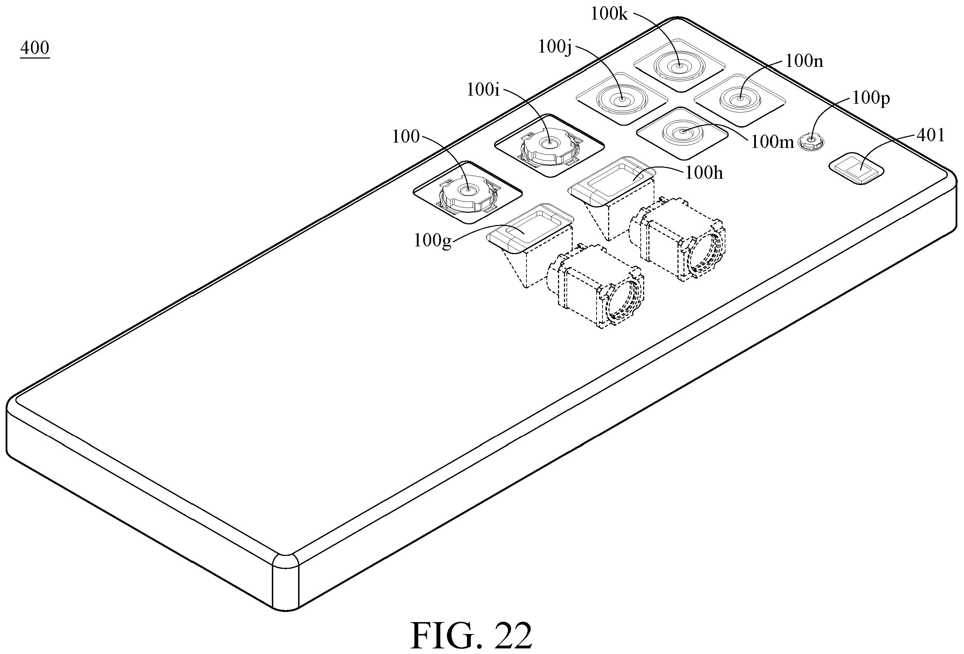

Fig. 22 is one perspective view of an electronic device according to the 12th embodiment of the present disclosure.

In this embodiment, an electronic device 400 is a smartphone including the image capturing unit 100 disclosed in the 9th embodiment, an image capturing unit 100g, an image capturing unit 100h, an image capturing unit 100i, an image capturing unit 100j, an image capturing unit 100k, an image capturing unit 100m, an image capturing unit 100n, an image capturing unit 100p, a flash module 401, a focus assist module, an image signal processor, a display module and an image software processor (not shown). The image capturing units 100, 100g, 100h, 100i, 100j, 100k, 100m, 100n and 100p are disposed on the same side of the electronic device 400, while the display module is disposed on the opposite side of the electronic device 400. Furthermore, each of the image capturing units 100g, 100h, 100i, 100j, 100k, 100m, 100n and 100p can include the optical imaging capturing lens assembly of the present disclosure and can have a configuration similar to that of the image capturing unit 100, and the details in this regard will not be provided again.

The image capturing unit 100 is a wide-angle image capturing unit, the image capturing unit 100g is a telephoto image capturing unit, the image capturing unit 100h is a telephoto image capturing unit, the image capturing unit 100i is a wide-angle image capturing unit, the image capturing unit 100j is an ultra-wide-angle image capturing unit, the image capturing unit 100k is an ultra-wide-angle image capturing unit, the image capturing unit 100m is a telephoto image capturing unit, the image capturing unit 100n is a telephoto image capturing unit, and the image capturing unit 100p is a ToF image capturing unit. In this embodiment, the image capturing units 100, 100g, 100h, 100i, 100j, 100k, 100m and 100n have different fields of view, such that the electronic device 400 can have various magnification ratios so as to meet the requirement of optical zoom functionality. Moreover, each of the image capturing units 100g and 100h can be a telephoto image capturing unit having a light-folding element configuration. Moreover, the light-folding element configuration of each of the image capturing unit 100g and 100h can be similar to, for example, one of the structures shown in Fig. 24 to Fig. 26, which can be referred to foregoing descriptions corresponding to Fig. 24 to Fig. 26, and the details in this regard will not be provided again. In addition, the image capturing unit 100p can determine depth information of the imaged object. In this embodiment, the electronic device 400 includes multiple image capturing units 100, 100g, 100h, 100i, 100j, 100k, 100m, 100n and 100p, but the present disclosure is not limited to the number and arrangement of image capturing units. When a user captures images of an object, the light rays converge in the image capturing unit 100, 100g, 100h, 100i, 100j, 100k, 100m, 100n or 100p to generate images, and the flash module 401 is activated for light supplement. Further, the subsequent processes are performed in a manner similar to the abovementioned embodiments, and the details in this regard will not be provided again.

The smartphone in this embodiment is only exemplary for showing the image capturing unit of the present disclosure installed in an electronic device, and the present disclosure is not limited thereto. The image capturing unit can be optionally applied to optical systems with a movable focus. Furthermore, the optical imaging capturing lens assembly of the image capturing unit features good capability in aberration corrections and high image quality, and can be applied to 3D (three-dimensional) image capturing applications, in products such as digital cameras, mobile devices, digital tablets, smart televisions, network surveillance devices, dashboard cameras, vehicle backup cameras, multi-camera devices, image recognition systems, motion sensing input devices, wearable devices and other electronic imaging devices.

The foregoing description, for the purpose of explanation, has been described with reference to specific embodiments. It is to be noted that TABLES 1-16 show different data of the different embodiments, however, the data of the different embodiments are obtained from experiments. The embodiments were chosen and described in order to best explain the principles of the disclosure and its practical applications, to thereby enable others skilled in the art to best utilize the disclosure and various embodiments with various modifications as are suited to the particular use contemplated. The embodiments depicted above and the appended drawings are exemplary and are not intended to be exhaustive or to limit the scope of the present disclosure to the precise forms disclosed. Many modifications and variations are possible in view of the above teachings.

Claims

1.  An optical image capturing lens assembly comprising eight lens elements (E1-E8), the eight lens elements (E1-E8) being, in order from an object side to an image side along an optical path, a first lens element (E1), a second lens element (E2), a third lens element (E3), a fourth lens element (E4), a fifth lens element (E5), a sixth lens element (E6), a seventh lens element (E7) and an eighth lens element (E8), and each of the eight lens elements (E1-E8) having an object-side surface facing toward the object side and an image-side surface facing toward the image side;

    wherein a total number of lens elements (E1-E8) of the optical image capturing lens assembly is eight, the first lens element (E1) has negative refractive power in a paraxial region thereof, the image-side surface of the fisrt lens element (E1) is concave in a paraxial region thereof, the second lens element (E2) has positive refractive power in a paraxial region thereof, the object-side surface of the second lens element (E2) is convex in a paraxial region thereof, the sixth lens element (E6) has negative refractive power in a paraxial region thereof, the seventh lens element (E7) has positive refractive power in a paraxial region thereof, the eighth lens element (E8) has negative refractive power in a paraxial region thereof, the object-side surface of the eighth lens element (E8) is convex in a paraxial region thereof, the image-side surface of the eighth lens element (E8) is concave in a paraxial region thereof, and each of the object-side surfaces and the image-side surfaces of the seventh lens element (E7) and the eighth lens element (E8) has at least one inflection point in an off-axis region thereof;

    wherein an Abbe number of the second lens element (E2) is V2, an Abbe number of the sixth lens element (E6) is V6, an Abbe number of the eighth lens element (E8) is V8, a curvature radius of the image-side surface of the sixth lens element (E6) is R12, a focal length of the optical image capturing lens assembly is f, a focal length of the third lens element (E3) is f3, a focal length of the fourth lens element (E4) is f4, a central thickness of the second lens element (E2) is CT2, an axial distance between the third lens element (E3) and the fourth lens element (E4) is T34, and the following conditions are satisfied:

$$30.0 < V2+V6+V8 < 85.0;$$

$$0 < |R12/f| < 3.0;$$

$$|f/f3| < 1.0;$$

$$|f/f4| < 1.0;$$

and

$$2.7 < CT2/T34 < 50.$$

2. The optical image capturing lens assembly of claim 1, wherein the Abbe number of the second lens element (E2) is V2, the Abbe number of the sixth lens element (E6) is V6, the Abbe number of the eighth lens element (E8) is V8, the curvature radius of the image-side surface of the sixth lens element (E6) is R12, the focal length of the optical image capturing lens assembly is f, and the following conditions are satisfied:

$$40.0 < V2+V6+V8 < 80.0;$$

and

$$0.50 < |R12/f| < 2.0.$$

3. The optical image capturing lens assembly of claim 1, wherein the central thickness of the second lens element (E2) is CT2, the axial distance between the third lens element (E3) and the fourth lens element (E4) is T34, and the following condition is satisfied:

$$3.0 < CT2/T34 < 35.$$

4. The optical image capturing lens assembly of claim 1, wherein a central thickness of the first lens element (E1) is CT1, a central thickness of the third lens element (E3) is CT3, a central thickness of the sixth lens element (E6) is CT6, a central thickness of the eighth lens element (E8) is CT8, and the following conditions are satisfied:

$$0.55 < CT1/CT3 < 1.8;$$

and

$$0 < CT8/CT6 < 2.0.$$

5. The optical image capturing lens assembly of claim 1, wherein a curvature radius of the object-side surface of the sixth lens element (E6) is R11, the focal length of the optical image capturing lens assembly is f, and the following condition is satisfied:

$$-0.90 < R11/f < 4.3.$$

6. The optical image capturing lens assembly of claim 1, wherein the curvature radius of the image-side surface of the sixth lens element (E6) is R12, a curvature radius of the object-side surface of the seventh lens element (E7) is R13, and the following condition is satisfied:

$$-3.0 < R12/R13 < 0.$$

7. The optical image capturing lens assembly of claim 1, wherein a sum of axial distances between each of all adjacent lens elements (E1-E8) of the optical image capturing lens assembly is $\Sigma AT$, a sum of central thicknesses of all lens elements (E1-E8) of the optical image capturing lens assembly is $\Sigma CT$, a maximum effective radius of the object-side surface of the first lens element (E1) is Y11, a maximum effective radius of the image-side surface of the eighth lens element (E8) is Y82, and the following conditions are satisfied:

$$0.20 < \Sigma AT/\Sigma CT < 0.90;$$

and

$$0.60 < Y11/Y82 < 1.6;$$

wherein a vertical distance between a critical point on the image-side surface of the eighth lens element (E8) and an optical axis is Yc82, the maximum effective radius of the image-side surface of the eighth lens element (E8) is Y82, and at least one critical point on the image-side surface of the eighth lens element (E8) in an off-axis region satisfies the following condition:

$$0.30 < Yc82/Y82 < 0.90.$$

8. The optical image capturing lens assembly of claim 1,
   wherein the focal length of the optical image capturing lens assembly is f, a focal length of the first lens element (E1) is f1, a focal length of the second lens element (E2) is f2, a focal length of the fifth lens element (E5) is f5, a focal length of the sixth lens element (E6) is f6, a focal length of the seventh lens element (E7) is f7, a focal length of the eighth lens element (E8) is f8, and the following conditions are satisfied:

$$-0.90 < f/f1 < -0.50;$$

$$0.10 < f/f2 < 0.50;$$

$$|f/f5| < 0.65;$$

$$-1.0 < f/f6 < -0.10;$$

$$0.50 < f/f7 < 1.2;$$

and

$$-1.0 < f/f8 < -0.10.$$

**Patentansprüche**

1. Optische Bilderfassungslinsenanordnung, die acht Linsenelemente (E1-E8) aufweist, wobei die acht Linsenelemente (E1-E8) in der Reihenfolge von einer Objektseite zu einer Bildseite entlang eines Strahlengangs ein erstes Linsenelement (E1), ein zweites Linsenelement (E2), ein drittes Linsenelement (E3), ein viertes Linsenelement (E4), ein fünftes Linsenelement (E5), ein sechstes Linsenelement (E6), ein siebtes Linsenelement (E7), und ein achtes Linsenelement (E8) aufweist, und wobei jedes der acht Linsenelemente (E1-E8) eine objektseitige Fläche aufweist, die der Objektseite zugewandt ist, und eine bildseitige Fläche aufweist, die der Bildseite zugewandt ist;

   wobei eine Gesamtzahl von Linsenelementen (E1-E8) der optischen Bilderfassungslinsenanordnung acht ist, das erste Linsenelement (E1) in einem paraxialen Bereich desselben eine negative Brechkraft hat, die bildseitige Fläche des ersten Linsenelements (E1) in einem paraxialen Bereich desselben konkav ist, das zweite Linsenelement (E2) in einem paraxialen Bereich desselben eine positive Brechkraft hat, die objektseitige Fläche des zweiten Linsenelements (E2) in einem paraxialen Bereich desselben konvex ist, das sechste Linsenelement (E6) in einem paraxialen Bereich desselben eine negative Brechkraft hat, das siebte Linsenelement (E7) in einem paraxialen Bereich desselben eine positive Brechkraft hat, das achte Linsenelement (E8) in einem paraxialen Bereich desselben eine negative Brechkraft hat, die objektseitige Fläche des achten Linsenelements (E8) in einem paraxialen Bereich desselben konvex ist, die bildseitige Fläche des achten Linsenelements (E8) in einem paraxialen Bereich desselben konkav ist, und jede der objektseitigen Flächen und der bildseitigen Flächen des siebten Linsenelements (E7) und des achten Linsenelements (E8) mindestens einen Wendepunkt in einem außeraxialen Bereich derselben aufweist;

wobei eine Abbe-Zahl des zweiten Linsenelements (E2) V2 ist, eine Abbe-Zahl des sechsten Linsenelements (E6) V6 ist, eine Abbe-Zahl des achten Linsenelements (E8) V8 ist, ein Krümmungsradius der bildseitigen Fläche des sechsten Linsenelements (E6) R12 ist, eine Brennweite der optischen Bilderfassungslinsenanordnung f ist, eine Brennweite des dritten Linsenelements (E3) f3 ist, eine Brennweite des vierten Linsenelements (E4) f4 ist, eine zentrale Dicke des zweiten Linsenelements (E2) CT2 ist, ein axialer Abstand zwischen dem dritten Linsenelement (E3) und dem vierten Linsenelement (E4) T34 ist, und die folgenden Bedingungen erfüllt sind:

$$30{,}0 < V2+V6+V8 < 85{,}0;$$

$$0 < |R12/f| < 3{,}0;$$

$$|f/f3| < 1{,}0;$$

$$|f/f4| < 1{,}0;$$

und

$$2{,}7 < CT2/T34 < 50.$$

2. Optische Bilderfassungslinsenanordnung nach Anspruch 1, bei welcher die Abbe-Zahl des zweiten Linsenelements (E2) V2 ist, die Abbe-Zahl des sechsten Linsenelements (E6) V6 ist, die Abbe-Zahl des achten Linsenelements (E8) V8 ist, der Krümmungsradius der bildseitigen Fläche des sechsten Linsenelements (E6) R12 ist, die Brennweite der optischen Bilderfassungslinsenanordnung f ist, und die folgenden Bedingungen erfüllt sind:

$$40{,}0 < V2+V6+V8 < 80{,}0; \text{ und}$$

$$0{,}50 < |R12/f| < 2{,}0.$$

3. Optische Bilderfassungslinsenanordnung nach Anspruch 1, bei welcher die Mittendicke des zweiten Linsenelements (E2) CT2 ist, der axiale Abstand zwischen dem dritten Linsenelement (E3) und dem vierten Linsenelement (E4) T34 ist, und die folgende Bedingung erfüll ist:

$$3{,}0 < CT2/T34 < 35.$$

4. Optische Bilderfassungslinsenanordnung nach Anspruch 1, wobei eine zentrale Dicke des ersten Linsenelements (E1) CT1 ist, eine zentrale Dicke des dritten Linsenelements (E3) CT3 ist, eine zentrale Dicke des sechsten Linsenelements (E6) CT6 ist, eine zentrale Dicke des achten Linsenelements (E8) CT8 ist, und die folgenden Bedingung erfüllt sind:

$$0{,}55 < CT1/CT2 < 1{,}8;$$

und

$$0 < CT8/CT6 < 2{,}0.$$

5. Optische Bilderfassungslinsenanordnung nach Anspruch 1, bei welcher ein Krümmungsradius der objektseitigen Fläche des sechsten Linsenelements (E6) R11 ist, die Brennweite der optischen Bilderfassungslinsenanordnung f ist und die folgende Bedingung erfüllt ist:

$$-0{,}90 < R11/f < 4{,}3.$$

6. Optische Bilderfassungslinsenanordnung nach Anspruch 1, bei welcher der Krümmungsradius der bildseitigen Fläche des sechsten Linsenelements (E6) R12 ist, ein Krümmungsradius der objektseitigen Fläche des siebten Linsenelements (E7) R13 ist, und die folgende Bedingung erfüllt ist:

$$-3{,}0 < R12/R13 < 0.$$

7. Optische Bilderfassungslinsenanordnung nach Anspruch 1, bei welchem die Summe der axialen Abstände zwischen allen benachbarten Linsenelementen (E1-E8) der optischen Bilderfassungslinsenanordnung $\Sigma$AT beträgt, die Summe der mittleren Dicken aller Linsenelemente (E1-E8) der optischen Bilderfassungslinsenanordnung $\Sigma$CT beträgt, ein maximaler effektiver Radius der objektseitigen Fläche des ersten Linsenelements (E1) Y11 ist, ein maximaler effektiver Radius der bildseitigen Fläche des achten Linsenelements (E8) Y82 ist, und die folgenden Bedingungen erfüllt sind:

$$0{,}20 < \Sigma AT/\Sigma CT < 0{,}90;$$

und

$$0{,}60 < Y11/Y82 < 1{,}6.$$

wobei ein vertikaler Abstand zwischen einem kritischen Punkt auf der bildseitigen Fläche des achten Linsenelements (E8) und einer optischen Achse Yc82 ist, der maximale effektive Radius der bildseitigen Fläche des achten Linsenelements (E8) Y82 ist, und mindestens ein kritischer Punkt auf der bildseitigen Fläche des achten Linsenelements (E8) in einem gegenüber der Achse versetzten Bereich die folgende Bedingung erfüllt:

$$0{,}30 < Yc82/Y82 < 0{,}90.$$

8. Optische Bilderfassungslinsenanordnung nach Anspruch 1,
   bei welcher die Brennweite der optischen Bilderfassungslinsenanordnung f ist, eine Brennweite des ersten Linsenelements (E1) f1 ist, eine Brennweite des zweiten Linsenelements (E2) f2 ist, eine Brennweite des fünften Linsenelements (E5) f5 ist, eine Brennweite des sechsten Linsenelements (E6) f6 ist, eine Brennweite des siebten Linsenelements (E7) f7 ist, eine Brennweite des achten Linsenelements (E8) f8 ist, und die folgenden Bedingungen erfüllt sind:

$$-0{,}90 < f/f1 < -0{,}50;$$

$$0{,}10 < f/f2 < 0{,}50;$$

$$|f/f5| < 0{,}65;$$

$$-1{,}0 < f/f6 < -0{,}10;$$

$$0{,}50 < f/f7 < 1{,}2;$$

und

$$-1{,}0 < f/f8 < -0{,}10.$$

**Revendications**

1. Ensemble lentille de capture d'image optique comprenant huit éléments de lentille (E1 à E8), les huit éléments de lentille (E1 à E8) étant, dans l'ordre d'un côté objet à un côté image le long d'un chemin optique, un premier élément de lentille (E1), un deuxième élément de lentille (E2), un troisième élément de lentille (E3), un quatrième élément de lentille (E4), un cinquième élément de lentille (E5), un sixième élément de lentille (E6), un septième élément de lentille (E7) et un huitième élément de lentille (E8), et chacun des huit éléments de lentille (E1 à E8) ayant une surface côté objet orientée vers le côté objet et une surface côté image orientée vers le côté image ;

   un nombre total d'éléments de lentille (E1 à E8) de l'ensemble lentille de capture d'image optique étant huit, le premier élément de lentille (E1) ayant un pouvoir de réfraction négatif dans une zone paraxiale de celui-ci, la surface côté image du premier élément de lentille (E1) étant concave dans une zone paraxiale de celle-ci, le deuxième élément de lentille (E2) ayant un pouvoir de réfraction positif dans une zone paraxiale de celui-ci, la surface côté objet du deuxième élément de lentille (E2) étant convexe dans une zone paraxiale de celle-ci, le sixième élément de lentille (E6) ayant un pouvoir de réfraction négatif dans une zone paraxiale de celui-ci, le septième élément de lentille (E7) ayant un pouvoir de réfraction positif dans une zone paraxiale de celui-ci, le huitième élément de lentille (E8) ayant un pouvoir de réfraction négatif dans une zone paraxiale de celui-ci, la surface côté objet du huitième élément de lentille (E8) étant convexe dans une zone paraxiale de celle-ci, la surface côté image du huitième élément de lentille (E8) étant concave dans une zone paraxiale de celle-ci et chacune des surfaces côté objet et des surfaces côté image du septième élément de lentille (E7) et du huitième élément de lentille (E8) ayant au moins un point d'inflexion dans une zone hors axe de ceux-ci ;
   un nombre d'Abbe du deuxième élément de lentille (E2) étant V2, un nombre d'Abbe du sixième élément de lentille (E6) étant V6, un nombre d'Abbe du huitième élément de lentille (E8) étant V8, un rayon de courbure de la surface côté image du sixième élément de lentille (E6) étant R12, une longueur focale de l'ensemble lentille de capture d'image optique étant f, une longueur focale du troisième élément de lentille (E3) étant f3, une longueur focale du quatrième élément de lentille (E4) étant f4, une épaisseur centrale du deuxième élément de lentille (E2) étant CT2, une distance axiale entre le troisième élément de lentille (E3) et le quatrième élément de lentille (E4) étant T34, et les conditions suivantes sont remplies :

$$30,0 < V2 + V6 + V8 < 85,0 ;$$

$$0 < |R12/f| < 3,0 ;$$

$$|f/f3| < 1,0 ;$$

$$|f/f4| < 1,0 ;$$

et

$$2,7 < CT2/T34 < 50.$$

2. Ensemble lentille de capture d'image optique selon la revendication 1, le nombre d'Abbe du deuxième élément de lentille (E2) étant V2, le nombre d'Abbe du sixième élément de lentille (E6) étant V6, le nombre d'Abbe du huitième élément de lentille (E8) étant V8, le rayon de courbure de la surface côté image du sixième élément de lentille (E6) étant R12, la longueur focale de l'ensemble lentille de capture d'image optique étant f, et les conditions suivantes étant remplies :

$$40,0 < V2 + V6 + V8 < 80,0 ;$$

et

$$0,50 < |R12/f| < 2,0.$$

3. Ensemble lentille de capture d'image optique selon la revendication 1, l'épaisseur centrale du deuxième élément de lentille (E2) étant CT2, la distance axiale entre le troisième élément de lentille (E3) et le quatrième élément de lentille (E4) étant T34, et les conditions suivantes étant remplies :

$$3,0 < CT2/T34 < 35.$$

4. Ensemble lentille de capture d'image optique selon la revendication 1, une épaisseur centrale du premier élément de lentille (E1) étant CT1, une épaisseur centrale du troisième élément de lentille (E3) étant CT3, une épaisseur centrale du sixième élément de travail (E6) étant CT6, une épaisseur centrale du huitième élément de lentille (E8) étant CT8, et les conditions suivantes étant remplies :

$$0,55 < CT1/CT3 < 1,8 \ ;$$

et

$$0 < CT8/CT6 < 2,0.$$

5. Ensemble lentille de capture d'image optique selon la revendication 1, un rayon de courbure de la surface côté objet du sixième élément de lentille (E6) étant R11, la longueur focale de l'ensemble lentille de capture d'image optique étant f, et les conditions suivantes étant remplies :

$$-0,90 < R11/f < 4,3.$$

6. Ensemble lentille de capture d'image optique selon la revendication 1, le rayon de courbure de la surface côté image du sixième élément de lentille (E6) étant R12, un rayon de courbure de la surface côté objet du septième élément de lentille (E7) étant R13, et les conditions suivantes étant remplies :

$$-3,0 < R12/R13 < 0.$$

7. Ensemble lentille de capture d'image optique selon la revendication 1, une somme de distances axiales entre tous les éléments de lentille adjacents (E1 à E8) de l'ensemble lentille de capture d'image optique étant ΣAT, une somme d'épaisseurs centrales de tous les éléments de lentille (E1 à E8) étant ΣCT, un rayon effectif maximal de la surface côté image du huitième élément de lentille (E8) étant Y82, et les conditions suivantes étant remplies :

$$0,20 < \Sigma AT / \Sigma CT < 0,90 \ ;$$

et

$$0,60 < Y11/Y82 < 1,6 \ ;$$

une distance verticale entre un point critique sur la surface côté image du huitième élément de lentille (E8) et un axe optique étant Yc82, le rayon effectif maximal de la surface côté image du huitième élément de lentille (E8) étant Y82, et au moins un point critique sur la surface côté image du huitième élément de lentille (E8) dans une zone hors axe remplie la condition suivante :

$$0,30 < Yc82/Y82 < 0,90.$$

8. Ensemble lentille de capture d'image optique selon la revendication 1, la longueur focale de l'ensemble lentille de capture d'image optique étant f, une longueur focale du premier élément de lentille (E1) étant f1, une longueur focale du deuxième élément de lentille (E2) étant f2, une longueur focale du cinquième élément de lentille (E5) étant f5, une longueur focale du sixième élément de lentille (E6) étant f6, une longueur focale du septième élément de lentille (E7) étant f7, une longueur focale du huitième élément de lentille (E8) étant f8, et les condition suivantes étant remplies :

$$-0,90 < f/f1 < -0,50 \ ;$$

$$0,10 \quad f/f2 < 0,50 \ ;$$

$$|f/f5| < 0,65 \ ;$$

$$-1,0 < f/f6 < -0,10 \ ;$$

$$0,50 < f/f7 < 1,2 \ ;$$

et

$$-1,0 < f/f8 < -0,10.$$

FIG. 1

EP 4 105 701 B1

FIG. 2

FIG. 3

EP 4 105 701 B1

FIG. 4

EP 4 105 701 B1

EP 4 105 701 B1

**FIG. 5**

LONGITUDINAL SPHERICAL ABER.

656.3000 NM
587.6000 NM
486.1000 NM

1.00
0.75
0.50
0.25

-0.100 -0.050 0.0 0.050 0.100
FOCUS (MILLIMETERS)

ASTIGMATIC FIELD CURVES
IMG HT

T
S

3.24
2.43
1.62
0.81

-0.200 -0.100 0.0 0.100 0.200
FOCUS (MILLIMETERS)

DISTORTION
IMG HT

3.24
2.43
1.62
0.81

-10.0 -5.0 0.0 5.0 10.0
% DISTORTION

FIG. 6

EP 4 105 701 B1

FIG. 7

| 656.3000 NM |
| 587.6000 NM |
| 486.1000 NM |

| T |
| S |

LONGITUDINAL
SPHERICAL ABER.

ASTIGMATIC
FIELD CURVES
IMG HT

DISTORTION
IMG HT

1.00

0.75

0.50

0.25

-0.100 -0.050 0.00 0.050 0.100

FOCUS (MILLIMETERS)

3.00

2.25

1.50

0.75

-0.200 -0.100 0.0 0.100 0.200

FOCUS (MILLIMETERS)

3.00

2.25

1.50

0.75

-10.0 -5.0 0.0 5.0 10.0

% DISTORTION

FIG. 8

EP 4 105 701 B1

FIG. 9

FIG. 10

FIG. 11

LONGITUDINAL
SPHERICAL ABER.

ASTIGMATIC
FIELD CURVES
IMG HT

DISTORTION
IMG HT

— - — - — 656.3000 NM
———— 587.6000 NM
- - - - - - - - 486.1000 NM

— - — - — T
———— S

FOCUS (MILLIMETERS)

FOCUS (MILLIMETERS)

% DISTORTION

FIG. 12

FIG. 13

EP 4 105 701 B1

656.3000 NM
587.6000 NM
486.1000 NM

T
S

LONGITUDINAL
SPHERICAL ABER.

ASTIGMATIC
FIELD CURVES
IMG HT

DISTORTION
IMG HT

1.00

0.75

0.50

0.25

3.55

2.66

1.78

0.89

3.55

2.66

1.78

0.89

-0.100 -0.050 0.0 0.050 0.100

FOCUS (MILLIMETERS)

-0.200 -0.100 0.0 0.100 0.200

FOCUS (MILLIMETERS)

-20.0 -10.0 0.0 10.0 20.0

% DISTORTION

FIG. 14

FIG. 15

EP 4 105 701 B1

LONGITUDINAL
SPHERICAL ABER.

656.3000 NM
587.6000 NM
486.1000 NM

1.00

0.75

0.50

0.25

-0.100 -0.050  0.0  0.050  0.100

FOCUS (MILLIMETERS)

ASTIGMATIC
FIELD CURVES
IMG HT

T
S

2.52

1.89

1.26

0.63

-0.200 -0.100  0.0  0.100  0.200

FOCUS (MILLIMETERS)

DISTORTION
IMG HT

2.52

1.89

1.26

0.63

-10.0 -5.0  0.0  5.0  10.0

% DISTORTION

# FIG. 16

FIG. 17

FIG. 18

EP 4 105 701 B1

FIG. 19

FIG. 20

EP 4 105 701 B1

EP 4 105 701 B1

FIG. 21

FIG. 22

EP 4 105 701 B1

FIG. 23

EP 4 105 701 B1

FIG. 24

FIG. 25

FIG. 26

**REFERENCES CITED IN THE DESCRIPTION**

**Patent documents cited in the description**

- US 20190271831 A1